(19) Europäisches Patentamt
European Patent Office
Office européen des brevets

(11) **EP 3 174 239 B1**

(12) **EUROPÄISCHE PATENTSCHRIFT**

(45) Veröffentlichungstag und Bekanntmachung des Hinweises auf die Patenterteilung:
**22.08.2018 Patentblatt 2018/34**

(51) Int Cl.:
*H04L 9/06* (2006.01)     *H04L 9/08* (2006.01)
*G06F 7/58* (2006.01)

(21) Anmeldenummer: **16202664.5**

(22) Anmeldetag: **30.03.2015**

(54) **VERSCHLÜSSELUNGSVERFAHREN UND PSEUDO-ZUFALLSZAHLENGENERATOR**

ENCRYPTION METHOD AND PSEUDO-RANDOM NUMBER GENERATOR

PROCÉDÉ DE CODAGE ET GÉNÉRATEUR DE NOMBRES PSEUDO-ALÉATOIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.03.2014 AT 502362014**

(43) Veröffentlichungstag der Anmeldung:
**31.05.2017 Patentblatt 2017/22**

(62) Dokumentnummer(n) der früheren Anmeldung(en) nach Art. 76 EPÜ:
**15727535.5 / 3 127 272**

(73) Patentinhaber:
• **Hödl, Iris-Anna**
**1200 Wien (AT)**
• **Hödl, Maximilian**
**2020 Hollabrunn (AT)**

(72) Erfinder: **Hödl, Josef**
**2500 Baden (AT)**

(74) Vertreter: **Wildhack & Jellinek**
**Patentanwälte**
**Landstraßer Hauptstraße 50**
**1030 Wien (AT)**

(56) Entgegenhaltungen:
**US-A1- 2006 039 558    US-A1- 2008 112 560**
**US-A1- 2010 054 461    US-B1- 6 259 789**

EP 3 174 239 B1

**Beschreibung**

Die Erfindung betrifft ein symmetrisches Verschlüsselungsverfahren gemäß dem Patentanspruch 1 sowie ein dazugehöriges Entschlüsselungsverfahren gemäß dem Patentanspruch 7. Weiters betrifft die Erfindung eine Verschlüsselungsmaschine gemäß dem Patentanspruch 13 sowie eine dazugehörige Entschlüsselungsmaschine gemäß dem Patentanspruch 14. Schließlich betrifft die Erfindung einen Datenträger mit einem Verschlüsselungs- oder Entschlüsselungsprogramm sowie einen Datenträger mit einer verschlüsselten Datenfolge gemäß Anspruch 15.

Aus dem Stand der Technik ist eine Vielzahl unterschiedlicher symmetrischer Verfahren zur Verschlüsselung von Rohdatenfolgen bekannt. Aus US 6,259,789 ist eine block-cipher Algorithmus bekannt, wobei für jeden Block, in Abhängigkeit von einem periodisch erneuerten Schlüssel und einem zufälligen Sitzungsschlüssel, der Rundenschlüssel erneuert wird. Aus US 2006/039558 ist ein Zufallszahlengenerator bekannt, welcher Shift-Register verwendet und welcher mit einem benutzerdefinierten geheimen Schlüssel initialisiert ist. Aufgabe der Erfindung ist es, ein Verschlüsselungs- und Entschlüsselungsverfahren zur Verfügung zu stellen, das gegenüber den bekannten Verfahren eine verbesserte Sicherheit aufweist und eine effiziente und ressourcensparende Verwirklichung ermöglicht. Schließlich sollen eine Verschlüsselungsmaschine und eine Entschlüsselungsmaschine mit den genannten Vorteilen bereitgestellt werden.

Die Erfindung löst diese Aufgabe bei einem Verschlüsselungsverfahren der eingangs genannten Art mit den Merkmalen des Patentanspruchs 1. Die Erfindung löst diese Aufgaben bei einem Entschlüsselungsverfahren der eingangs genannten Art mit den Merkmalen des Patentanspruchs 7. Die Erfindung löst diese Aufgabe bei einer Verschlüsselungsmaschine der eingangs genannten Art mit den Merkmalen des Patentanspruchs 13. Die Erfindung löst diese Aufgaben bei einer Entschlüsselungsmaschine der eingangs genannten Art mit den Merkmalen des Patentanspruchs 14.

Zur sicheren Verschlüsselung von Rohdaten ist vorgesehen, dass der innere Zustand der Transformationseinheit sowie der innere Zustand des Zufallszahlengenerators nach einer Anzahl von Verschlüsselungen von Bytes, insbesondere nach der Verschlüsselung jedes Bytes, abhängig vom jeweils zu verschlüsselnden Rohdaten-Byte und/oder vom jeweiligen Endergebnis der Verschlüsselung geändert und aktualisiert wird und dieser neue innere Zustand der jeweils nächsten Verschlüsselung zugrunde gelegt wird, wobei insbesondere der Zufallszahlengenerator Zufallszahlen erstellt, die für die Auswahl der Transformationsvorschriften verwendet werden, und/oder der Zufallszahlengenerator Zufallszahlen erstellt, die für die Aktualisierung der inneren Zustände des Zufallszahlengenerators und der Transformationseinheit herangezogen werden.

Mit dem vorliegenden Verfahren ist es möglich, sehr lange Passwörter, z.B. mit ca. 100 000 Bytes, zu verwenden, wobei die Änderung jedes Bytes den inneren Zustand und damit die Verschlüsselung maßgeblich beeinflusst.

Zur sicheren Entschlüsselung von Rohdaten ist vorgesehen,

- dass der innere Zustand der Transformationseinheit sowie der innere Zustand des Zufallszahlengenerators nach einer Anzahl von Entschlüsselungen von Bytes, insbesondere nach der Entschlüsselung jedes Bytes, abhängig vom jeweils verschlüsselten Byte und/oder vom jeweiligen entschlüsselten Byte geändert und aktualisiert wird und dieser neue innere Zustand der jeweils nächsten Entschlüsselung zugrunde gelegt wird, wobei insbesondere
- der Zufallszahlengenerator Zufallszahlen erstellt, die für die Auswahl der inversen Transformationsvorschriften verwendet werden, und/oder der Zufallszahlengenerator Zufallszahlen erstellt, die für die Aktualisierung der inneren Zustände des Zufallszahlengenerators und der Transformationseinheit herangezogen werden.

Eine besonders einfache und sichere Verschlüsselung, bei der jedes Byte der verschlüsselten Datenfolge von jedem Byte der Rohdaten im jeweiligen Block abhängt, sieht vor, dass

a) die Transformationseinheit und der Zufallszahlengenerator in einen Initialzustand gesetzt werden,
b) die einzelnen sequentiell vorliegenden Bytes der Rohdaten innerhalb desselben Blocks hintereinander in der vorgegebenen Reihenfolge vom ersten bis zum letzten Byte von der Transformationseinheit verschlüsselt werden,
c) nachdem alle Bytes des Blocks verschlüsselt wurden, die Transformationseinheit sowie der Zufallszahlengenerator erneut in den Initialzustand gesetzt werden, und
d) die einzelnen sequentiell vorliegenden Bytes der im jeweiligen Block vorliegenden Daten innerhalb desselben Blocks entgegen der vorgegebenen Reihenfolge vom letzten bis zum ersten Byte von der Transformationseinheit verschlüsselt werden.

Eine Entschlüsselung sieht entsprechend vor, dass

a) die Transformationseinheit sowie der Zufallszahlengenerator in einen Initialzustand abhängig vom jeweiligen Passwort gesetzt wird.
b) die einzelnen sequentiell vorliegenden Bytes der im jeweiligen Block vorliegenden zu entschlüsselnden Daten innerhalb desselben Blocks entgegen der vorgegebenen Reihenfolge vom letzten bis zum ersten Byte von der Transformationseinheit entschlüsselt werden,

c) nachdem alle Bytes des Blocks entschlüsselt wurden, die Transformationseinheit sowie der Zufallszahlengenerator erneut in den Initialzustand gesetzt wird, und

d) die einzelnen sequentiell vorliegenden Bytes der so erhaltenen Daten innerhalb desselben Blocks hintereinander in der vorgegebenen Reihenfolge vom ersten bis zum letzten Byte von der Transformationseinheit entschlüsselt werden.

Zur Erhöhung der Abhängigkeiten der verschlüsselten Datenfolge von jedem einzelnen Byte der Rohdaten kann vorgesehen werden, dass die zuvor beschriebenen Verschlüsselungsschritte a) bis d) mehrfach für denselben Block wiederholt werden, wobei gegebenenfalls bei der letzten Wiederholung ausschließlich die Schritte a) und b) durchgeführt werden.

Eine Entschlüsselung sieht entsprechend vor, dass die Entschlüsselungsschritte a) bis d) mehrfach für denselben Block durchgeführt werden, wobei gegebenenfalls bei der letzten Durchführung ausschließlich die Schritte a) und b) ausgeführt werden.

Um Datenfolgen mit beliebiger vorgegebener Länge vorteilhaft verschlüsseln zu können und um Abhängigkeiten der verschlüsselten Datenfolge von sehr lange vorher verarbeiteten Daten zu ermöglichen, kann vorgesehen sein, dass nach der Durchführung des Schritts b) oder eines der Schritte b) oder alternativ nach der Durchführung des Schritts d) oder eines der Schritte d) und noch vor der darauffolgenden Zurücksetzung in den jeweiligen Initialzustand der innere Zustand der Transformationseinheit und des Zufallszahlengenerators abgespeichert wird und als neuer Initialzustand für die Verschlüsselung des jeweils nächsten Blocks herangezogen wird.

Eine Entschlüsselung sieht entsprechend vor, dass nach der Durchführung des Schrittes b) oder eines der Schritte b) oder alternativ nach der Durchführung des Schrittes d) oder eines der Schritte d) und noch vor der darauffolgenden Zurücksetzung in den jeweiligen Initialzustand der innere Zustand der Verschlüsselungsmaschine, bestehend aus dem inneren Zustand der Transformationseinheit und dem inneren Zustand des Zufallszahlengenerators abgespeichert wird und als neuer Initialzustand für die Entschlüsselung des jeweils nächsten Blocks herangezogen wird.

Eine vorteilhafte Ermittlung von Transformationsvorschriften sieht vor, dass gemeinsam mit dem Setzen eines Initialzustands der Verschlüsselungsmaschine eine Anzahl von Grund-Transformationsvorschriften in Abhängigkeit vom Initialzustand vorgegeben wird, und

- abhängig vom inneren Zustand der Transformationseinheit eine Anzahl T aus diesen Grund-Transformationsvorschriften in einer vorgegebenen Reihenfolge ausgewählt wird,
- wobei die Transformationsvorschrift aus den einzelnen ausgewählten Grund-Transformationsvorschriften zusammengesetzt wird, sodass bei der Anwendung der Transformationsvorschrift auf das zu verschlüsselnde Byte die ausgewählten Grund-Transformationsvorschriften in der jeweiligen Reihenfolge auf das zu verschlüsselnde Byte angewandt werden.

Eine Entschlüsselung sieht entsprechend vor, dass gemeinsam mit dem Setzen eines Initialzustands der Entschlüsselungsmaschine eine Anzahl T von Grund-Transformationsvorschriften in Abhängigkeit vom Initialzustand der Transformationseinheit vorgegeben wird, und

- abhängig vom inneren Zustand eine Anzahl T aus diesen Grund-Transformationsvorschriften in einer vorgegebenen Reihenfolge ausgewählt wird, wobei die Transformationsvorschrift aus den einzelnen ausgewählten Grund-Transformationsvorschriften zusammengesetzt wird, sodass bei der Anwendung der Transformationsvorschrift auf das zu entschlüsselnde Byte die ausgewählten Grund-Transformationsvorschriften in der jeweils umgekehrten Reihenfolge auf das zu verschlüsselnde Byte angewandt werden, und
- dass insbesondere die Grund-Transformationsvorschriften der Transformationseinheit den Inversen der Grund-Transformationsvorschriften der Transformationseinheit einer mit demselben Passwort initialisierten Verschlüsselungsmaschine entsprechen, und- dass insbesondere die Reihenfolge der Anwendung der einzelnen Grund-Transformationsvorschriften für die Bildung einer Transformationsvorschrift in der umgekehrten Reihenfolge wie bei der Verschlüsselung erfolgt.

Eine vorteilhafte Ermittlung von Transformationsvorschriften, mit der eine enorm große Menge an möglichen Transformationsvorschriften potentiell zur Verfügung steht, sieht vor, dass die Transformationsvorschrift aus den einzelnen ausgewählten Grund-Transformationsvorschriften sowie zusätzlich einer Spezial-Transformationsvorschrift zusammengesetzt wird, sodass bei der Anwendung der Transformationsvorschrift auf das zu verschlüsselnde Byte die ausgewählten Grund-Transformationsvorschriften in der jeweiligen Reihenfolge auf das zu verschlüsselnde Byte angewandt werden und, insbesondere danach, noch zusätzlich die Spezial-Transformationsvorschrift angewendet wird, und dass die Spezial-Transformationsvorschrift bei jedem Verschlüsselungsschritt oder nach einer Anzahl von Verschlüsselungsschritten, abgeändert wird, insbesondere ausschließlich für eine vorgegebene Anzahl von Abänderungen, und dass insbesondere die Verwendung und/oder Abänderung der Spezial-Transformationsvorschrift je nach Gegebenheit an- und abgeschaltet wird.

Eine Entschlüsselung sieht entsprechend vor, dass die Transformationsvorschrift aus der Spezial-Transformationvorschrift und aus den einzelnen ausgewählten Grund-Transformationsvorschriften gebildet wird, sodass bei der Anwendung der Transformationsvorschrift auf das zu entschlüsselnde Byte, insbesondere zuerst, die Spezial-Transformationsvorschrift und, insbesondere anschließend, die ausgewählten Grund-Transformationsvorschriften in der jeweils umgekehrten Reihenfolge auf das zu entschlüsselnde Byte angewandt werden,

- dass die Spezial-Transformationsvorschrift bei jedem Entschlüsselungsschritt oder nach einer Anzahl von Entschlüsselungsschritten abgeändert wird, insbesondere ausschließlich für eine vorgegebene Anzahl von Änderungen, unddass insbesondere die Verwendung und/oder Abänderung der Spezial-Transformationsvorschrift je nach Gegebenheit an und ab geschaltet wird.

Zur vorteilhaften Initialisierung des Verschlüsselungsverfahrens anhand eines Passworts, kann vorgesehen sein, dass vor der Verschlüsselung der Rohdaten

a) als Passwort eine Anzahl von sequentiell angeordneten Bytes vorgegeben wird,
b) gegebenenfalls dem Passwort seine Länge in Bytes und/oder eine Checksumme beigefügt wird,
c) gegebenenfalls, sofern die Länge des Passwortes eine vorgegebene Länge unterschreitet, das Passwort, insbesondere durch Wiederholung des Passwortes, auf die vorgegebene Länge verlängert wird und somit ein normalisiertes Passwort erstellt wird,
d) ein vorgegebener Start-Zufallszahlengenerator mit vorgegebenen Werten initialisiert wird,
e) die vom Start-Zufallszahlengenerator erstellten Zufallszahlen mit den Bytes des, gegebenenfalls normalisierten Passwortes verknüpft werden und eine erste Initialisierungs-Datenfolge erstellt wird,
f) diese Initialisierungsfolge wird verwendet um eine erste Verschlüsselungsmaschine, umfassend eine erste Transformationseinheit und einen ersten Zufallszahlengenerator zu erstellen und zu initialisieren.
g) das erste Passwort mit der ersten Verschlüsselungsmaschine verschlüsselt wird, und damit ein zweites Passwort erhalten wird, h) das erstellte zweite Passwort mit von dem Zufallszahlengenerator der ersten Verschlüsselungsmaschine erstellten Zufallszahlen verknüpft wird und so eine zweite Initialisierungs-Datenfolge erstellt wird, und diese zur Erstellung und Initialisierung einer weiteren Verschlüsselungsmaschine verwendet wird.

Eine Verbesserung der Initialisierung, die selbst bei kleinen Abweichungen vom Passwort zu völlig anderen Ergebnissen führt, sieht vor, dass i) wobei die folgenden Schritte j), k) und l) optional mehrfach, durchgeführt werden, nämlich

j) dass jeweils das für die Initialsierung der Verschlüsselungsmaschine verwendete Passwort (Wa mit dieser Verschlüsselungsmaschine verschlüsselt wird und dadurch ein nächstes Passwort erhalten wird,
k) dass dieses Passwort mit Zufallszahlen des jeweils zuletzt erstellten Zufallszahlengenerators verknüpft wird und so eine weitere Initialisierungs-Datenfolge erstellt wird, und
l) dass eine nachfolgende weitere Verschlüsselungsmaschine mit einer Transformationseinheit und einem Zufallszahlengenerator mit der jeweiligen zuletzt erstellten Initialisierungs-Datenfolge definiert, erstellt und initialisiert wird, und
m) dass die letzte derart erstellte Verschlüsselungsmaschine als Verschlüsselungsmaschine herangezogen wird.

Eine vorteilhafte Initialisierung einer Entschlüsselungsmaschine sieht vor, dass zur Initialisierung einer Entschlüsselungsmaschine

- eine erfindungsgemäße Verschlüsselungsmaschine durch die vorstehend beschriebene Initialisierung bzw nach Anspruch 6 erstellt wird,
und dass anschließend eine Entschlüsselungsmaschine mit einem Zufallszahlengenerator und einer Transformationseinheit erstellt wird,
- der innere Zustand des Zufallszahlengenerators der Verschlüsselungsmaschine auf den inneren Zustand des Zufallszahlengenerators der Entschlüsselungsmaschine übertragen wird und
- der innere Zustand der Transformationseinheit der Verschlüsselungsmaschine auf den inneren Zustand der Transformationseinheit der Entschlüsselungsmaschine übertragen wird, die Inversen der Transformationsvorschriften und/oder Grund-Transformationsvorschriften, sowie gegebenenfalls der Spezial-Transformationsvorschrift, ermittelt werden und als inverse Transformationsvorschriften und/oder inverse Grund-Transformationsvorschriften, sowie gegebenenfalls der inversen Spezial-Transformationsvorschrift, in die Transformationseinheit der Entschlüsselungsmaschine gespeichert werden, und insbesondere im Falle einer Änderung der Transformationsvorschriften während der Kodierung der Daten auch die nicht invertierten Transformationsvorschriften und/oder die nicht invertierte Grund-Transformationsvorschriften, sowie gegebenenfalls die nicht invertierten Spezial-Transformationsvorschrift, gespeichert werden.

Ein vorteilhaftes Verfahren zur Erstellung von deterministischen Pseudo-Zufallszahlen, das eine Rückkopplung mit den verschlüsselten Daten ermöglicht, sieht vor, dass eine Anzahl H von Auswahlregistern mit jeweils einer vorgegebenen Anzahl Z von Werten von 1 bis Z in beliebiger Reihenfolge vorgegeben werden,

a) dass dem ersten Auswahlregister eine erste Adressiereinheit vorgeschaltet ist, die mittels eines, insbesondere bei jedem Verschlüsselungsschritt zyklisch inkrementierten, in der Adressiereinheit befindlichen, ersten Zeigerwertes auf eine Speicherposition des ersten Auswahlregisters verweist,

b) dass die an der vom ersten Zeiger ausgewählten Speicherposition im ersten Auswahlregister befindliche Zahl ermittelt wird und diese mit der in der zweiten Adressiereinheit befindlichen Zahl verknüpft, insbesondere modulo Z genommen und um eins erhöht wird und dann der neue Inhalt der Adressiereinheit gebildet wird, und der so erhaltene Wert einen zweiten Zeigerwert bildet, der dann zur Adressierung einer Speicherposition im zweiten Auswahlregister herangezogen wird,

c) dass gegebenenfalls für die weiteren Adressiereinheiten und die weiteren Auswahlregister analog zur Adressiereinheit und zum Auswahlregister vorgegangen wird, und/oder für die weiteren Auswahlregister jeweils die an der vom jeweiligen Zeiger ausgewählten Speicherposition im jeweiligen Auswahlregister befindliche Zahl ermittelt wird und dem jeweils nächsten Zeiger zugewiesen oder zu diesem hinzugezählt oder von diesem abgezogen wird, und der Wert des jeweils nächsten Zeigers zur Adressierung einer Speicherposition im jeweils nächsten Auswahlregister herangezogen wird,

d) dass eine Anzahl Z von deterministischen Teil-Zufallszahlengeneratoren vorgegeben wird,

e) dass der vom letzten Zeigerwert der Adressiereinheit adressierte Wert des letzten Auswahlregisters zur Auswahl des Teil-Zufallszahlengenerators herangezogen wird,

f) dass gegebenenfalls zur Auswahl einer Mehrzahl von Zufallszahlengeneratoren jeweils der erste Zeiger nach vorgegebenen Kriterien abgeändert, insbesondere erhöht, verringert, inkrementiert oder dekrementiert, wird und die Schritte a) bis e) erneut durchgeführt werden, und

g) mit dem jeweils ausgewählten Teil-Zufallszahlengenerator eine Zufallszahl erstellt und zur Verfügung gehalten wird.

Eine bevorzugte externe Beeinflussung des Zufallszahlengenerators sieht vor, dass abhängig von am Eingang anliegenden Werten, insbesondere dem zu verschlüsselnden Byte und/oder dem verschlüsselten Byte und/oder von Zufallszahlen, der Wert eines der Adressiereinheiten abgeändert wird,

- wobei diese Werte mit dem in der jeweiligen Adressiereinheit befindlichen Wert verknüpft werden, vorzugsweise das Resultat dann modulo Z genommen und um eins erhöht wird, und der Wert dann der jeweiligen Adressiereinheit zugewiesen wird,- wobei gegebenenfalls nach Vorliegen eines externen Triggersignals, insbesondere ausgelöst durch eine vorzunehmende Verschlüsselung oder Entschlüsselung eines oder einer vorgegebenen Anzahl von Bytes, jeweils der Wert der nächsten Adressiereinheit abgeändert wird und für den Fall, dass im vorherigen Schritt der Wert der letzten Adressiereinheit abgeändert wurde, wiederum die erste Adressiereinheit abgeändert wird.

Ein weiteres vorteilhaftes Vorgehen beim Erstellen von Zufallszahlen, sieht vor dass eine Anzahl H von Auswahlregistern mit jeweils einer vorgegebenen Anzahl Z von Werten von 1 bis Z in beliebiger Reihenfolge vorgegeben werden,

a) dass dem ersten Auswahlregister eine erste Adressiereinheit vorgeschaltet ist, die mittels eines, insbesondere bei jedem Verschlüsselungsschritt zyklisch inkrementierten, Werts sowie eines vom inneren Zustand des Zufallsgenerators abhängigen weiteren Registers aufgrund einer vorab vorgegebenen Rechenoperation einen ersten Zeigerwert ermittelt, der auf eine Speicherposition des ersten Auswahlregisters verweist,

b) dass die an der vom ersten Zeiger ausgewählten Speicherposition im ersten Auswahlregister befindliche Zahl ermittelt wird und eine zweite Adressiereinheit mittels dieser Zahl sowie mittels eines vom inneren Zustand des Zufallsgenerators abhängigen weiteren Registers aufgrund der vorab vorgegebenen Rechenoperation einen zweiter Zeigerwert ermittelt, der auf eine Speicherposition des zweiten Auswahlregisters verweist, und der dann zur Adressierung einer Speicherposition im zweiten Auswahlregister herangezogen wird,

c) dass gegebenenfalls für die weiteren Adressiereinheiten und die weiteren Auswahlregister analog zur Adressiereinheit und zum Auswahlregister vorgegangen wird,

d) dass eine Anzahl von deterministischen Teil-Zufallszahlengeneratoren vorgegeben wird,

e) dass der vom letzten Zeigerwert der Adressiereinheit adressierte Wert des letzten Auswahlregisters zur Auswahl des Teil-Zufallszahlengenerators herangezogen wird, und

g) mit dem jeweils ausgewählten Teil-Zufallszahlengenerator eine Zufallszahl erstellt und zur Verfügung gehalten wird.

Eine bevorzugte externe Beeinflussung des Zufallszahlengenerators sieht vor, dass abhängig von am Eingang anliegenden Werten, insbesondere dem zu verschlüsselnden Byte und/oder dem verschlüsselten Byte und/oder von Zufallszahlen, einer der Werte der weiteren Register abgeändert wird,

- wobei gegebenenfalls nach Vorliegen eines externen Triggersignals, insbesondere ausgelöst durch eine vorzunehmende Verschlüsselung oder Entschlüsselung, oder einer vorgegebenen Anzahl von Triggersignalen eine Aktualisierung vorgenommen wird,

- wobei bei ersten Aktualisierung jeweils der Wert des ersten weiteren Registers abgeändert wird, und bei jeder weiteren Aktualisierung der Wert des weiteren Registers der jeweils nächsten Auswahlstufe abgeändert wird, und für den Fall, dass im vorherigen Schritt der Wert des weiteren Registers der letzten Auswahlstufe abgeändert wurde, wiederum die der Wert des weiteren Registers der ersten Auswahlstufe abgeändert wird.

Alternativ oder zusätzlich kann zur externen Beeinflussung des Zufallszahlengenerators vorgesehen sein, dass abhängig von am Eingang anliegenden Werten, insbesondere einem zu verschlüsselnden Byte und/oder einem verschlüsselten Byte und/oder von Zufallszahlen, eines der Auswahlregister abgeändert wird, und insbesondere zwei in den Auswahlregistern abgespeicherte Werte miteinander vertauscht werden,

- wobei der Index des einen Wertes eine Reihe von vorgegebenen Werten nach einer vorab vorgegebenen Reihenfolge durchläuft, insbesondere durch zyklisches Hochzählen zwischen 1 und Z, und der Index des zweiten Wertes durch die am Eingang anliegenden Werte festgelegt wird,- wobei gegebenenfalls nach Vorliegen eines externen Triggersignals, insbesondere ausgelöst durch eine vorzunehmende Verschlüsselung oder Entschlüsselung eines Bytes oder einer vorgegebenen Anzahl von Bytes, nach jeder Vertauschung oder nach einer vorgegeben Anzahl von Vertauschungen in einem Auswahlregister zum jeweils nächsten Auswahlregister gewechselt wird und für den Fall, dass im vorherigen Schritt in dem letzten Auswahlregister bereits die vorgegebene Anzahl von Vertauschungen statt gefunden hat, wieder das erste Auswahlregister für Abänderungen herangezogen wird.

Bevorzugt kann vorgesehen sein, dass bei einem erfindungsgemäßen Verschlüsselungsverfahren oder Entschlüsselungsverfahren vorstehend genannte Verfahren zur Erstellung von Zufallszahlen verwendet wird.

Weiters betrifft die Erfindung ein Verfahren zur Ermittlung und Anwendung von Transformationsvorschriften. Die so erstellten Transformationsvorschriften sind vorteilhaft geeignet, bei Ver- und Entschlüsselungsverfahren verwendet zu werden. Hierbei ist vorgesehen, dass eine Anzahl G von Auswahlregistern mit jeweils einer vorgegebenen Anzahl A Werten 1 bis A in beliebiger Reihenfolge vorgegeben werden, wobei in jedem Auswahlregister jeweils eine Anzahl von einzelnen Speicherpositionen im jeweiligen Auswahlregister repräsentierenden Zahlen vorgegeben wird, wobei jede eine Speicherposition repräsentierende Zahl jeweils einmal im Auswahlregister enthalten ist,

a) dass dem ersten Auswahlregister eine erste Adressiereinheit vorgeschaltet ist, die mittels eines, insbesondere bei jedem Verschlüsselungsschritt zyklisch inkrementierten, in der Adressiereinheit befindlichen ersten Zeigerwertes auf eine Speicherposition des ersten Auswahlregisters verweist,

b) dass die an der vom ersten Zeiger ausgewählten Speicherposition im ersten Auswahlregister befindliche Zahl ermittelt wird und diese mit der in der zweiten Adressiereinheit befindlichen Zahl verknüpft, insbesondere modulo A genommen und um eins erhöht wird, und dann der neue Inhalt der Adressiereinheit gebildet wird, und der so erhaltene Wert einen zweiten Zeigerwert bildet, der dann zur Adressierung einer Speicherposition im zweiten Auswahlregister herangezogen wird,

c) dass gegebenenfalls für die weiteren Adressiereinheiten und die weiteren Auswahlregister analog zur Adressiereinheit und zum Auswahlregister vorgegangen wird, und/oder

dass für die weiteren Auswahlregister jeweils die an der vom jeweiligen Zeiger ausgewählten Speicherposition im jeweiligen Auswahlregister befindliche Zahl ermittelt wird und dem jeweils nächsten Zeiger zugewiesen oder zu diesem hinzugezählt oder von diesem abgezogen wird, und der Wert des jeweils nächsten Zeigers zur Adressierung einer Speicherposition im jeweils nächsten Auswahlregister herangezogen wird,

d) dass eine Anzahl von Grund-Transformationsvorschriften vorgegeben wird,

e) dass der vom letzten Zeigerwert der Adressiereinheit adressierte Wert des letzten Auswahlregisters zur Auswahl der Grund-Transformationsvorschriften herangezogen wird,

f) dass gegebenenfalls zur Auswahl einer Mehrzahl von Grund-Transformationsvorschriften jeweils der erste Zeiger nach vorgegebenen Kriterien abgeändert, insbesondere erhöht, verringert, inkrementiert oder dekrementiert, wird und die Schritte a) bis e) erneut durchgeführt werden, und

g) ein Datenwert, insbesondere ein zu verschlüsselndes Byte oder ein zu entschlüsselndes Byte, angegeben wird und die ausgewählte Transformationsvorschrift auf den Datenwert angewendet wird, gegebenenfalls die mehreren ausgewählten Grund-Transformationsvorschriften hintereinander, im Falle der Verschlüsselung in der Reihenfolge ihrer Auswahl oder im Falle der Entschlüsselung entgegen der Reihenfolge ihrer Auswahl, auf den Datenwert angewendet werden und das Ergebnis der Anwendung zur Verfügung gehalten wird. Das Verfahren erlaubt eine vorteilhafte Rückkopplung und führt zu schwer vorhersehbaren Transformationsvorschriften.

Eine bevorzugte externe Beeinflussung der Ermittlung der Grund-Transformationsvorschriften sieht vor, dass abhängig von am Eingang anliegenden Werten, insbesondere dem zu verschlüsselnden Byte und/oder dem verschlüsselten Byte und/oder von Zufallszahlen, der Wert eines der Adressiereinheiten abgeändert wird,

- wobei diese Werte mit dem in der jeweiligen Adressiereinheit befindlichen Wert verknüpft werden, vorzugsweise das Resultat dann modulo A genommen und um eins erhöht wird und der Wert dann der jeweiligen Adressiereinheit zugewiesen wird,- wobei gegebenenfalls nach Vorliegen eines externen Triggersignals, insbesondere ausgelöst durch eine vorzunehmende Verschlüsselung oder Entschlüsselung eines oder einer vorgegebenen Anzahl von Bytes, jeweils die nächste Adressiereinheit abgeändert wird und für den Fall, dass im vorherigen Schritt die letzte Adressiereinheit abgeändert wurde, wiederum die erste Adressiereinheit abgeändert wird.

Weiters betrifft die Erfindung ein Verfahren zur Ermittlung und Anwendung von Transformationsvorschriften. Die so erstellten Transformationsvorschriften sind vorteilhaft geeignet, bei Ver- und Entschlüsselungsverfahren verwendet zu werden. Hierbei ist vorgesehen, dass dass eine Anzahl G von Auswahlregistern mit jeweils einer vorgegebenen Anzahl A Werten 1 bis A in beliebiger Reihenfolge vorgegeben werden, wobei in jedem Auswahlregister jeweils eine Anzahl von einzelnen Speicherpositionen im jeweiligen Auswahlregister repräsentierenden Zahlen vorgegeben wird, wobei jede eine Speicherposition repräsentierende Zahl jeweils einmal im Auswahlregister enthalten ist,

a) dass dem ersten Auswahlregister eine erste Adressiereinheit vorgeschaltet ist, die mittels eines, insbesondere bei jedem Verschlüsselungsschritt zyklisch inkrementierten, Wertes eines Registers sowie eines vom inneren Zustand des Zufallsgenerators abhängigen weiteren Registers aufgrund einer vorab vorgegebenen Rechenoperation einen ersten Zeigerwert ermittelt, der auf eine Speicherposition des ersten Auswahlregisters verweist,

b) dass die an der vom ersten Zeiger ausgewählten Speicherposition im ersten Auswahlregister befindliche Zahl ermittelt wird und eine zweite Adressiereinheit mittels dieser Zahl sowie mittels eines vom inneren Zustand des Zufallsgenerators abhängigen weiteren Registers aufgrund der vorab vorgegebenen Rechenoperation einen zweiter Zeigerwert ermittelt, der auf eine Speicherposition des zweiten Auswahlregisters verweist, und der dann zur Adressierung einer Speicherposition im zweiten Auswahlregister herangezogen wird,

c) dass gegebenenfalls für die weiteren Adressiereinheiten und die weiteren Auswahlregister analog zur Adressiereinheit und zum Auswahlregister vorgegangen wird,

d) dass eine Anzahl von Grund-Transformationsvorschriften vorgegeben wird,

e) dass der vom letzten Zeigerwert der Adressiereinheit adressierte Wert ($\Phi_G$) des letzten Auswahlregisters zur Auswahl der Grund-Transformationsvorschriften herangezogen wird,

f) dass gegebenenfalls zur Auswahl einer Mehrzahl von Grund-Transformationsvorschriften jeweils das Register nach vorgegebenen Kriterien abgeändert, insbesondere erhöht, verringert, inkrementiert oder dekrementiert, wird und die Schritte a) bis e) erneut durchgeführt werden, und

g) ein Datenwert, insbesondere ein zu verschlüsselndes Byte oder ein zu entschlüsselndes Byte, angegeben wird und die ausgewählte Transformationsvorschrift auf diesen Datenwert angewendet wird, gegebenenfalls die mehreren ausgewählten Grund-Transformationsvorschriften hintereinander, im Falle der Verschlüsselung in der Reihenfolge ihrer Auswahl oder im Falle der Entschlüsselung entgegen der Reihenfolge ihrer Auswahl, auf diesen Datenwert angewendet werden und das Ergebnis der Anwendung zur Verfügung gehalten wird.

Eine bevorzugte externe Beeinflussung des Zufallszahlengenerators sieht vor, dass abhängig von am Eingang anliegenden Werten, insbesondere dem zu verschlüsselnden Byte und/oder dem verschlüsselten Byte und/oder von Zufallszahlen, einer der Werte der weiteren Register abgeändert wird,

- wobei nach Vorliegen eines externen Triggersignals, insbesondere ausgelöst durch die Anfrage nach einer Grund-Transformation, oder einer Anzahl von Triggersignalen eine Aktualisierung vorgenommen wird,

- wobei bei ersten Aktualisierung jeweils der Wert des ersten weiteren Register abgeändert wird, und bei jeder weiteren Aktualisierung der Wert des weiteren Registers der jeweils nächsten Auswahlstufe abgeändert wird, und für den Fall, dass im vorherigen Schritt der Wert des weiteren Registers der letzten Auswahlstufe abgeändert wurde, wiederum die der Wert des weiteren Registers der ersten Auswahlstufe abgeändert wird.

Alternativ oder zusätzlich kann zur externen Beeinflussung der Ermittlung der Grund-Transformationsvorschriften vorgesehen sein, dass abhängig von am Eingang anliegenden Werten, insbesondere einem zu verschlüsselnden Byte und/oder einem verschlüsselten Byte und/oder Zufallszahlen eines der Auswahlregister abgeändert wird, und insbesondere zwei in den Auswahlregistern abgespeicherte Werte miteinander vertauscht werden,

- wobei der Index des einen Wertes eine Reihe von vorgegebenen Werten nach einer vorab vorgegebenen Reihenfolge durchläuft, insbesondere durch zyklisches Hochzählen zwischen 1 und A, und der Index des zweiten Wertes durch die am Eingang anliegenden Werte festgelegt wird,
- wobei gegebenenfalls nach Vorliegen eines externen Triggersignals, insbesondere ausgelöst durch eine vorzunehmende Verschlüsselung oder Entschlüsselung eines Bytes oder einer vorgegebenen Anzahl von Bytes, nach jeder Vertauschung oder nach einer vorgegeben Anzahl von Vertauschungen in einem Auswahlregister zum jeweils nächsten Auswahlregister gewechselt wird und für den Fall, dass im vorherigen Schritt in dem letzten Auswahlregister bereits die vorgegebene Anzahl von Vertauschungen statt gefunden hat, wieder das erste Auswahlregister für Abänderungen herangezogen wird.

Eine Transformationseinheit, die eine extrem große Anzahl an Transformationsvorschriften ermöglicht, sieht vor, dass abhängig von am Eingang anliegenden Werten, insbesondere einem zu verschlüsselnden Byte und/oder einem verschlüsselten Byte und/oder Zufallszahlen die Transformationsvorschriften oder die Grund-Transformationsvorschriften modifiziert werden,
wobei die für die Entschlüsselung verwendeten Transformationsvorschriften zu den für die Verschlüsselung verwendeten Transformationsvorschriften invers sind, wobei nach einer vorgegebenen Anzahl von Abänderungen in einer Transformationsvorschrift oder Grund-Transformationsvorschrift, zur jeweils nächsten Transformationsvorschrift oder Grund-Transformationsvorschrift, gewechselt wird und für den Fall, dass im vorherigen Schritt die letzte Transformationsvorschrift oder Grund-Transformationsvorschrift, abgeändert wurde, wieder die erste Transformationsvorschrift oder Grund-Transformationsvorschrift, für Abänderungen herangezogen wird.

Bevorzugt kann vorgesehen sein, dass bei einem erfindungsgemäßen Verschlüsselungsverfahren oder Entschlüsselungsverfahren das erfindungsgemäße Verfahren zur Ermittlung und Anwendung einer Transformationsvorschrift verwendet wird.

Weiters betrifft die Erfindung eine Verschlüsselungsmaschine, die eine besonders sichere Verschlüsselung gewährleistet, eine Aktualisierungseinheit, die den Zustandsspeicher der Transformationseinheit nach einer Anzahl von durchgeführten Verschlüsselungen, insbesondere nach der Verschlüsselung jedes einzelnen Bytes, abhängig vom jeweils verschlüsselten Byte sowie vom jeweiligen Endergebnis der Verschlüsselung und/oder abhängig von vom Zufallszahlengenerator erstellten Zufallszahlen ändert und aktualisiert, und die gegebenenfalls den Zustandsspeicher des Pseudo-Zufallszahlengenerators nach einer Anzahl von durchgeführten Verschlüsselungen, insbesondere nach der Verschlüsselung jedes einzelnen Bytes, abhängig vom jeweils zu verschlüsselnden Byte sowie vom jeweiligen Endergebnis der Verschlüsselung und abhängig von vom Zufallszahlengenerator vorher erstellten Zufallszahlen ändert und aktualisiert.

Die Erfindung betrifft auch eine entsprechende Entschlüsselungsmaschine eine Aktualisierungseinheit, die den Zustandsspeicher der Transformationseinheit nach einer Anzahl von durchgeführten Entschlüsselungen, insbesondere nach der Entschlüsselung jedes einzelnen Bytes, abhängig vom jeweils zu entschlüsselnden Byte sowie vom jeweiligen Endergebnis der Entschlüsselung und/oder abhängig von vom Zufallszahlengenerator erstellten Zufallszahlen ändert und aktualisiert, und die gegebenenfalls den Zustandsspeicher des Pseudo-Zufallszahlengenerators nach einer Anzahl von durchgeführten Entschlüsselungen, insbesondere nach der Entschlüsselung jedes einzelnen Bytes, abhängig vom jeweils zu entschlüsselnden Byte sowie vom jeweiligen Endergebnis der Entschlüsselung und abhängig von vom Zufallszahlengenerator vorher erstellten Zufallszahlen ändert und aktualisiert.

Hierbei kann insbesondere vorgesehen sein, dass die Verschlüsselungsmaschine zur Durchführung sämtlicher vorstehend genannter Verfahren zur Verschüsselung ausgebildet ist.

Analog kann vorteilhaft vorgesehen sein, dass die Entschlüsselungsmaschine zur Durchführung sämtlicher vorstehend genannter Verfahren zur Entschüsselung ausgebildet ist.

Ein Programm zur Durchführung eines der erfindungsgemäßen Verfahren kann auf einem Datenträger abgespeichert werden.

Weiters kann auch eine verschlüsselte Datenfolge auf einem Datenträger abgespeichert werden.

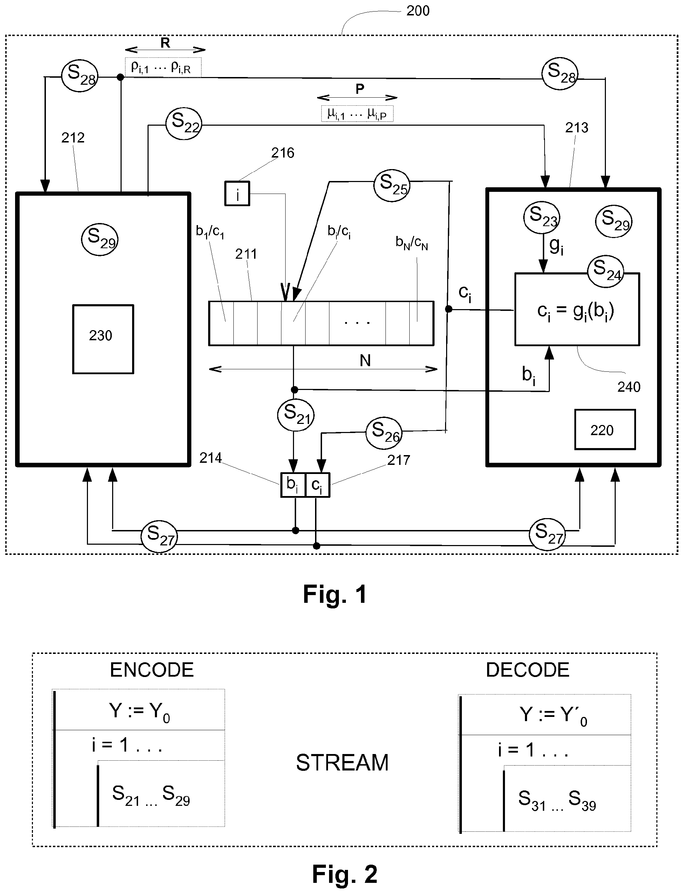

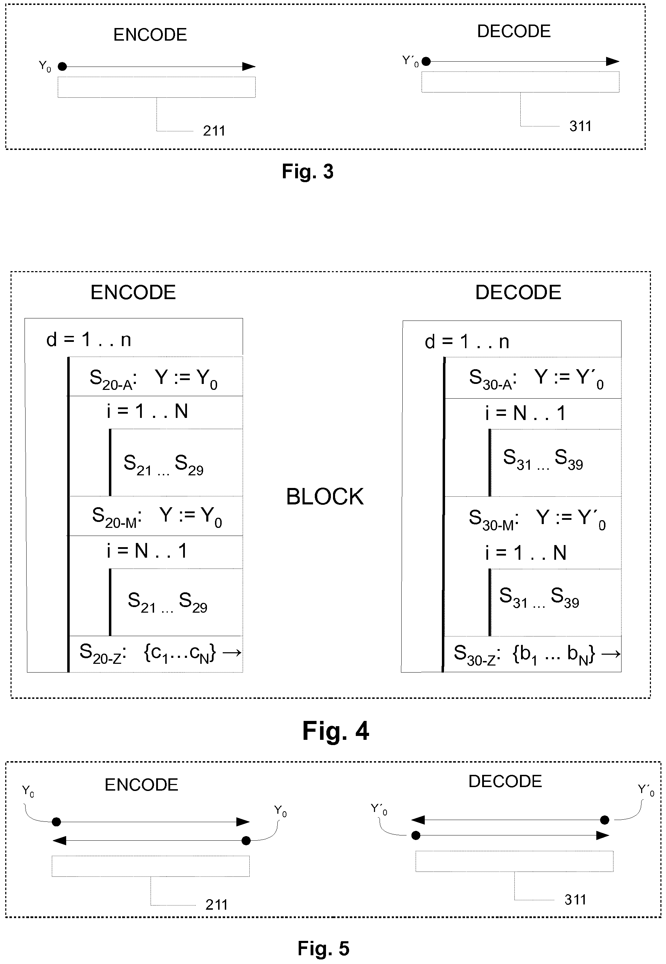

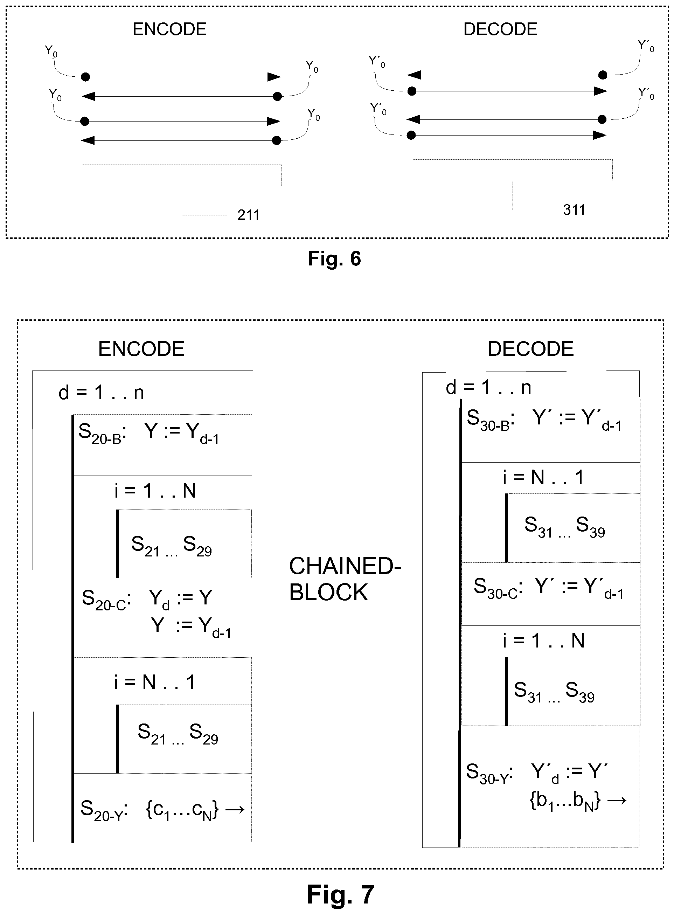

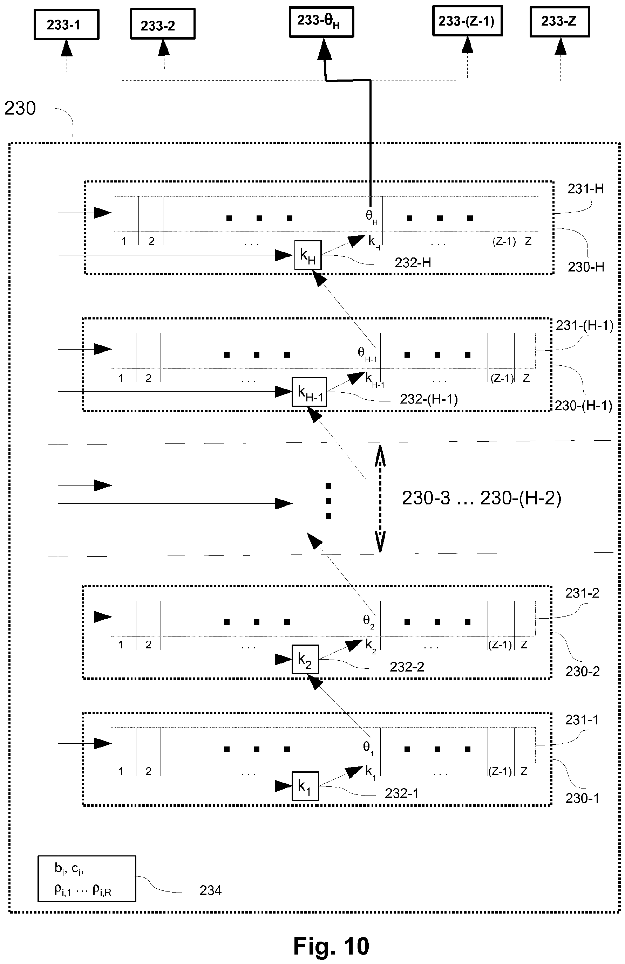

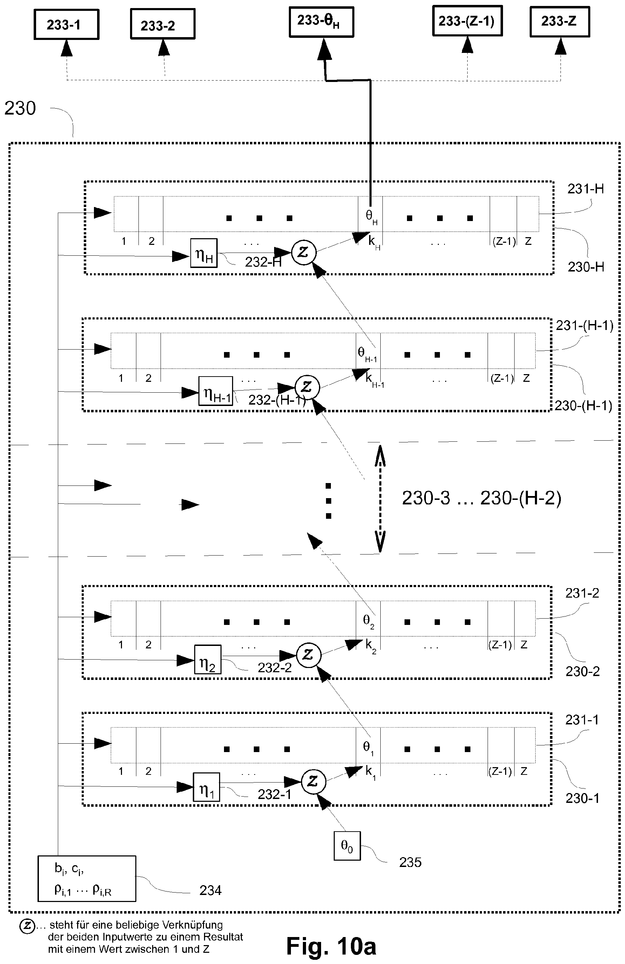

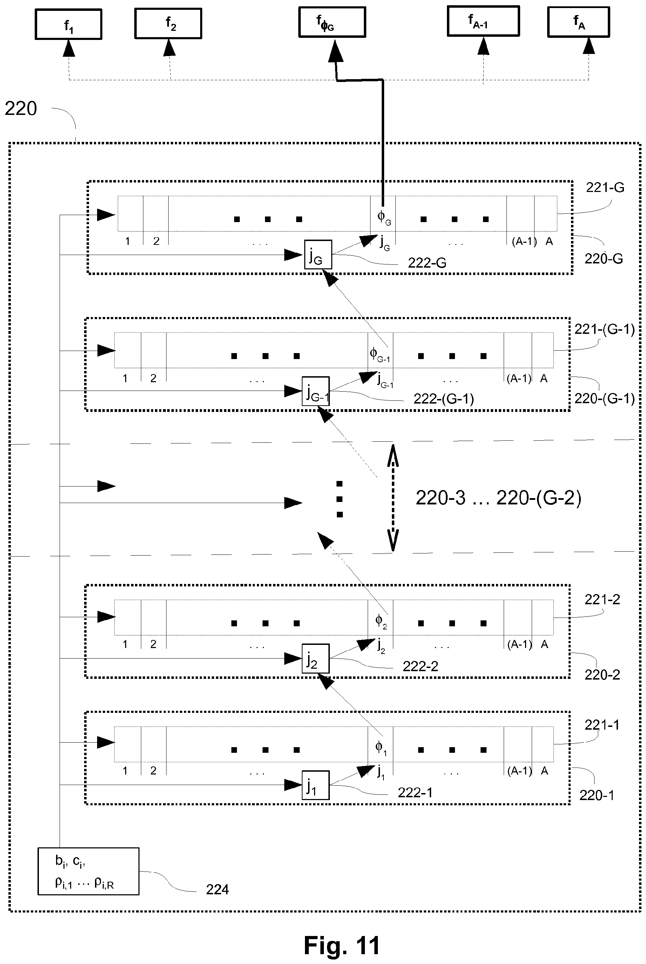

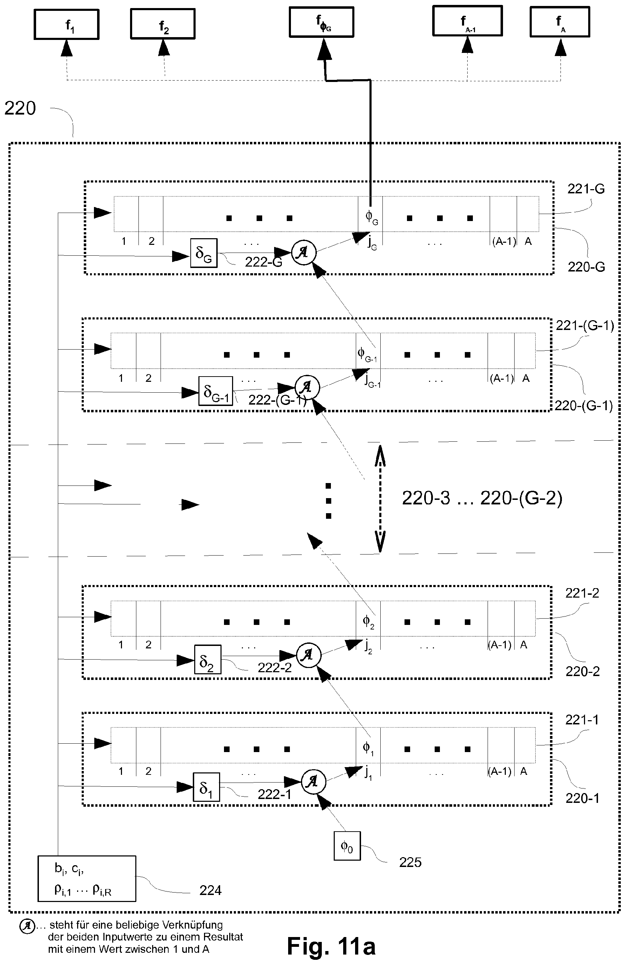

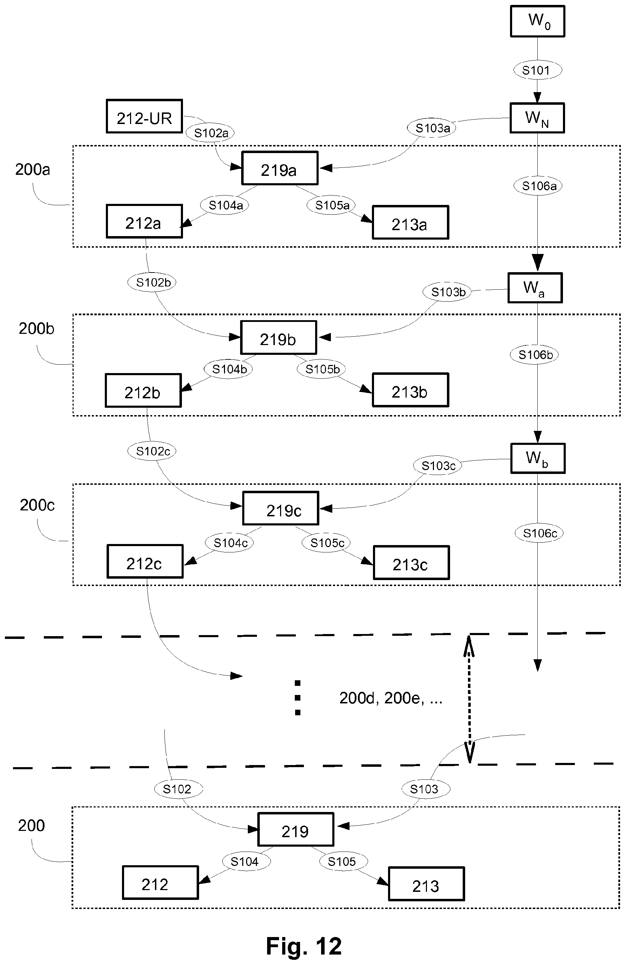

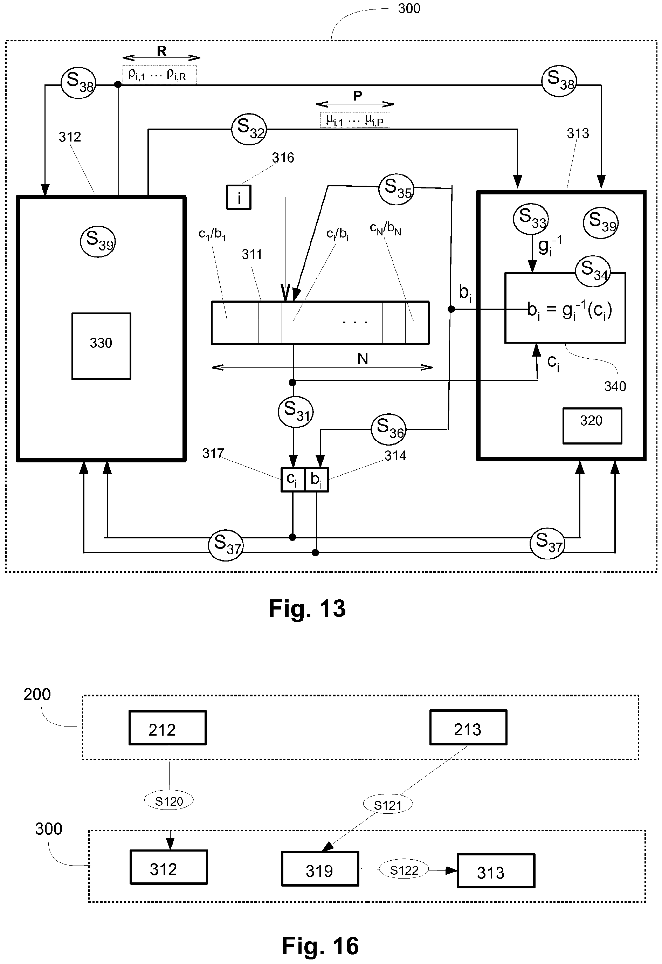

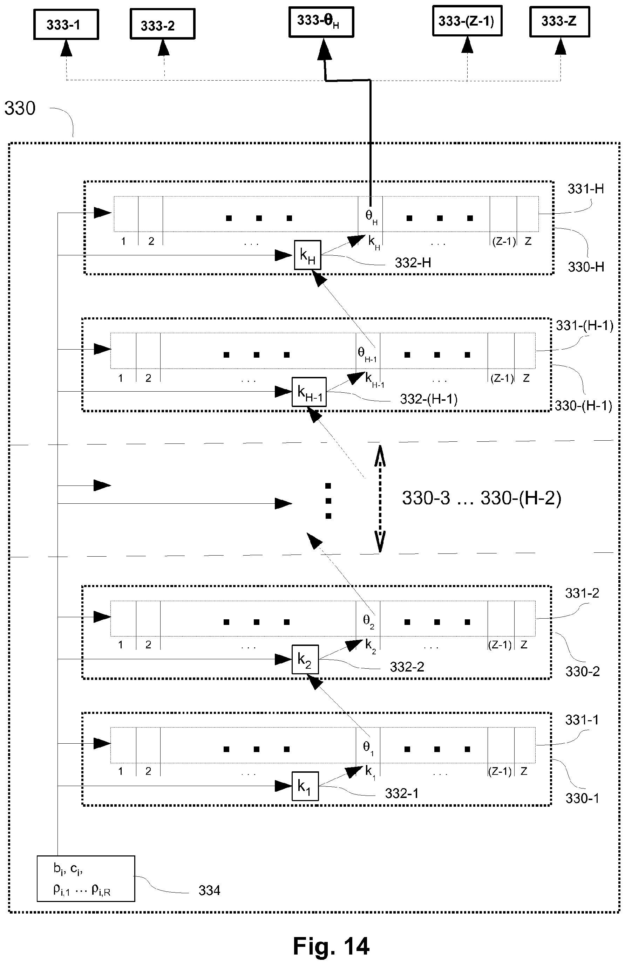

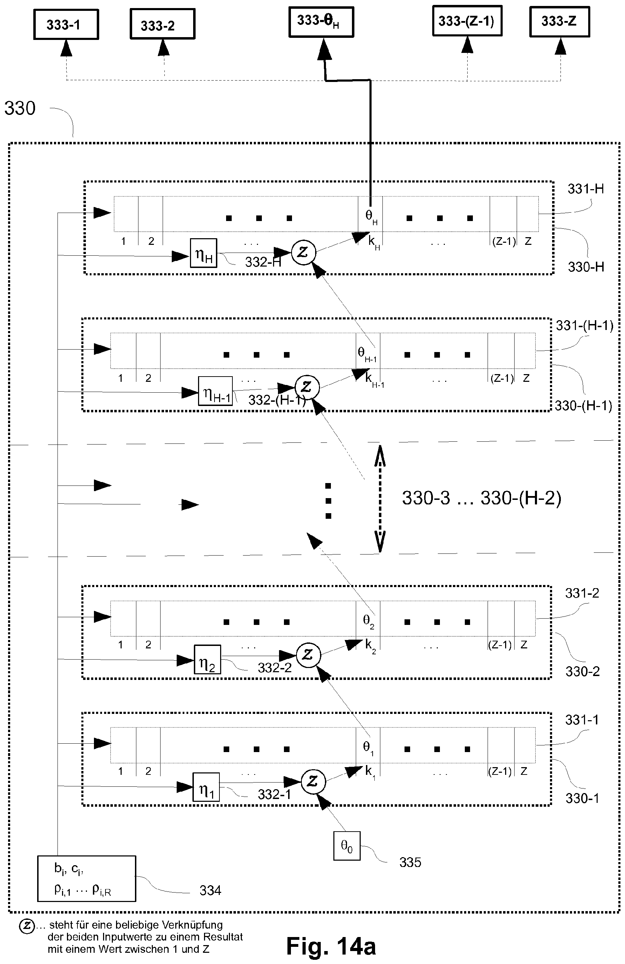

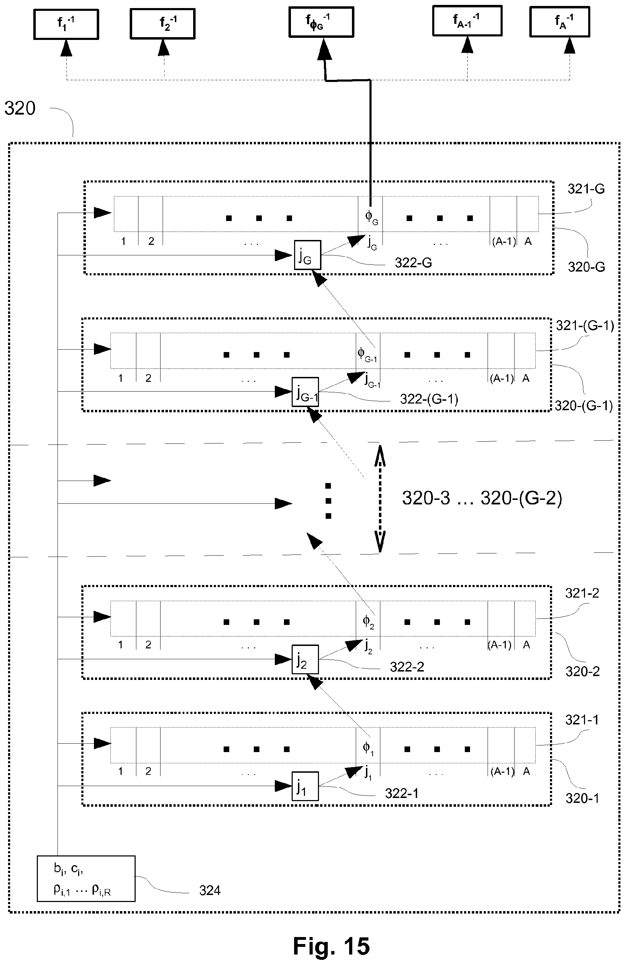

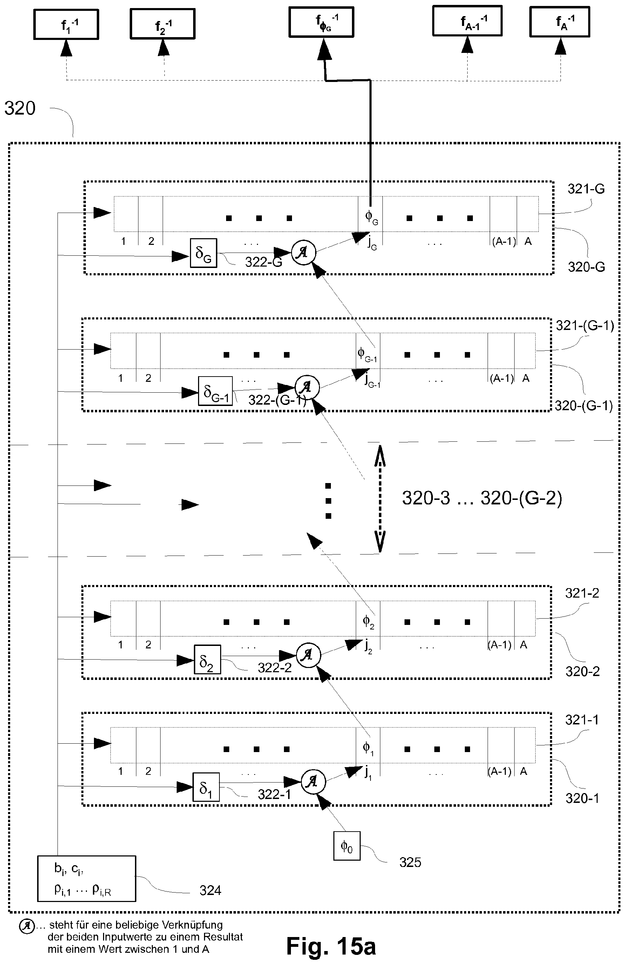

**Fig. 1** zeigt eine bevorzugte Ausführungsform einer Verschlüsselungsmaschine. **Fig. 2 und 3** zeigen eine mögliche Art der Verschlüsselung sowie Entschlüsselung. **Fig. 4 und 5** zeigen eine bevorzugte Art der blockweisen Verschlüsselung sowie Entschlüsselung. **Fig. 6 bis 9** zeigen eine bevorzugte Art der blockweisen Verschlüsselung sowie Entschlüsselung mit erhöhter Sicherheit. **Fig. 10** zeigt eine bevorzugte Ausführungsform eines Zufallszahlengenerators für eine Verschlüsselungsmaschine. **Fig. 10a** zeigt eine alternative Ausführungsform eines Zufallszahlengenerators für eine Verschlüsselungsmaschine. **Fig. 11** zeigt eine bevorzugte Ausführungsform einer Transformationseinheit für eine Verschlüsselungsmaschine. **Fig. 11a** zeigt eine alternative Ausführungsform einer Transformationseinheit für eine Verschlüsselungsmaschine. **Fig. 12** zeigt eine vorteilhafte Initialisierung einer Verschlüsselungsmaschine. **Fig. 13** zeigt eine bevorzugte Ausführungsform einer Entschlüsselungsmaschine. **Fig. 14** zeigt eine bevorzugte Ausführungsform eines Zufallszahlengenerators für eine Entschlüsselungsmaschine. **Fig. 14a** zeigt eine alternative Ausführungsform eines Zufallszahlengenerators für eine Entschlüsselungsmaschine. **Fig. 15** zeigt eine bevorzugte Ausführungsform einer Transformationseinheit für eine Entschlüsselungsmaschine. **Fig. 15a** zeigt eine alternative Ausführungsform einer Transformationseinheit für eine Entschlüsselungsmaschine. **Fig. 16** zeigt die Initialisierung einer Entschlüsselungsmaschine.

## Verschlüsselung

In **Fig. 1** ist eine Veschlüsselungsmaschine 200 mit einem Datenspeicher gemäß einem **ersten Ausführungsbeispiel** der Erfindung dargestellt. Dieser Datenspeicher 211 wird vor der eigentlichen Verschlüsselung mit den zu verschlüsselnden Rohdaten befüllt. Bei dem vorliegenden Ausführungsbeispiel umfasst der Datenspeicher eine Anzahl von N=4096 Bytes zu je 8 Bit.

Die Verschlüsselungsmaschine 200 umfasst einen Pseudo-Zufallszahlengenerator 212, im Folgenden auch kurz nur Zufallszahlengenerator bezeichnet, zur Erzeugung von Pseudo-Zufallszahlen, im Folgenden als Zufallszahlen $\rho$ bzw $\mu$ bezeichnet. Der Zufallszahlengenerator 212 verfügt über einen Zustandsspeicher sowie einem externen Eingang, mit dem der Zustandsspeicher gefüllt, initialisiert bzw. geändert werden kann. Weiters verfügt der Zufallszahlengenerator 212 über einen Ausgang, an dem er auf Anfrage Zufallszahlen $\rho$ bzw $\mu$ abgibt. Unter Zufallszahlen $\rho$ bzw $\mu$ wird im Zusammenhang mit der Erfindung eine Folge von Zahlen verstanden, die grundsätzlich vollständig deterministisch aus dem Zustand des Zufallszahlengenerators 212 und den allenfalls dem Zufallszahlengenerator 212 zugeführten Werten abgeleitet werden kann, aber idealer Weise jemandem, dem die Werte des Zustandsspeichers des Zufallszahlengenerators 212 nicht bekannt sind, keine oder zu wenig Hinweise liefert, um kryptographisch verwertbare Vorhersagen für die nächsten zu erwartenden Zahlen zu erlauben.

Die Verschlüsselungsmaschine 200 umfasst ferner eine Transformationseinheit 213. Die Transformationseinheit 213 wird von einer nicht dargestellten Steuereinheit angesteuert, die die entsprechenden zu verschlüsselnden Bytes aus dem Datenspeicher 211 an der betreffenden Stelle i, ausgewählt durch die Indexeinheit 216, entnimmt und nach der Verschlüsselung wieder an die betreffende Stelle i im Datenspeicher 211 enträgt. Die Transformationseinheit 213 verfügt über einen Eingang, an dem jeweils ein Byte der im Datenspeicher 211 abgespeicherten Daten zur Verschlüsselung anliegt. Am Ausgang der Transformationseinheit 213 liegt nach der Durchführung der Verschlüsselung jeweils das verschlüsselte Byte an. In dem vorliegenden Ausführungsbeispiel der Erfindung wird jeweils ein Byte des Datenspeichers 211 aus diesem ausgelesen und zur Verschlüsselung an die Transformationseinheit 213 übermittelt. Anschließend wird das verschlüsselte Byte an diejenige Stelle des Datenspeichers 211 geschrieben, aus dem das Rohdaten-Byte ausgelesen wurde.

Die Transformationseinheit 213 verfügt über eine Anzahl A von vorgegebenen eineindeutigen Grund-Transformationsvorschriften $f_1, ..., f_A$. Diese sind in einem dafür vorgesehenen Speicher abgelegt. Eine bevorzugte Weise der Abspeicherung einer der Grund-Transformationsvorschriften $f_1, ..., f_A$ für Bytes mit einer Bitanzahl von B besteht darin, einen Speicher mit $2^B$ Bytes zur Verfügung zu stellen, wobei für jeden der möglichen $2^B$ mittels eines Bytes darstellbaren Werte jeweils ein meist anderer Wert angegeben wird. Um die Eindeutigkeit und damit die Umkehrbarkeit der Grund-Transformationsvorschriften $f_1, ..., f_A$ zu gewährleisten, wird jeder Wert, entsprechend einer Zahl zwischen 0 und $2^B$-1, jeweils nur ein einziges Mal in einen der $2^B$ Speicher geschrieben. In dem vorliegenden Ausführungsbeispiel mit B=8 Bits pro Byte wird für jede der Grund-Transformationsvorschriften $f_1, ..., f_A$ jeweils ein Speicher von 256 Bytes zur Verfügung gestellt. Die Anwendung der Grund-Transformationsvorschriften $f_1, ..., f_A$ auf ein zu transformierendes Byte mit 8 Bits, erfolgt derart, dass als Ergebnis dieses Byte zurückgegeben wird, welches sich an dieser Speicherposition befindet, deren Ordinalnummer, beginnend mit 0, dem als Zahl verstandenen, d.h. zwischen 0 und 255 = $2^B$-1, zu transformierenden Byte entspricht.

Prinzipiell besteht die Möglichkeit, Transformationen von Bytes ausschließlich mit den bereitgestellten Grund-Transformationsvorschriften $f_1, ..., f_A$ vorzunehmen. Dies hat jedoch den Nachteil, dass die Anzahl der möglichen Transformationen relativ klein ist. So lassen sich bei einem zur Verfügung stehenden Speicher von 1 MB etwa A=4000 Grund-Transformationsvorschriften $f_1, ..., f_A$ abspeichern. Der Raum an insgesamt zur Verfügung stehenden Transformationsvorschriften zur Transformation von Bytes mit 8 Bits auf ebenso große Bytes beträgt jedoch $(2^8)! \sim 10^{506}$ Transformationen. Die Grund-Transformationsvorschriften $f_1, ..., f_A$ stellen also nur einen extrem kleinen Teilraum aus dem gesamten Raum der möglichen Transformationsvorschriften dar.

Aus diesem Grund verwendet das vorliegende Ausführungsbeispiel der Erfindung Transformationsvorschriften $g_1, \ldots$, die aus mehreren Vorschriften, ausgewählt aus den Grund-Transformationsvorschriften $f_1, \ldots, f_A$, zusammengesetzt sind. Eine Transformationsvorschrift g kann, beispielsweise als Folge von T Zufallszahlen $\mu_1$-$\mu_T$ vorgegeben oder durch eine Anzahl von mittels einer später beschriebenen Auswahleinheit ermittelten Zahlenfolge erstellt werden, indem für jede Zahl der Zahlenfolge jeweils eine der Grund-Transformationsvorschriften $f_{\mu 1}, \ldots, f_{\mu T}$ ausgewählt wird und die derart ausgewählten Grund-Transformationsvorschriften $f_{\mu 1}, \ldots, f_{\mu T}$ hintereinander in der Reihenfolge der jeweiligen sie bestimmenden Zahlen auf das zu verschlüsselnde Rohdaten-Byte b angewendet werden.

$$c = g(b) = f_{\mu 1}(f_{\mu 2}( \ldots f_{\mu T}(b) \ldots ))$$

Um eine für einen Angreifer schwer zu entschlüsselnde Verschlüsselung bereitzustellen, ist es von großem Vorteil, die vorliegende Menge bzw. Gruppe der Transformationsvorschriften möglichst voll zu nutzen. Durch die Verkettung einer Anzahl T der vorliegenden A Grund-Transformationsvorschriften $f_1, \ldots, f_A$ steht eine Anzahl von $A^T$ Transformationsvorschriften $g_1, \ldots$ zur Verfügung. Werden Transformationsvorschriften g durch Verkettung von P=10 Grund-Transformationsvorschriften f erstellt und stehen bei 1MB Speicherplatz 4000 Grund-Transformationsvorschriften f zur Verfügung, so können insgesamt $4000^{10}$ ($\sim= 10^{36}$) unterschiedliche Transformationsvorschriften g herangezogen werden, wobei der Aufwand der Verschlüsselung gegenüber der bloßen Verwendung der Grund-Transformationsvorschriften $f_1, \ldots, f_A$ nur T-fach bzw. zehnfach höher ist. Durch die Auswahl der Anzahl A der Grund-Transformationsvorschriften $f_1, \ldots, f_A$ sowie der Anzahl T der für eine Verkettung verwendeten Grund-Transformationsvorschriften f kann insgesamt eine Abwägung zwischen Speicherbedarf, Rechenzeit und Sicherheit gefunden werden.

Die Ausführung der Grund-Transformationsvorschrift f kann auf unterschiedlichste Art implementiert sein, wobei lediglich die Bijektivität der Grund-Transformationsvorschriften f zu gewährleisten ist. Eine Grund-Transformationsvorschrift f kann beispielsweise derart realisiert werden, dass für jeden möglichen Wert eines Bytes jeweils ein in einem dem Wert zugeordnetem Speicher abgespeicherter Transformationswert zur Verfügung steht. Bei einer Bytelänge von 8 Bit stehen insgesamt $256 = 2^8$ verschiedene mögliche Werte zur Verfügung, sodass für Grund-Transformationsvorschriften f für Bytes mit 8 Bit ein Speicher mit 256 Bytes zu 8 Bit zur Verfügung gestellt wird, in dem jeder der Werte jeweils einmal vorkommt. Die Anwendung der Grund-Transformationsvorschrift f auf einen Wert x erfolgt, indem auf den Speicher bzw. auf dessen Speicherposition zugegriffen wird und der im Speicher an dieser Stelle befindlichen Wert als Resultat f(x) der Anwendung der Grund-Transformationsvorschrift auf den Wert x angesehen wird. Einen Speicher für die bei der Entschlüsselung benötigte Umkehrung oder Inverse $f^{-1}$ der Grund-Transformationsvorschrift f kann auf dieselbe Weise realisiert werden.

Eine alternative Variante zur Anwendung einer Grund-Transformationsvorschrift f auf einen Byte-Wert x besteht darin, den Byte-Wert x mit einer vorgegebenen Maske $M_f$ einer bitweise durchgeführten Exklusiven-Oder--Verknüpfung (XOR-Verknüpfung) zu unterziehen. Hierbei ist lediglich die Maske $M_f$ abzuspeichern, die jeweils dieselbe Länge aufweist wie das jeweilige Byte.

Die Umkehrung $f^{-1}$ einer derartigen Grund-Transformationsvorschrift ist ident der Grund-Transformationsvorschrift ($f^{-1}=f$).

Eine weitere Alternative, vorteilhaft bei Bytes bestehend aus insbesondere mehr als 8 Bits, besteht in der Vertauschung einzelner Bits bei der Anwendung der Grund-Transformationsvorschrift. Hierbei ist jeweils anzugeben, welche der Bits miteinander zu vertauschen sind. Die Umkehrung $f^{-1}$ einer derartigen Grund-Transformationsvorschrift f ist ident der Grund-Transformationsvorschrift ($f^{-1}=f$).

Schließlich kann, insbesondere bei Bytes bestehend aus vielen Bits vorgesehen sein, dass Grund-Transformationsvorschriften f nicht auf alle Bits des Byte angewendet werden, um Speicherplatz zu sparen. In diesem Fall können auch die vorstehend beschriebenen Arten von Grund-Transformationsvorschriften f jeweils auf einer angegebenen Teilbereich des Bytes angewendet werden.

Sämtliche der dargestellten Grund-Transformationsvorschriften können aufgrund ihrer Bijektivität untereinander kombiniert werden, um eine Transformationvorschrift g zu erreichen.

Für eine verbesserte Verschlüsselung kann die Transformationseinheit 213 an Stelle einer der ausgewählten Grund-Transformationsvorschriften $f_1 \ldots f_A$ eine Spezial-Transformationsvorschrift h auf das jeweilige zu verschlüsselnde Byte $b_i$ anwenden.

Die Spezial-Transformationsvorschrift h wird bei jeder Verschlüsselung oder nach einer Anzahl von Verschlüsselungen abgeändert. Insbesondere ist die Spezial-Transformationsvorschrift h durch vollständige Angabe aller $2^B$ Werte in einem Speicher mit $2^B$ Speicherplätzen analog zu den Grund-Transformationsvorschriften f festgelegt.

In Abhängigkeit vom zu verschlüsselnden Byte $b_i$, dem verschlüsselten Byte $c_i$ und gegebenenfalls Zufallswerte $\rho_i$ können zur Abänderung der Spezial-Transformationsvorschrift je zwei Werte miteinander vertauscht werden. Die Spezial-Transformationsvorschrift kann z.B. durch Vertauschen von zwei Funktionswerten auf je zwei vorgegebenen Positionen vorgenommen werden. Die erste Position kann durch einen Zählerwert eines fortlaufenden zyklischen Zählers, die zweite Position durch das zu verschlüsselnde Byte $b_i$, das verschlüsselte Byte $c_i$ oder eine Zufallszahl $\rho_i$ festgelegt werden. Die Verwendung der Spezial-Transformationsvorschrift h während der Durchführung der Kodierung erhöht die Anzahl der potentiell verwendeten Transformationsvorschriften g auf $(2^B)! = (2^8)! \sim 10^{506}$, ohne jedoch die Verarbeitungszeit wesentlich zu erhöhen.

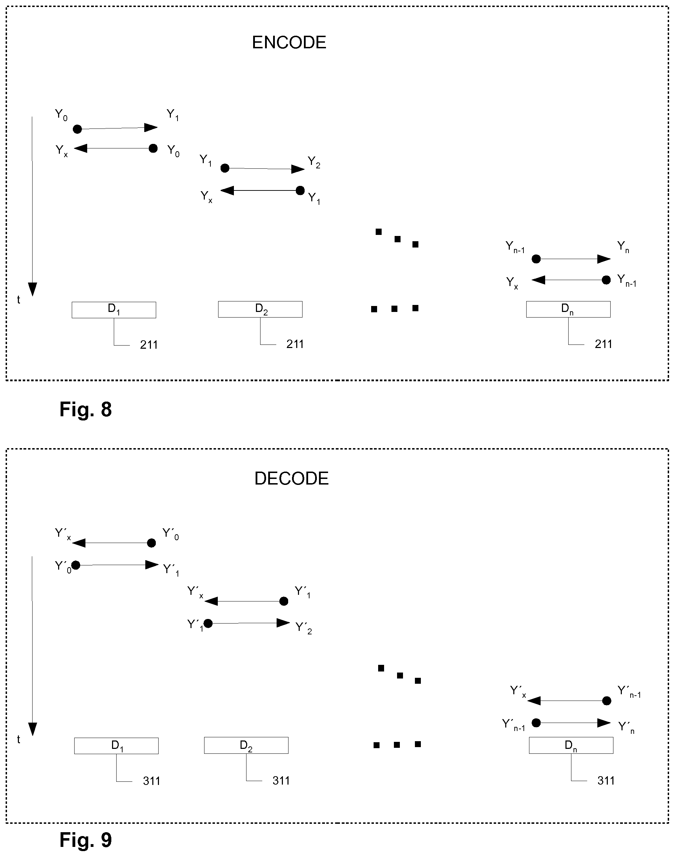

Eine Spezial-Transformationsvorschrift h unterscheidet sich nicht prinzipiell von einer Grund-Transformationsvorschrift. Der Unterschied liegt nur darin, dass diese, sofern ihre Anwendung vorgesehen ist, zusätzlich zu den normalen Grund-Transformationsvorschriften angewendet werden kann. Ihre Anwendung wird durch bestimmte Ereignisse ein und ausgeschaltet. So ein Ereignisse kann zum Beispiel der Wechsel zu einer Vorwärts- oder Rückwärtsbewegung der Kodierung **(siehe Fig. 6, Fig. 8)** sein, oder der Begin der Verarbeitung eines neuen Blockes **(siehe Fig. 4, Fig. 7)** sein. Es kann auch vorgesehen sein, dass die Spezial-Transformationsvorschrift h nur eine beschränkte Anzahl oft modifiziert wird.

Die Abänderung der Spezial-Transformationsvorschrift erfolgt nach Kodierung jedes oder nur bei eines Teiles der zu verschlüsselnden Bytes und kann nach einer Anzahl von Abänderungen überhaupt unterbleiben. Die Spezial-Transformationsvorschrift h bildet einen Teil des inneren Zustandes Y der Transformationseinheit .

Der Zufallszahlengenerator 212 und die Transformationseinheit 213 bieten die Möglichkeit, ihren jeweiligen momentanen inneren Zustand Y abspeichern und auszugeben und diesen zu einem beliebigen späteren Zeitpunkt auf Kommando von außen wiederherzustellen oder zu laden. Mehrere solche innere Zustände können abgespeichert und wiederhergestellt werden.

Der innere Zustand des Zufallszahlengenerators 212 und der Transformationseinheit 213 kann durch von außen vorgegebene Werte modifiziert werden.

Beim **ersten Ausführungsbeispiel ("STREAM")** eines erfindungsgemäßen Verschlüsselungsverfahrens werden die folgenden Schritte mit der in in **Fig. 1** dargestellten Verschlüsselungsmaschine 200 vorgenommen.

In einem ersten Schritt wird die Verschlüsselungsmaschine 200 mit dem Passwort $W_0$ initialisiert. Hierbei werden sämtliche internen Speicher des Zufallszahlengenerators 212 sowie der Transformationseinheit 213 in einen durch das Passwort $W_0$ bestimmten Initialzustand $Y_0$ gebracht. Eine bevorzugte Art der Initialisierung ist später mit Bezug auf **Fig. 12** näher dargestellt.

In einem zweiten Schritt wird der Datenspeicher 211 mit Rohdaten befüllt. Diejenige Menge an Rohdaten $b_1$, ..., $b_N$, die gleichzeitig im Datenspeicher 211 zur Verfügung steht, wird auch als Block oder Datenblock D bezeichnet. Ein Datenzeiger i, mit dem jeweils ein Rohdaten-Byte $b_i$ aus dem Datenspeicher 211 ausgewählt wird, wird auf den ersten Speicherplatz des Datenspeichers 211 gesetzt.

Die folgenden Iterationsschritte $S_{21}...S_{29}$ werden für sämtliche Bytes des Datenspeichers 211, wie in **Fig. 2 und 3** dargestellt. ausgeführt. Der im Speicher 216 abgespeicherte Datenzeiger i zeigt dabei anfangs auf das erste Byte $b_1$ des zu verschlüsselnden Datenblocks D und wird nach Durchführung der Iterationsschritte $S_{21}...S_{29}$ so lange inkrementiert, bis er auf das letzte Byte $b_N$ des zu verschlüsselnden Datenblocks D zeigt.

In einem ersten Iterationsschritt $S_{21}$ wird das Byte des Datenblockes D des jeweiligen vom Wert des Datenzeigers i ausgewählten Speicherplatzes des Datenspeichers 211 in einen Rohdaten-Zwischenspeicher 214 als Rohdaten-Byte $b_i$ kopiert und der Transformationseinheit 213 zugeführt.

In einem zweiten Iterationsschritt $S_{22}$ wird eine Folge von Zufallszahlen $\mu_{i,1}$, ..., $\mu_{i,P}$ an die Transformationseinheit 213 übermittelt. Für jede Iteration werden separate Zufallszahlen $\mu_{i,1}$, ..., $\mu_{i,P}$ ermittelt.

Die Transformationseinheit 213 ermittelt im dritten Iterationsschritt $S_{23}$ die Transformationsvorschrift $g_i$ in Abhängigkeit von ihrem internen Zustand und den ermittelten Zufallszahlen $\mu_{i,1}$, ..., $\mu_{i,p}$.

Das verschlüsselte Byte $c_i$ wird durch Anwendung der Transformationsvorschrift $g_i$ auf das zu verschlüsselnde Byte $b_i$ in einem vierten Iterationsschritt $S_{24}$ gemäß $c_i = g_i(b_i)$ ermittelt. Im vorliegenden Fall wird die Transformationsvorschrift $g_i$ durch Zusammensetzung, wie vorstehend beschrieben ermittelt, wobei die Auswahl von T Vorschriften aus den A Grund-Transformationsvorschriften $f_1$, ..., $f_A$ für die Zusammensetzung aufgrund der angegebenen Zufallszahlen $\mu_{i,1}$, ..., $\mu_{i,p}$ erfolgt.

In einem fünften Iterationsschritt $S_{25}$ wird der Inhalt des jeweiligen vom Datenzeiger i ausgewählten Speicherplatz des Datenspeichers 211 mit dem verschlüsselten Byte $c_i$ überschrieben. Anschließend wird in einem sechsten Iterationsschritt $S_{26}$ das verschlüsselte Byte $c_i$ in einen eigenen Schlüsseldaten-Zwischenspeicher 217 als verschlüsseltes Byte $c_i$ geschrieben.

In einem siebenten Iterationsschritt $S_{27}$ werden das Rohdaten-Bytes $b_i$ und das verschlüsselte Byte $c_i$ an den Zufallszahlengenerator 212 und die Transformationseinheit 213 für die künftige Zustandsänderungen dieser übermittelt.

In einem achten Iterationsschritt $S_{28}$ werden weitere vom Zufallszahlengenerator 212 erzeugte Zufallszahlen $\rho_{i,1} ... \rho_{i,R}$ an den Zufallszahlengenerator 212 zurück und an die Transformationseinheit 213 für die künftige Zustandsänderungen übermittelt.

In einem neunten Iterationsschritt $S_{29}$ wird der innere Zustand des Zufallszahlengenerators 212 und der Transformationseinheit 213 mit Hilfe der in den Iterationsschritten $S_{27}$ und $S_{28}$ übermittelten Bytes bzw Zufallszahlen abgeändert.

Insgesamt ist es beim Verschlüsseln möglich aber nicht zwingend erforderlich, bei der Durchführung des neunten Iterationsschritts $S_{29}$ auch die Grund-Transformationsvorschriften $f_1$, ..., $f_A$ zu ändern, beispielsweise kann bei jeder Durchführung des neunten Iterationsschritts $S_{29}$ jeweils eine der Grund-Transformationsvorschriften $f_x$ abgeändert werden, beispielsweise bei Grund-Transformationsvorschriften, die durch vollständige Aufzählung ihrer Funktionswerte vorgegeben wurden, durch Vertauschen zweier Funktionswerte, i.e. $f_x(b_y) \leftrightarrow f_x(b_z)$. Dadurch wird die Anzahl der möglichen Transformationsvorschriften von ca $10^{36}$ nochmals auf ca $10^{506}$ verschiedene Transformationsvorschriften vergrößert, und macht so eine unbefugte Entschlüsselung weniger wahrscheinlich.

Sofern vorgesehen, kann die Abänderung der Spezial-Transformationsvorschift h im Rahmen des neunten Iterationsschrittes $S_{29}$ vorgenommen werden.

Je nach Fortschritt der Verschlüsselung entstehen bei der Transformationseinheit 213 sowie beim Zufallszahlengenerator 212 in Abhängigkeit von sowohl den bisherig verarbeiteten Rohdatenbytes $b_i$, den verschlüsselten Bytes $c_i$ und den vom Zufallszahlengenerator 12 gelieferten Zufallszahlen $\rho_{i,1}$ ... $\rho_{i,R}$ unterschiedliche, innere Zustände.

Die Auswahl der Transformationsvorschrift $g_i$ ist daher sowohl direkt abhängig von dem inneren Zustand der Transformationseinheit 213 zum Zeitpunkt der Verschlüsselung des Rohdatenbytes $b_i$ als auch indirekt durch die von dem Zufallszahlengenerator 212 zum gleichen Zeitpunkt bereitgestellten Zufallszahlen $\rho_{i,1}$ ... $\rho_{i,R}$, $\mu_{i,1}$, ..., $\mu_{i,P}$, die wiederum auch von dem inneren Zustand des Zufallszahlengenerators 212 in Abhängigkeit von den bis dahin verarbeiteten Rohdatenbytes und verschlüsselten Bytes unterschiedlich erzeugt werden.

Die Auswahl der Transformationsvorschrift $g_i$ ist daher abhängig von den Werten und der Reihenfolge aller $b_1$ bis $b_{i-1}$. Nach der Verschlüsselung wird der Wert des Zeigers i inkrementiert.

Nachdem die im Datenspeicher 211 abgelegten Rohdaten-Bytes $b_1$, ... $b_N$ allesamt verschlüsselt sind, können diese für die weitere Verwendung, insbesondere für die Übertragung an einen Empfänger, zur Verfügung gehalten werden. Nach der allfälligen weiteren Verarbeitung der Daten im Datenspeicher 211 wird dieser eventuell mit weiteren zu verschlüsselnden Daten wieder aufgefüllt, die analog wie oben verschlüsselt werden.

Es besteht die Möglichkeit, den Datenspeicher 211 vor der Verarbeitung mit pseudo und/oder echten Zufallsdaten zu ergänzen bzw zu erweitern.

Der innere Zustand sowohl des Zufallszahlengenerators 212 als auch der Transformationseinheit 213 ist am Beginn der neuerlichen Verarbeitung von weiteren Daten im Datenspeichers 211 gleich wie am Ende der vorherigen Verarbeitung der Daten des Datenspeichers 211.

Ein Vorgehen gemäß einem **zweiten Ausführungsbeispiel ("BLOCK"),** dargestellt in **Fig. 4 und 5,** der Erfindung zeigt eine Verbesserung, mit der die Abhängigkeiten der einzelnen Bytes $c_1$, ... $c_N$ der verschlüsselten Datenfolge von den Bytes $b_1$, ... $b_N$ der Rohdaten-Datenfolge erhöht wird. Bei diesem Vorgehen wird das vorstehend dargestellte Verfahren gemäß dem ersten Ausführungsbeispiel der Erfindung verwendet. Die für die Durchführung des Verschlüsselungsverfahrens verwendete Verschlüsselungsmaschine entspricht der Verschlüsselungsmaschine 200 des ersten Ausführungsbeispiels, das in **Fig. 1** näher dargestellt ist, wobei die Unterschiede im Folgenden näher erläutert werden.

Vor dem Beginn der Iterationsschritte $S_{21}...S_{29}$ wird in einem Vorbereitungsschritt $S_{20,A}$ der gesamte innere Zustand der Verschlüsselungsmaschine 200, d.h. der innere Zustand des Zufallszahlengenerators 212, sowie gegebenenfalls der innere Zustand der Transformationseinheit 213, in einem Zustandsspeicher abgespeichert. Dieser Zustand wird als Initialzustand $Y_0$ bezeichnet. Anschließend wird die Verschlüsselung vom ersten bis zum letzten Byte gemäß den Iterationsschritten $S_{21}$ bis $S_{29}$ durchgeführt. Nach der Verschlüsselung des gesamten Blocks, d.h. aller im Datenspeicher 211 befindlichen Rohdaten $b_1...b_N$, wird in einem Rücksetzschritt $S_{20,M}$ der Zufallszahlengenerator 212 sowie gegebenenfalls die Transformationseinheit 213 auf ihren jeweiligen Initialzustand $Y_0$ zurückgesetzt.

Daran anschließend wird eine Verschlüsselung gemäß den vorstehend beschriebenen Iterationsschritten $S_{21}...S_{29}$ erneut durchgeführt, wobei der Wert des Datenzeigers i anfangs auf die letzte Position N des Datenspeichers 211 zeigt und entgegen der zuvor durchlaufenen Richtung geführt wird, d.h. in diesem Fall dekrementiert wird, und dadurch die einzelnen Bytes des Datenspeichers 211 in umgekehrter Reihenfolge behandelt werden.

Anschließend werden die Daten in einem Ausleseschritt $S_{20,Z}$ aus dem Speicher gelesen und gegebenenfalls durch einen neuen Datenblock ersetzt.

Aufgrund dieses Vorgehens ist gewährleistet, dass der Wert jedes verschlüsselten Bytes $c_i$ vom Wert und Position sämtlicher Rohdaten-Bytes $b_i$ abhängig ist und eine Änderung eines beliebigen Rohdaten-Bytes $b_i$ Auswirkungen auf die Verschlüsselung aller anderen Bytes des Datenspeichers 211 hat. Jedes zu verschlüsselnde Rohdaten-Byte $b_i$ wird mit dem Vorgehen darüber hinaus zweifach verschlüsselt.

Die Verschlüsselung der im Datenspeicher 211 befindlichen Rohdaten kann gegebenenfalls auch mehrfach, wie in **Fig. 6** dargestellt, vorgenommen werden, wobei jeweils abwechselnd in der vorgegebenen Datenrichtung und anschließend entgegen der vorgegebenen Datenrichtung verschlüsselt wird. In einem solchen Fall wird die Verschlüsselungsmaschine 200 jeweils nach jedem Verschlüsselungsdurchlauf, d.h. nachdem das letzte Byte $b_1$ oder $b_N$ in oder entgegen der Datenrichtung verschlüsselt wurde, in den vorab abgespeicherten inneren Zustand $Y_0$ gesetzt.

Nach der oben beschriebenen Verarbeitung der Daten des Datenspeichers 211 und einer allfälligen weiteren Verwendung der Daten, werden der Zufallszahlengenerator 212 und die Transformationseinheit 213 wieder in den

jeweiligen Initialzustand $Y_0$ gesetzt. Weitere eventuell verbliebene Rohdaten werden in den Datenspeicher 211 übertragen und die Verarbeitung mit den neuen Rohdaten beginnt von neuem. Es besteht die Möglichkeit, den Datenspeicher 211 vor der Verarbeitung mit Zufallsdaten zu ergänzen bzw zu erweitern.

Bei einem **dritten Ausführungsbeispiel ("CHAINED-BLOCK")** der Erfindung, dargestellt in **Fig. 7 und 8,** wird der Datenspeicher 211 bei der Verarbeitung der erstmals geladenen Daten wie bei dem zweiten Ausführungsbeispiel verarbeitet. Die Verarbeitung von verbliebenen und neu in den Datenspeicher 211 geladenen Daten unterscheidet sich von der Verarbeitung gemäß dem zweiten Ausführungsbeispiel dadurch, dass für den Zufallszahlengenerator 212 und die Transformationseinheit 213 die jeweiligen Initialzustände in den Verarbeitungsschritten $S_{20,B}$, $S_{20,C}$, $S_{20,Y}$ unterschiedlich zu dem zweiten Ausführungsbeispiel festgelegt werden. Bei diesen neuen Initialzuständen handelt es sich jeweils um die bei der vorhergehenden Verarbeitung von Daten erreichten inneren Zustände $Y_1$, $Y_2$,... der Verschlüsselungsmaschine 200.

Diese neuen Initialzustände $Y_1$, $Y_2$.... (**Fig. 8**) sind die inneren Zustände von Zufallszahlengenerator 212 und Transformationseinheit 213 nach Verarbeitung des Bytes an der letzten Stelle N im Datenspeicher 211 bei einer der Vorwärtsverarbeitungen der vorhergehenden Daten. Alternativ dazu kann auch der innere Zustand nach Verarbeitung des Bytes, an der Stelle 1 im Datenspeicher 211 bei einer der Rückwärtsverarbeitungen dafür verwendet werden.

Für eine Echtzeit-Datenübertragung weisen der Datenspeicher 211 und die Datenblöcke nur eine sehr geringe Anzahl von Rohdaten-Bytes $b_i$, eventuell sogar nur ein einziges Rohdaten-Byte, auf. Eine Verschlüsselung erfolgt byteweise, wobei nach der Verschlüsselung eines Datenblocks D - und damit des gesamten Datenspeichers 211 - ein neuer Datenblock D in den Datenspeicher 211 geladen wird. Eine solche Vorgehensweise eignet sich besonders gut zur laufenden Verschlüsselung von Daten, die als Datenstrom vorliegen und die gleichsam in Echtzeit weitergeleitet werden. Allenfalls besteht auch die Möglichkeit, wie für das zweite Ausführungsbeispiel beschrieben, den Datenstrom in sehr kleine Blöcke D mit nur wenigen, insbesondere weniger als 10 Bytes zu unterteilen und diese Blöcke gemäß dem zweiten oder dritten Ausführungsbeispiel der Erfindung zu verschlüsseln und als Block-Datenstrom zu übertragen. Sofern die Anzahl der Bytes pro Datenblock gering gehalten werden kann, kann die Verschlüsselung auch zur Echtzeit-Datenübertragung verwendet werden. Hierbei ermöglicht es die Erfindung durch Auswahl der Größe der Datenblöcke, eine Abwägung zwischen Echtzeitfähigkeit bzw. Verzögerung und Sicherheit zu treffen.

### Zufallzahlensgenerator und Auswahleinheit

Grundsätzlich können für die Erfindung sehr unterschiedliche deterministische Zufallszahlengeneratoren 212 verwendet werden. Eine Verbesserung der Erfindung, die für alle vorstehend dargestellten Ausführungsbeispiele der Erfindung verwendet werden kann, verwendet einen in **Fig. 10** dargestellten optimierten Zufallszahlengenerator 212 mit einer Auswahleinheit 230.

Im vorliegenden Fall ist der Zufallszahlengenerator 212 aus einer Anzahl Z von einfachen, deterministischen Teil-Zufallszahlengeneratoren 233-1 bis 233-Z zusammengesetzt, die - wie später noch beschrieben wird - abhängig vom inneren Zustand der Auswahleinheit 230 des Zufallszahlengenerartors 212 ausgewählt werden. Die Anzahl Z der Teil-Zufallszahlengeneratoren 233 ist vorab nicht vorgegeben und kann aufgrund eines Passwortes W bestimmt werden. Darüber hinaus ist es auch möglich, unterschiedliche Typen von Teil-Zufallszahlengeneratoren 233 vorab vorzugeben. Weiters kann auch vorgegeben werden, mit welcher Wahrscheinlichkeit die einzelnen Teil-Zufallszahlengeneratoren 233 aus den gegebenen Typen von Teil-Zufallszahlengeneratoren ausgewählt werden. Das Passwort W bestimmt dann mit Hilfe eines bereits vorhandenen Zufallszahlengenerators 212 die Anzahl Z der Teil-Zufallszahlengeneratoren 233, die Typen der Teil-Zufallszahlengeneratoren 232 und die Reihenfolge der Teilzufallszahlen 232 in der diese für den Aufbau des Zufallszahlengenerators 212 verwendet werden.

Die Initialisierung der Teil-Zufallszahlengeneratoren 233 erfolgt ebenso durch das Passwort W im Zusammenhang mit dem vorgegebenem Zufallszahlengenerator und wird später näher dargestellt.

Der Zufallszahlengenerator 212 weist eine Auswahleinheit 230 auf. Die Auswahleinheit 230 des Zufallszahlengenerators 212 dient zur Auswahl eines der Teil-Zufallszahlengeneratoren 233-1 bis 233-Z. Dessen Werte werden dann am Ausgang des Zufallszahlengenerators 212 bereitgehalten. Die Auswahleinheit 230 verfügt über eine Anzahl H von Auswahlregistern 231-1...231-H mit jeweils einer vorgegebenen Anzahl Z von Einzelregistern. Die Gesamtheit der Einzelregister eines Auswahlregisters 231-1...231-H enthält eine Permutation der Zahlen 1 bis Z.

Dem ersten der Auswahlregister 231-1 ist eine erste Adressiereinheit 232-1 vorgeschaltet, die einen ersten Zeiger $k_1$ enthält. Dieser erste Zeiger $k_1$ wird nach jeder Auswahl automatisch zyklisch inkrementiert oder dekrementiert. Der erste Zeiger $k_1$ bezeichnet bzw. referenziert eine Speicherposition im ersten Auswahlregister 231-1.

In einem weiteren Schritt wird die an der vom ersten Zeiger $k_1$ ausgewählte Speicherposition im ersten Auswahlregister 231-1 befindliche Zahl $\theta_1$ ermittelt. Diese Zahl $\theta_1$ wird in eine zweite Adressiereinheit 232-2 als zweiter Zeiger $k_2$ eingetragen oder zu diesem zweiten Zeiger $k_2$ hinzugezählt oder der zweite Zeiger $k_2$ wird durch eine sonstige Operation auf Grundlage der Zahl $\theta_1$ und seinem vorherigen Wert ermittelt. Der Wert des zweiten Zeigers $k_2$, der stets im Bereich von 1 bis Z liegt, wird zur Adressierung einer Speicherposition $k_2$ im zweiten Auswahlregister 231-2 herangezogen.

Je ein Auswahlregister 231 und je eine Auswahleinheit 232 werden jeweils zu einer Auswahlstufe 230-1...230-H zusammengefasst. Analog zur Auswahlstufe 230-1 werden auch die folgenden Auswahlstufen bis zur Auswahlstufe 230-H durchlaufen. Der Registerwert $\theta_H$ der letzten Auswahlstufe 230-H wählt dann den Teil-Zufallszahlengenerator 233-$\theta_H$ aus.

Grundsätzlich kann eine große Anzahl an Auswahlstufen 230-1...230-H in der Auswahleinheit 230 vorgesehen werden, wobei eine größere Anzahl von Auswahlstufen 230-1...230-H zu einer stärkeren Ressourcenbelastung führt und letztlich in einer erhöhten Datensicherheit resultiert, jedoch die Ausführungszeit der Verschlüsselung erhöht. Durch die Auswahl der Anzahl der Auswahlstufen 230-1...230-H kann somit eine Abwägung zwischen der Rechenleistung und Datensicherheit getroffen werden.

Im vorliegenden Fall sind insgesamt zehn H=10 Auswahlstufen 230-1...230-H vorgesehen. Für die Auswahlregister 231 und Adressiereinheiten 232 wird jeweils die an der vom jeweiligen Zeiger $k_1...k_H$ in der Adressiereinheit 231 ausgewählten Speicherposition im jeweiligen Auswahlregister 231 befindliche Zahl ermittelt und in den jeweils nächsten Zeiger k in der nächsten Adressiereinheit 231 eingetragen oder zu diesem hinzugezählt oder durch eine sonstige Operation mit den vorherigen Wert ermittelt. Der Wert des jeweils nächsten Zeigers k , dieser liegt stets im Bereich von 1 bis Z, wird zur Adressierung einer Speicherposition im jeweils nächsten Auswahlregister 231 herangezogen. Der vom jeweiligen Zeiger adressierte Wert $\theta_H$ des letzten Auswahlregisters 231-H wird zur Auswahl eines der Teil-Zufallszahlengeneratoren 233-1...233-Z herangezogen.

Die einzelnen Teil-Zufallszahlengeneratoren 233-1 ... 233-Z haben einen gemeinsamen inneren Zustand, wobei im Normalfall jeder der Teil-Zufallszahlengeneratoren 233-1 ... 233-Z jeweils über einen ihm zugewiesenen Teilbereich des inneren Zustandes verfügt. Es ist auch möglich, dass einzelne der Teil-Zufallszahlengeneratoren 233-1...233-Z auf die Teilbereiche der übrigen Teil-Zufallszahlengeneratoren 233-1...233-Z Lesezugriff oder gegebenenfalls auch Schreibzugriff haben.

In **Fig. 10a** ist eine alternative Ausführungsform eines Zufallszahlengenerators für eine Verschlüsselungsmaschine dargestellt. Im Folgenden werden lediglich die Unterschiede zwischen dem Zufallsgenerator der **Fig. 10** und zu dem Zufallsgenerator der **Fig. 10a** dargestellt.

Der in **Fig. 10a** dargestellte Zufallszahlengenerator umfasst weitere Register $\eta_1, ..., \eta_H$, wobei jeder Stufe jeweils ein solches weiteres Register $\eta$ zugeordnet ist. Diese weiteren Register $\eta$ können im Rahmen der noch zu beschreibenden Aktualisierung zwischen einzelnen Verschlüsselungsvorgängen abgeändert und von außen beschrieben werden, insbesondere in Abhängigkeit von den erstellten Zufallszahlen und Verschlüsselungsergebnissen. Im Zuge der Auswahl des jeweiligen Zufallszahlengenerators bleibt der Inhalt der Register $\eta_1, ..., \eta_H$ unverändert. Der Wert $\theta$ des jeweiligen Auswahlregisters 231 der jeweils vorangehenden Stufe 230 und der Wert des jeweiligen weiteren Registers werden einer Rechenoperation **Z** zugeführt und hieraus der Zeigerwert ermittelt, der für den Zugriff auf das Auswahlregister 231 der jeweiligen Stufe verwendet wird.

Zur Bestimmung des jeweiligen Werts $\theta_0$ für die erste Auswahlstufe 230-1 wird ein erster Zeiger $\theta_0$ herangezogen, der nach jeder Auswahl automatisch zyklisch inkrementiert oder dekrementiert wird und dessen Ergebnis der Rechenoperation **Z** zugeführt wird.

Eine Aktualisierung der Auswahleinheit kann bei der in **Fig. 10a** dargestellten Ausführungsform der Erfindung beinhalten, dass lediglich jeweils eines der Register $\eta_1, ..., \eta_H$ nach einer oder nach einer Anzahl von vorgenommenen Bildungen von Zufallszahlen abgeändert wird. Das zu modifizierende Register $\eta$ wird vorteilhafterweise jeweils nach einer oder einer Anzahl von Zufallszahlenanfragen zyklisch gewechselt.

Bei allen Ausführungsformen kann vorgesehen sein, dass nicht alle erstellten Zufallszahlen für die Verschlüsselung herangezogen werden, sondern dass die Möglichkeit besteht, abhängig vom Wert eines vorgegebenen Registers, insbesondere zwischen 0 und 5, jeweils eine Anzahl von Zufallszahlen zu verwerfen. Der Wert des Registers kann auch in Abhängigkeit der verschlüsselten Werte und/oder der entschlüsselten Werte und/oder der bereits ermittelten Zufallszahlen abgeändert werden.

**Transformationseinheit**

Eine analog zu 230 aufgebaute Auswahleinheit 220 dient zur Auswahl einer Grundtransformation f aus den gegebenen Grundtransformationen $f_1$ bis $f_A$.

**Fig. 11** zeigt die Auswahleinheit 220 zur Auswahl von Grundtransformationsvorschriften f. Für die Zusammensetzung der Transformationsvorschrift g ist eine Anzahl von A Grund-Transformationsvorschrift $f_1...f_A$ vorgegeben, die - wie später noch beschrieben wird - abhängig vom inneren Zustand des Zufallszahlengenerators 212 gebildet und ausgewählt werden. Die Anzahl der Grund-Transformationsvorschrift $f_1...f_A$ sowie deren Inhalt kann aufgrund des Passwortes $W_0$ bestimmt werden. Darüber hinaus ist es auch möglich, unterschiedliche Typen von Grund-Transformationsvorschriften $f_1...f_A$ vorab vorzugeben.

Die Transformationseinheit 213 weist eine Auswahleinheit 220 auf. Die Auswahleinheit 220 dient zur Auswahl einer der Grund-Transformationsvorschriften $f_1...f_A$. Die Auswahleinheit 220 der Transformationseinheit 213 wird in **Fig. 11** näher dargestellt. Sie verfügt über eine Anzahl G von Auswahlregistern 221-1...221-G mit jeweils einer vorgegebenen Anzahl A von Einzelregistern. Die Gesamtheit der Einzelregister eines Auswahlregisters 221-1...221-G enthält eine Permutation der Zahlen 1 bis A.

Dem ersten der Auswahlregister 221-1 ist eine erste Adressiereinheit 222-1 vorgeschaltet, die einen ersten Zeiger $j_1$ enthält. Dieser erste Zeiger $j_1$ wird nach jeder Auswahl automatisch inkrementiert oder dekrementiert. Der erste Zeiger $j_1$ bezeichnet bzw. referenziert eine Speicherposition im ersten Auswahlregister 221-1.

In einem weiteren Schritt wird die an der vom ersten Zeiger $j_1$ ausgewählten Speicherposition im ersten Auswahlregister 221-1 befindliche Zahl $\Phi_1$ ermittelt. Diese Zahl $\Phi_1$ wird in eine zweite Adressiereinheit 222-2 als zweiter Zeiger $j_2$ eingetragen oder zu diesem zweiten Zeiger $j_2$ hinzugezählt oder der zweite Zeiger $j_2$ wird durch eine sonstige Operation auf Grundlage der Zahl $\Phi_1$ und seinem vorherigen Wert ermittelt. Der Wert des zweiten Zeigers $j_2$, der stets im Bereich von 1 bis A liegt, wird zur Adressierung einer Speicherposition $j_2$ im zweiten Auswahlregister 221-2 herangezogen. Analog zur Auswahleinheit des Zufallszahlengenerators werden auch hier je ein Auswahlregister 221 und je eine Auswahleinheit 222 jeweils zu einer Auswahlstufe 220-1...220-G zusammengefasst. Analog zur Auswahlstufe 220-1 werden auch die folgenden Auswahlstufen bis zur Auswahlstufe 220-G durchlaufen. Der Registerwert $\Phi_G$ der letzten Auswahlstufe 220-G wählt dann die Grundtransformation $\Phi_G$ aus.

Grundsätzlich kann eine große Anzahl an Auswahlstufen in der Auswahleinheit 220 vorgesehen werden, wobei eine größere Anzahl von Auswahlstufen 220-1...220-G zu einer stärkeren Ressourcenbelastung führt und letztlich in einer erhöhten Datensicherheit resultiert, jedoch die Ausführungszeit der Verschlüsselung erhöht. Durch die Auswahl der Anzahl G der Auswahlstufen 220-1...220-G kann somit eine Abwägung zwischen der Rechenleistung und Datensicherheit getroffen werden.

Im vorliegenden Fall sind insgesamt zehn G=10 Auswahlstufen 220-1...220-G vorgesehen. Für die Auswahlregister 221 und Adressiereinheiten 222 wird jeweils die an der vom jeweiligen Zeiger $j_1...j_G$ in der Adressiereinheit 221 ausgewählten Speicherposition im jeweiligen Auswahlregister 221 befindliche Zahl ermittelt und in den jeweils nächsten Zeiger j in der nächsten Adressiereinheit 221 eingetragen oder zu diesem hinzugezählt oder durch eine sonstige arithmetische Operation ermittelt. Der Wert des jeweils nächsten Zeigers j wird zur Adressierung einer Speicherposition im jeweils nächsten Auswahlregister 221 herangezogen. Der vom jeweiligen Zeiger adressierte Wert $\Phi_G$ des letzten Auswahlregisters 221-G wird zur Auswahl einer Grund-Transformationsvorschrift $f_1...f_A$ herangezogen. Die Länge des Auswahlregisters 221 entspricht normalerweise der Anzahl der verwendeten Grund-Transformationsvorschriften $f_1...f_A$.

Die Auswahleinheit 220, 230 des Zufallszahlengenerators 212 und der Transformationseinheit 213 sind sehr ähnlich aufgebaut. Die folgenden Verbesserungen werden für beide Auswahleinheiten 220, 230 gemeinsam beschrieben, können aber für jede der Auswahleinheiten 220, 230 separat vorgenommen werden.

Durch das vorstehend genannte Vorgehen wird lediglich eine Auswahl einer Grund-Transformationsvorschrift $f_1...f_A$ oder des Teil-Zufallszahlengenerators 233-1...233-Z getätigt, die von den einzelnen zu verschlüsselnden Rohdaten-Bytes $b_i$ vollkommen unabhängig ist und daher eine leichtere Rekonstruktion ermöglicht.

Die vorliegende Verbesserung der Erfindung sieht nunmehr eine von der Aktualisierungseinheit vorgenommene Aktualisierung der Auswahleinheit 220, 230 vor, wobei abhängig vom jeweiligen zu verschlüsselnden Byte $b_i$ und/oder vom jeweils verschlüsselten Byte $c_i$ und/oder von bereitgestellten Zufallszahlen $\rho_1... \rho_R$ der Wert eines der Zeiger $j_1...j_G$, $k_1...k_H$ in den Adressiereinheiten 222, 232 abgeändert wird. Hierbei wird der Zahlenwert der Adressiereinheit 222, 232 durch eine arithmetische Funktion aus dem alten Zahlenwert der Adressiereinheit 222, 232 und einem externen, über einen Eingang 224, 234 zur Verfügung gestellten Wert, z.B. dem Zahlenwert $b_i$ des unverschlüsselten Bytes, dem Zahlenwert $c_i$ des verschlüsselten Bytes oder den bereitgestellten Zufallszahlen $\rho_i$, neu berechnet. Sofern der sich daraus ergebende Wert die Länge des Auswahlregisters 221, 231 übersteigt, wird diese Länge entsprechend oft vom Zeigerwert abgezogen, dass der Zeiger j, k zwischen 1 und A bzw. Z liegt. Bei jedem Verschlüsselungsschritt wird jeweils der nächste Zeiger j, k abgeändert und für den Fall, dass im vorherigen Schritt der letzte G-te oder H-te Zeiger abgeändert wurde wird im nächsten Schritt wiederum der erste Zeiger j, k abgeändert.

Alternativ oder zusätzlich ist es möglich, dass abhängig vom jeweiligen zu verschlüsselnden Byte $b_i$ und/oder vom jeweils verschlüsselten Byte $c_i$ und/oder von bereitgestellten Zufallszahlen $\rho$ zwei Einzelregister eines der Auswahlregister 221, 231 abgeändert werden und zwar durch Vertauschung der in ihnen enthaltenen Werte. Die Auswahl dieser zwei Einzelregister ist auch abhängig von der Anzahl der bereits in diesem Auswahlregister 221, 231 durchgeführten Vertauschungen. Bei jedem Verschlüsselungsschritt wird eine Anzahl von Vertauschung durchgeführt. Nachdem eine bestimmte Anzahl von Vertauschungen in einem Auswahlregister 221, 231 durchgeführt wurden, wird dann zum nächsten Auswahlregister 221, 231 gewechselt. Für den Fall, dass im vorherigen Schritt das letzte Auswahlregister 221, 231 abgeändert wurde, wird dann wieder zum ersten Auswahlregister 221, 231 gewechselt.

Zur Auswahl einer Mehrzahl von Grund-Transformationsvorschriften $f_1, ..., f_A$ oder einer Mehrzahl von Teil-Zufallszahlengeneratoren 233-1...233-Z wird jeweils der erste Zeiger $j_1, k_1$ nach vorgegebenen Kriterien abgeändert, insbesondere erhöht, verringert, inkrementiert oder dekrementiert, und die vorstehend genannten Schritte zur Adressierung der einzelnen Auswahlregister 221, 231 erneut durchgeführt, wobei jeweils diejenige Grund-Transformations-

vorschrift $f_1$, ..., $f_A$ für die Bildung der Transformationsvorschriften oder die Zufallszahl desjenigen Teil-Zufallszahlengenerators 233 herangezogen wird, deren Ordnungszahl dem Zahlenwert des im letzten Auswahlregister 221-G, 231-H referenzierten Wertes entspricht. Die Anzahl der Einzelregister eines Auswahlregisters 221, 231 entspricht der Anzahl A der zur Verfügung stehenden Grund-Transformationsvorschriften $f_1$, ..., $f_A$ bzw. der Anzahl Z der zur Verfügung stehenden Teil-Zufallszahlengeneratoren 233.

Bevorzugt besteht auch die Möglichkeit, dass der Auswahleinheit 230 des Zufallszahlengenerators 212 oder der Auswahleinheit 220 der Transformationseinheit 213 jeweils weitere vom Zufallszahlengenerator 212 erstellte Zufallszahlen $\rho$ zugeführt werden und dass mittels dieser Zufallszahlen $\rho$ die Werte der jeweiligen Auswahlregister 221, 231 neu gesetzt bzw. modifiziert oder die Zeiger in den Adressiereinheiten 222, 232 überschrieben bzw. Modifiziert werden.

Bei der Ermittlung von Zufallszahlen $\rho$ durch den Zufallszahlengenerator 212 kann eine vorab festgelegte Anzahl von diesem erstellten Zufallszahlen herangezogen werden.

Mit einer solchen Auswahleinheit 220, 230 wird es vermieden, dass eine in einem Schritt vorgenommene Zustandsänderung durch eine in einem noch folgenden Schritt vorgenommene Zustandsänderung rückgängig gemacht wird.

Auch wird vermieden, dass Klartexte, die einander sehr ähnlich sind und einander nur in wenigen Zeichen unterscheiden, sich der verschlüsselte Text auch nur in diesen wenigen Zeichen unterscheidet.

Je größer die Anzahl G, H der Auswahlstufen 220, 230 gewählt wird, desto geringer ist die Wahrscheinlichkeit für eine spätere Übereinstimmung des verschlüsselten Textes oder des inneren Zustandes.

Die einzelnen Auswahlregister 221, 231 werden im Zuge der Initialisierung der Transformationseinheit 213 und des Zufallszahlengenerators 212 auf Werte gesetzt, die vom Passwort W sowie von aus dem Passwort W abgeleiteten Daten abhängen. Auch der Wert der Adressiereinheiten 222, 232 wird bei der Initialisierung auf einen vom Passwort W abgeleiteten Wert gesetzt. Der Inhalt der Auswahlregister 221, 231 sowie der Adressiereinheiten 222, 232 zählt zum inneren Zustand des Zufallszahlengenerators 212 oder der Transformationseinheit 213 und somit zum inneren Zustand der Verschlüsselungsmaschine 200.

Die Initialisierung der Auswahleinheiten 220, 230 erfolgt separat, sodass die inneren Zustände des Zufallszahlengenerators 212 und der Transformationseinheit 213 unterschiedlich sind.

Auch ist der Inhalt der Auswahlregister 221, 231 und der Auswahlzeiger 222, 232 grundsätzlich unterschiedlich, d.h. die Auswahleinheiten 220, 230 greifen auf unterschiedliche innere Zustände zu, die jeweils einen Teil des inneren Zustandes der Verschlüsselungsmaschine bilden.

In **Fig. 11a** ist eine alternative Ausführungsform einer Auswahleinheit für eine Verschlüsselungsmaschine dargestellt. Im Folgenden werden lediglich die Unterschiede zwischen der Auswahleinheit der **Fig. 11** und zu der Auswahleinheit der **Fig. 11a** dargestellt.

Die in **Fig. 11a** dargestellte Auswahleinheit umfasst weitere Register $\delta_1$, ..., $\delta_G$, wobei jeder Stufe jeweils ein solches weiteres Register $\delta$ zugeordnet ist. Diese weiteren Register $\delta$ können im Rahmen der noch zu beschreibenden Aktualisierung zwischen einzelnen Verschlüsselungsvorgängen abgeändert und von außen beschrieben werden, insbesondere in Abhängigkeit von den ausgewählten Grundtransformation und Verschlüsselungsergebnissen. Im Zuge der Auswahl der jeweiligen Grundtransformation bleibt der Inhalt der Register $\delta_1$, ..., $\delta_G$ unverändert. Der Wert $\Phi$ des jeweiligen Auswahlregisters 221 der jeweils vorangehenden Stufe 220 und der Wert des jeweiligen weiteren Registers $\delta$ werden einer Rechenoperation **A** zugeführt und hieraus der Zeigerwert ermittelt, der für den Zugriff auf das Auswahlregister 221 der jeweiligen Stufe verwendet wird.

Zur Bestimmung des jeweiligen Werts $\Phi_0$ für die erste Auswahlstufe 220-1 wird ein erster Zeiger $\Phi_0$ herangezogen, der nach jeder Auswahl automatisch zyklisch inkrementiert oder dekrementiert wird und dessen Ergebnis der Rechenoperation **A** zugeführt wird.

Eine Aktualisierung der Auswahleinheit kann bei der in Fig. 11a dargestellten Ausführungsform der Erfindung beinhalten, dass lediglich jeweils eines der Register $\delta_1$, ..., $\delta_G$ nach einer oder nach einer Anzahl von ausgewählten Grundtransformationen abgeändert wird. Das zu modifizierende Register $\delta$ wird vorteilhafterweise jeweils nach einer oder einer Anzahl von Abfragen nach Transformationsvorschriften gewechselt.

Auch die Grund-Transformationsvorschriften $f_1$, bis $f_A$ können während der Durchführung der Kodierung, insbesondere des Iterationsschrittes $S_{29}$, bzw. bei der Entschlüsselung können die inversen Grund-Transformationsvorschriften $f^{-1}_1$, bis $f^{-1}_A$ insbesondere beim Iterationsschritt $S_{39}$, in Abhängigkeit von $b_i$, $c_i$ und $\rho$ modifiziert werden.

Die Anzahl der möglicherweise verwendeten Transformationen g steigt dadurch auf $(2^8)! \sim 10^{506}$.

Dies sind alle möglichen Transformationen von 8-Bit Bytes. Durch diese Maßnahme wird ein unberechtigter Zugriff auf den Klartext ohne Kenntnis des Passwortes und des Klartextes nahezu ausgeschlossen. Durch diese Maßnahme wird die für den neunten Iterationsschritt $S_{29}$ bzw. bei der Entschlüsselung bei Iterationsschritt $S_{39}$ benötigte Zeit bedeutend länger.

Eine günstige Anwendung einer Spezial-Transformationsvorschrift h für die STREAM-Verarbeitung gemäß dem ersten Ausführungsbeispiel der Erfindung besteht darin, während der Verschlüsselung der ersten 256 Bytes die Spezial-Transformationsvorschrift h zu modifizieren und danach unverändert zu lassen. Aber dennoch für den Rest der Daten immer aktiv zu belassen.

Eine günstige Anwendung einer Spezial-Transformationsvorschrift h für die BLOCK Verarbeitung gemäß dem zweiten oder dritten Ausführungsbeispiel der Erfindung besteht darin, bei der ersten Vorwärts-Kodierung die Spezial-Transformationsvorschrift nicht anzuwenden und/oder nicht abzuändern und für die erste Rückwärts-Kodierung die Spezial-Transformationsvorschrift anzuwenden und/oder abzuändern aber eine Modifikation dieser nur für die ersten 256 Verschlüsselungen zu vorzunehmen.

Eine weitere günstige Anwendung einer Spezial-Transformationsvorschrift h für die BLOCK Verarbeitung gemäß dem zweiten oder dritten Ausführungsbeispiel der Erfindung besteht darin, die bei Kodierung des ersten Datenblockes erstellte Spezialtransformationsvorschrift h bei der Verarbeitung der folgenden Datenblocke unverändert während der Vorwärts- und/oder Rückwärts-Kodierung einzusetzen.

Bei der Entschlüsselung wird entsprechend die Inverse $h^{-1}$ der Spezial-Transformationsvorschrift h verwendet und gegebenenfalls auch entsprechend abgeändert.

**Initialisierung**

Im Folgenden wird unter Verweis auf die **Fig. 12** eine mögliche vorteilhafte Ausführungsvariante einer Initialisierung des Zufallszahlengenerators 212, einer Transformationseinheit 213 sowie der Verschlüsselungsmaschine 200 beschrieben, wobei die Initialisierung für sämtliche der vorstehend dargestellten Ausführungsbeispiele der Erfindung verwendet werden kann. Grundsätzlich wird die konkrete Art der Initialisierung der Verschlüsselungsmaschine 200 durch das bei der Verschlüsselung verwendete Passwort $W_0$ bestimmt. Das Passwort $W_0$ wird an eine Initialisierungseinheit übertragen, die die im Folgenden genannten Schritte durchführt.

In **Fig. 12** ist die Initialisierung der Verschlüsselungsmaschine 200 dargestellt. In einem ersten Schritt wird ein Start-Zufallszahlengenerator 212-UR verwendet, der vorab bekannt ist und im Prinzip allgemein bekannt gegeben werden kann.

Das Passwort $W_0$ wird vor der Verschlüsselung der Rohdaten vom Benutzer zur Verfügung gestellt. Als Passwort $W_0$ dient eine eine Anzahl von sequentiell angeordneten Bytes mit 8 Bits pro Byte. Um die Auswirkungen unterschiedlicher Passwörter $W_0$ mit identischem Beginn möglichst ausschließen zu können, wird dem jeweiligen Passwort jeweils seine Länge in Bytes vorangestellt. Alternativ oder zusätzlich kann dem Passwort $W_0$ auch eine Checksumme vorangestellt werden. Sofern die Länge des Passwortes $W_0$ einen vorgegebenen Wert unterschreitet wird das Passwort $W_0$ durch Wiederholung oder Hintereinanderreihung des Passwortes, auf die vorgegebene Länge verlängert und in einem Passwort-Erstellungsschritt S101 ein Start-Passwort $W_N$ erstellt.

Anschließend wird eine erste Verschlüsselungsmaschine 200a mit Werten initialisiert, die sich aus dem Start-Passwort $W_N$ und den Werten des Start-Zufallszahlengenerators 212-UR ergeben. Das Start-Passwort $W_N$ und die Werte des Start-Zufallszahlengenerators 212-UR werden einer Verknüpfungseinheit 219a in den Schritten S102a und S103a zugeführt. Das Initial-Passwort $W_N$ und die Zufallszahlen des Start-Zufallszahlengenerators 212-UR werden dort verknüpft, beispielsweise durch bitweise durchgeführte Exklusiven-Oder-Verknüpfung (XOR-Verknüpfung) entsprechender Bytes, die daraus resultierenden Werte werden zur Initialisierung der ersten Verschlüsselungsmaschine 200a, d.h. zur Festlegung ihres inneren Zustandes, insbesondere des inneren Zustandes ihrer Transformationseinheit 213a im Schritt S105a und ihres Zufallszahlengenerators 212a im Schritt S104a verwendet. Anschließend wird das Start-Passwort $W_N$ mittels der ersten Verschlüsselungsmaschine 200a in einem Verschlüsselungsschritt S106a verschlüsselt und man erhält ein erstes Passwort $W_a$.

Es wird eine zweite Verschlüsselungsmaschine 200b erstellt, indem das erste Passwort $W_a$ und Zufallszahlen, die mit den Zufallszahlengenerator 212a der ersten Verschlüsselungsmaschine 200a erstellt wurden, in den Schritten S102b und S103b an die Verknüpfungseinheit 219b übermittelt und von dieser verknüpft werden und die aus dieser Verknüpfung resultierenden Daten zur Festlegung des inneren Zustandes der zweiten Verschlüsselungsmaschine 200b in den Schritten S104b und S105b verwendet werden. Es wird ein zweites Passwort $W_b$ durch Verschlüsselung des ersten Passwortes $W_a$ mit der zweiten Verschlüsselungsmaschine 200b im Schritt S106b erstellt. Dieser Vorgang kann beliebig oft widerholt werden. Am Ende erhält man eine in **Fig. 12** unten dargestellte Verschlüsselungsmaschine 200.

**Wahl der Bits pro Byte**

Ganz allgemein kann anstelle des bei dem vorliegenden Ausführungsbeispiel verwendeten Datenspeichers 211 auch ein anderes Speicherlayout verwendet werden. Es ist dabei grundsätzlich möglich, auch Speicher mit einer abweichenden Anzahl von Bits pro Byte zu verwenden, um eine bessere Durchmischung der einzelnen Eingangsdaten zu erreichen. In diesem Fall werden die zu 8 Bit pro Byte vorliegenden Rohdaten bitweise in den Datenspeicher geschrieben, wobei die Zuordnung zwischen Bits und Bytes geändert wird.

**Erhöhung der Verarbeitungsgeschwindigkeit**

Es ist vorteilhaft, jedoch nicht zwingend erforderlich, dass die Transformationsvorschrift g für jedes zu verschlüsselnde Byte separat geändert wird. Es ist auch möglich, dass mehrere Bytes mit derselben Transformationsvorschrift g verschlüsselt werden und erst anschließend eine neue Transformationsvorschrift g bestimmt wird.

Es ist ebenso möglich, dass die beiden Auswahleinheiten 220, 230 nach der Auswahl einer Grund-Transformationsvorschrift f oder eines Teil-Zufallszahlengenerators 233 lediglich dadurch abgeändert werden, dass der Registerwert von 225, 235 geändert wird, jedoch sonst keine Änderungen vorgenommen werden. Um mehrfache Verschlüsselungen mit derselben Transformationsvorschrift g zu vermeiden, sollte die Anzahl der Inkrementierung des Auswahlzeigers 225 ohne extern verursachte Zustandsänderung durch Zufuhr externer Daten geringer sein als die Länge A der Auswahlregister 221.

Es ist ebenso möglich, dass die beiden Auswahleinheiten 230, 220 nach der Auswahl einer Grund-Transformationsvorschrift f oder eines Teil-Zufallszahlengenerators 233 lediglich dadurch abgeändert werden, dass der Auswahlzeiger 222-1,232-1 der ersten Auswahlstufe 220-1 bzw. 230-1 inkrementiert wird, jedoch sonst keine Änderungen vorgenommen werden. Um mehrfache Verschlüsselungen mit derselben Transformationsvorschrift g zu vermeiden, sollte die Anzahl der Inkrementierung des Auswahlzeigers 222 ohne extern verursachte Zustandsänderung durch Zufuhr externer Daten geringer sein als die Länge A der Auswahlregister 221.

Ein Verfahren, bei dem mehrere Bytes mit derselben Vorschrift verschlüsselt werden, ist eher anfällig für Angriffe als ein Verfahren, das jeweils eine eigene Transformationsvorschrift g für jedes Byte verwendet.

Ebenso braucht der Rückkopplungsmechanismus aus Zeitgründen nicht bei jedem Schritt durchgeführt werden. Es ist auch möglich, dass Rückkoppelung der Auswahleinheiten 220, 230 alternierend oder auch nicht synchron erfolgt. Auch kann die Rückkopplung zum Zufallszahlengenerator 212 oder zur Transformationseinheit 213 bei einigen Schritten entfallen. Dennoch ist in diesen Fällen die verwendete Transformationsvorschrift eine andere.

**Entschlüsselung**

Die Entschlüsselung wird im wesentlichen gleich wie die Verschlüsselung mit einer in **Fig. 13** gezeigten Entschlüsselungsmaschine 300 vorgenommen, wobei der innere Zustand der Transformationseinheit 313 und des Zufallszahlengenerators 312 mit dem inneren Zustand der Transformationseinheit 213 und des Zufallszahlengenerators 212 nach der Verarbeitung des jeweils i-ten Bytes bei der Verschlüsselung und bei der Entschlüsselung jeweils identisch sind, natürlich mit Ausnahme der Daten, die die inversen Grund-Transformationen $f^{-1}$ beschreiben und im Falle der dynamischen Änderung der (Grund-)Transformationsvorschriften werden allenfalls noch neben den Inversen der (Grund-)Transformationsvorschriften die jeweils geänderte, nicht invertierten (Grund-) Transformationsvorschriften zur Verfügung gehalten.

Gleiches gilt natürlich auch für die Spezial-Transformationsvorschrift h. Die Inverse h-1 der Spezial-Transformationsvorschrift h wird dynamisch während des Entschlüsselns modifiziert bzw. neu berechnet, und zwar zu den entsprechenden Zeitpunkten, bei denen beim Verschlüsseln die Spezial-Transformationsvorschrift h zu ändern ist. Auch der Aufbau der Verschlüsselungsmaschine 200 und der Entschlüsselungsmaschine 300 ist bis auf die im Folgenden dargestellten Unterschiede identisch. Die Entschlüsselungsmaschine 300 verfügt über einen Datenspeicher 311, einen Zufallszahlengenerator 312 und eine Transformationseinheit 313, wie in **Fig. 13** dargestellt.

Wie auch bei einer Verschlüsselung gemäß dem **ersten Ausführungsbeispiel ("STREAM")** der Erfindung erfolgt die Entschlüsselung (**Fig. 3**) derart, dass die einzelnen Bytes $c_1$, ..., $c_N$ des Datenspeichers 11 sequentiell vom Anfang bis zum Ende in Datenrichtung durchlaufen werden.

Anders als bei der Verschlüsselung werden anstelle der Transformationsvorschriften g und Grund-Transformationsvorschriften $f_1$, ..., $f_A$ die inversen Transformationsvorschriften $g^{-1}$ und inversen Grund-Transformationsvorschriften $f_1^{-1}$, ..., $f_A^{-1}$ verwendet. Sofern, wie eine Verbesserung der Erfindung vorschlägt, die Transformationsvorschriften aus Grund-Transformationsvorschriften $f_1$, ..., $f_A$ zusammengesetzt werden, reicht es aus, anstelle der Grund-Transformationsvorschriften $f_1$, ..., $f_A$ jeweils die inversen Grund-Transformationsvorschriften $f_1^{-1}$, ..., $f_A^{-1}$ abzuspeichern. Für den Fall, dass die Grund-Transformationsvorschriften $f_i$ oder die Spezial-Transformationsvorschrift h während der Verschlüsselung modifiziert werden, so werden für die Entschlüsselung zusätzlich zu den inversen Transformationsvorschriften $h^{-1}$, $f_1^{-1}$ ... $f_A^{-1}$ auch die ursprünglichen Transformationsvorschriften h, $f_1$ ... $f_A$ vorgehalten .

Will man die Inverse $g^{-1}$ einer aus mehreren Grund-Transformationsvorschriften $f_{\mu 1}$, $f_{\mu 2}$, ..., $f_{\mu p}$ zusammengesetzten Transformationsvorschrift g ermitteln, so sind die inversen Grund-Transformationsvorschriften $f_1^{-1}$, ..., $f_A^{-1}$| gegebenenfalls $h^{-1}$ in der umgekehrten Reihenfolge anzuwenden:

$$c = g(b) = h(f_{\mu 1}(f_{\mu 2}( \dots f_{\mu p}(b) \dots )))$$

$$b = g^{-1}(c) = f_p^{-1}(f_{\mu p-1}^{-1}( \ldots f_{\mu 1}^{-1}(h^{-1}(c)) \ldots ))$$

Um tatsächlich denselben inneren Zustand konsistent zu erhalten, werden jeweils die Rohdaten Bytes b und die verschlüsselten Bytes c und eventuelle Zufallszahlen in gleicher Weise verwendet, wie bei der Verschlüsselung, beispielsweise zur Abänderung des inneren Zustands der Auswahleinheiten 320, 330 des Zufallszahlengenerators 312 sowie der Transformationseinheit 313. Insbesondere werden die verschlüsselten und zu entschlüsselnden Bytes in einen hierfür vorgesehenen Datenspreicher 317 geschrieben, die entschlüsselten Bytes in einen hierfür vorgesehen Datenspeicher 314.

Die in **Fig. 13** dargestellte Entschlüsselungsmaschine wird in Bezug auf die Entschlüsselung gemäß dem ersten Ausführungsbeispiel der Erfindung dargestellt.

In einem ersten Schritt wird die Entschlüsselungsmaschine 300 mit dem Passwort W initialisiert. Hierbei werden sämtliche internen Speicher des Zufallszahlengenerators 312 sowie der Transformationseinheit 313 in einen durch ein Passwort W bestimmten Initialzustand $Y'_0$ gebracht. Die spezielle Initialisierung der Entschlüsselungsmaschine für die Entschlüsselungsmaschine wird später unter Bezugnahme auf **Fig. 16** näher beschrieben.

In einem zweiten Schritt wird der Datenspeicher 311 mit verschlüsselten Daten befüllt. Diejenige Menge an verschlüsselten Daten $c_1$, ..., $c_N$, die gleichzeitig im Datenspeicher 311 zur Verfügung steht, wird auch als Block oder Datenblock D bezeichnet. Ein Datenzeiger i, mit dem jeweils ein Byte $c_i$ aus dem Datenspeicher 211 ausgewählt wird, wird auf den ersten Speicherplatz des Datenspeichers 311 gesetzt.

Die folgenden Iterationsschritte werden für sämtliche Bytes des Datenspeichers 311 ausgeführt. Der im Speicher 316 abgespeicherte Datenzeiger i zeigt dabei anfangs auf das erste Byte $c_1$ des zu verschlüsselnden Datenblocks D und wird nach Durchführung der Iterationsschritte $S_{31}...S_{39}$ so lange inkrementiert, bis er auf das letzte Byte $b_N$ des zu verschlüsselnden Datenblocks D zeigt.

In einem ersten Iterationsschritt $S_{31}$ wird das Byte des Datenblockes D des jeweiligen vom Wert des Datenzeigers i ausgewählten Speicherplatz des Datenspeichers 311 in einen Schlüsseldaten-Zwischenspeicher 317 als Schlüsseldaten-Byte $c_i$ kopiert und der Transformationseinheit 313 zugeführt.

In einem zweiten Iterationsschritt $S_{32}$ wird eine Folge von Zufallszahlen $\mu_{i,1}$, ..., $\mu_{i,P}$ an die Transformationseinheit 313 übermittelt. Für jede Iteration werden separate Zufallszahlen $\mu_{i,1}$, ..., $\mu_{i,P}$ ermittelt. Diese Zufallszahlen sind identisch zu den Zufallszahlen $\mu_{i,1}$, ..., $\mu_{i,P}$ die im Iterationsschritt $S_{22}$ während der Verschlüsselung der Transformationseinheit 213 übermittelt wurden.

Die Transformationseinheit 313 ermittelt im dritten Iterationsschritt $S_{33}$ die Transformationsvorschrift $g_i^{-1}$ in Abhängigkeit von ihrem internen Zustand und den ermittelten Zufallszahlen $\mu_{i,1}$, ..., $\mu_{i,p}$.

Das verschlüsselte Byte $c_i$ wird durch Anwendung der Transformationsvorschrift $g_i^{-1}$ in einem vierten Iterationsschritt $S_{34}$ gemäß $b_i = g_i^{-1}(c_i)$ entschlüsselt, man erhält wiederum das Rohdaten-Byte $b_i$. Im vorliegenden Fall wird die Transformationsvorschrift $g_i$ durch Zusammensetzung, wie vorstehend beschrieben ermittelt, wobei die Auswahl von T Vorschriften aus den A Grund-Transformationsvorschriften $f_1^{-1}$, ..., $f_A^{-1}$ für die Zusammensetzung aufgrund der angegebenen Zufallszahlen $\mu_{i,1}$, ..., $\mu_{i,p}$ erfolgt.

In einem fünften Iterationsschritt $S_{35}$ wird der Inhalt des jeweiligen vom Datenzeiger i ausgewählten Speicherplatzes des Datenspeichers 311 mit dem entschlüsselten Byte $b_i$ überschrieben. Anschließend wird in einem sechsten Iterationsschritt $S_{36}$ das entschlüsselte Byte $b_i$ in einen eigenen Rohdaten-Zwischenspeicher 314 als Rohdaten-Byte $b_i$ geschrieben.

In einem siebenten Iterationsschritt $S_{37}$ werden das Rohdaten-Byte $b_i$ und das verschlüsselte Byte $c_i$ an den Zufallszahlengenerator 312 und die Transformationseinheit 313 für die künftige Zustandsänderungen dieser übermittelt.

In einem achten Iterationsschritt $S_{38}$ werden weitere vom Zufallszahlengenerator 312 erzeugte Zufallszahlen $\rho_{i,1} \ldots \rho_{i,R}$, diese Zufallszahlen sind identisch zu den Zufallszahlen $\rho_{i,1} \ldots \rho_{i,R}$ die im Iterationsschritt $S_{28}$ während der Verschlüsselung übermittelt wurden, an den Zufallszahlengenerator 312 zurück und an die Transformationseinheit 313 für die künftige Zustandsänderungen übermittelt.

In einem neunten Iterationsschritt $S_{39}$ wird der innere Zustand des Zufallszahlengenerators 312 und der Transformationseinheit 313 mit Hilfe der in den Iterationsschritten $S_{37}$ und $S_{38}$ übermittelten Bytes bzw Zufallszahlen abgeändert. Der innere Zustand des Zufallszahlengenerators 312 ist jetzt identisch zum inneren Zustand des Zufallszahlengenerators 212 nach der Bearbeitung des i-ten Datenbytes. Der innere Zustand der Transformationseinheit 313 ist jetzt gleich dem inneren Zustand der Transformationseinheit 213 nach der Bearbeitung des i-ten Datenbytes, natürlich mit Ausnahme der Daten, die die inversen Grund-Transformationen $f^{-1}$ beschreiben.

Werden die Grund-Transformationsvorschriften $f_i$ oder die Spezial-Transformationsvorschrift h nach der Verschlüsselung im Iterationsschritt $S_{29}$ modifiziert, so sind bei der Entschlüsselung ebenfalls die Inversen der Grund-Transformationsvorschriften $f^{-1}_i$ bzw die Inverse der Spezial-Transformationsvorschrift $h^{-1}$ analog abzuändern, sodass im Iterationsschritt $S_{39}$ jeweils die Inverse der abgewandelten Grund-Transformationsvorschriften $f_i$ bzw die Inverse der abgewandelten Spezial-Transformationsvorschrift h ermittelt und für den nächsten Entschlüsselungsschritt zur Verfügung steht.

Je nach Fortschritt der Verschlüsselung entstehen bei der Transformationseinheit 313 sowie beim Zufallszahlengenerator 312 in Abhängigkeit von sowohl den bisherig verarbeiteten entschlüsselten Bytes $b_i$, den verschlüsselten Bytes $c_i$ und den vom Zufallszahlengenerator 312 gelieferten Zufallszahlen $\rho_{i,1} \dots \rho_{i,R}$ unterschiedliche, innere Zustände.

Die Auswahl der Transformationsvorschrift $g_i$ bzw. von deren Inversen $g^{-1}$ ist daher sowohl direkt abhängig von dem inneren Zustand der Transformationseinheit 313 zum Zeitpunkt der Verschlüsselung des Rohdatenbytes $b_i$ als auch indirekt durch die von dem Zufallszahlengenerator 312 zum gleichen Zeitpunkt bereitgestellten Zufallszahlen $\rho_{i,1} \dots \rho_{i,R}, \mu_{i,1}, \dots, \mu_{i,P}$, die wiederum auch von dem inneren Zustand des Zufallszahlengenerators 312 in Abhängigkeit von den bis dahin verarbeiteten Rohdatenbytes und verschlüsselten Bytes erzeugt werden.

Die Auswahl der Transformationsvorschrift $g_i$ ist daher abhängig von den Werten und der Reihenfolge aller verschlüsselten Bytes $c_1,\dots c_{i-1}$ sowie der Bytes $b_1, \dots b_{i-1}$. Nach der Verschlüsselung wird der Wert des Zeigers i inkrementiert.

Nachdem die im Datenspeicher 311 abgelegten verschlüsselten Bytes $c_1, \dots c_N$ allesamt entschlüsselt sind, werden diese für die weitere Verwendung zur Verfügung gehalten. Nach der allfälligen weiteren Verarbeitung der Daten im Datenspeicher 311 wird dieser gemäß dem zweiten Schritt eventuell mit weiteren zu entschlüsselnden Daten wieder aufgefüllt, die analog wie oben verschlüsselt werden.

Der innere Zustand sowohl des Zufallszahlengenerators 312 als auch der Transformationseinheit 313 ist am Beginn der neuerlichen Verarbeitung von weiteren Daten im Datenspeichers 311 gleich wie am Ende der vorherigen Verarbeitung der Daten des Datenspeichers 311.

Bei der Entschlüsselung von nach dem **zweiten Ausführungsbeispiel ("BLOCK")** der Erfindung verschlüsselten Daten beginnt die Entschlüsselung in umgekehrter Abfolge der Daten (**Fig. 4, 5**). Die Entschlüsselungsmaschine 300 wird in den Initialzustand $Y'_0$ versetzt. Der Initialzustand $Y'_0$ unterscheidet sich vom Initialzustand $Y_0$ nur durch die Daten, die die inversen Grund-Transformationen $f^{-1}$ an Stelle der Grundtransformationen f beschreiben. Allenfalls kann es bei der Änderung von Grund-Transformationsvorschriften $f_1^{-1}\dots f_A^{-1}$ notwendig werden, die Grund-Transformationsvorschriften $f_1 \dots f_A$ zur Verfügung zu halten. Ebenso kann es notwendig sein, im Falle der Verwendung der Spezial-Transformationsvorschriften, diese auch in nicht invertierter Form zur Verfügung zu haben. Der Datenzeiger i wird zunächst entgegen der Datenrichtung des Datenspeichers 311 verschoben, wobei die einzelnen Bytes jeweils entschlüsselt werden. Anschließend wird die Transformationseinheit 313 wiederum in den Initialzustand $Y'_0$ versetzt, wobei die einzelnen Bytes im Datenspeicher 311 vom ersten Byte bis zum letzten Byte in Datenrichtung entschlüsselt werden. Nach diesem zweiten Durchlauf befindet sich die Rohdatenfolge im Datenspeicher 311. Sofern die Rohdatenfolge mehrfach verschlüsselt wurde, wird auch der Entschlüsselungsvorgang entsprechend mehrfach wiederholt, um die Rohdatenfolge zu erhalten. (**Fig. 6**)

Bei der Entschlüsselung von nach dem **dritten Ausführungsbeispiel ("CHAINED-BLOCK")** der Erfindung verschlüsselten Daten beginnt die Entschlüsselung beim letzten Byte des jeweiligen Blocks (**Fig. 7, 9**). Die Entschlüsselungsmaschine 300 wird in den Initialzustand $Y'_0$ versetzt. Der Datenzeiger i wird zunächst entgegen der Datenrichtung des Datenspeichers 311 verschoben, wobei die einzelnen Bytes jeweils entschlüsselt werden. Anschließend wird die Entschlüsselungsmaschine 300 wiederum in den Initialzustand $Y'_0$ versetzt, ihr momentaner innerer Zustand $Y_X$ wird verworfen. Anschließend werden die einzelnen Bytes im Datenspeicher 311 vom ersten Byte bis zum letzten Byte in Datenrichtung entschlüsselt. Nach diesem zweiten Durchlauf befindet sich die Rohdatenfolge im Datenspeicher 311. Sofern die Rohdatenfolge mehrfach verschlüsselt wurde, wird auch der Entschlüsselungsvorgang entsprechend mehrfach wiederholt, um die Rohdatenfolge des jeweiligen Datenblocks zu erhalten.

Die Entschlüsselungsmaschine 300 hat den inneren Zustand $Y'_1$. Beim nächsten Durchlauf wird der Zustand $Y'_1$ als Initialzustand verwendet und das vorstehende Vorgehen erneut durchgeführt, wobei der innere Zustand, in dem die Entschlüsselungsmaschine 300 am Ende der Entschlüsselung des jeweiligen Datenblocks ist, als Initialzustand für die Entschlüsselung des jeweils nächsten Datenblocks verwendet wird.

Der jeweils entschlüsselte Datenblock D wird für eine weitere Verwendung zur Verfügung gehalten.

Der nächste verschlüsselte bzw. zu entschlüsselnde Datenblock wird in den Datenspeicher 311 geladen. Der bei der Entschlüsselung des vorherigen Blocks zwischengespeicherte innere Zustand ist der Initialzustand für den jetzt zu bearbeitenden Block. Dieser wird in die Entschlüsselungsmaschine 300 geladen und der für den ersten Block dargestellte Vorgang erneut durchgeführt. Dieser Vorgang kann für sämtliche zu entschlüsselnde Datenblöcke durchgeführt werden.

Wie bereits erwähnt, besteht bei der Verschlüsselung auch die Möglichkeit, den inneren Zustand, in dem sich die Verschlüsselungsmaschine 200 nach dem ersten Verschlüsselungsdurchlauf befindet, als inneren Zustand zwischenzuspeichern und vor der Verschlüsselung des jeweils nächsten Datenblocks D als Initialzustand zu verwenden. In diesem Fall braucht bei der Entschlüsselung der innere Zustand der Entschlüsselungsmaschine 300 nicht abgespeichert zu werden. Bei der Entschlüsselung eines zweiten oder späteren Datenblocks kann jeweils der innere Zustand als Initialzustand herangezogen werden, der an der Entschlüsselungsmaschine 300 am Ende der Entschlüsselung des ersten bzw. jeweils vorangehenden Datenblocks vorlag.

Der Zufallszahlengenerator 312 (**Fig. 13**) der Entschlüsselungsmaschine 300 entspricht ident dem Zufallszahlengenerator 212 (**Fig. 1**) der Verschlüsselungsmaschine 200. Die Teil-Zufallszahlengeneratoren 233 und 333 sind sich gleich. Die Auswahleinheiten 230 und 330 (**Fig. 10 und Fig. 14; Fig. 10a und Fig. 14a**) sind sich gleich.

Die Transformationseinheit 313 (**Fig. 13**) der Entschlüsselungsmaschine 300 entspricht der Transformationseinheit 213 der Verschlüsselungsmaschine 200 mit dem Unterschied, dass anstelle der Mittel 240 zur Bildung der Grund-Transformationsvorschrift f Mittel 340 zur Bildung ihrer jeweiligen Inversen $f^{-1}$ zur Verfügung stehen. Die Auswahleinheiten 220 und 320 (**Fig. 11 und Fig. 15; Fig. 11a und Fig. 15a**) sind sich gleich.

### Initialisierung der Entschlüsselungsmaschine

Die Initialisierung der Entschlüsselungsmaschine 300 erfolgt im wesentlichen wie die Initialisierung der Verschlüsselungsmaschine 200 (**Fig**. 12). Bei der Initialisierung wird eine Anzahl von Verschlüsselungsmaschinen 1a, 1b, ... gebildet, jeweils auf dieselbe Weise wie bei der Initialisierung der betreffenden Verschlüsselungsmaschine 200. Aus dem Initial-Zustand $Y_0$ der letzten gebildeten Verschlüsselungsmaschine wird anschließend der Initialzustand $Y'_0$ der Entschlüsselungsmaschine 300 gebildet. Die Zufallszahlengeneratoren 212 und 312 (**Fig. 1, 13**) sowie die Auswahleinheiten 220 und 320 (**Fig. 11, 15; Fig. 11a, 15a**) sind sich gleich. Der Unterschied der Zustände $Y_0$ und $Y'_0$ besteht zwischen den Verarbeitungseinheiten 240 und 340. Um eine Decodierung erzielen zu können, werden anstelle der Grund-Transformationsvorschrift $f_1...f_A$ jeweils ihre Inversen $f_1^{-1}...f_A^{-1}$ verwendet. Diese werden von der Verschlüsselungsmaschine 200 einer Inversionseinheit 319 übermittelt, diese bestimmt die jeweiligen Inversen $f_1^{-1}...f_A^{-1}$ sowie gegebenenfalls die Inverse $h^{-1}$ der Spezial-Transformationsvorschrift in ihrem Initialzustand und speichert diese in den betreffenden Speichern der Transformationseinheit 313 der Entschlüsselungsmaschine 300.

Ebenso werden gegebenenfalls die Grund-Transformationsvorschriften $f_1...f_A$ selbst sowie die Spezial-Transformationsvorschrift h und ihre Inverse $h^{-1}$ abgespeichert.

### Speicherung des inneren Zustands

Zum Abspeichern und neu Laden eines inneren Zustands $Y'_0$ steht bei der Entschlüsselungsmaschine 300 ein Zustandsspeicher 318, bei der Verschlüsselungsmaschine 200 ein Zustandsspeicher 218 zur Verfügung. Sofern für die einzelnen dargestellten Verschlüsselungsarten oder Entschlüsselungsarten Zwischespeicherungen vorgesehen sind, verfügen die Verschlüsselungsmaschine 200 und die Entschlüsselungsmaschine 300 über die hierfür erforderlichen Zustandsspeicher 218, 318.

### Patentansprüche

1.  Verfahren zur Verschlüsselung von Rohdaten, wobei die Rohdaten Bytes ($b_i$) umfassend eine vorgegebene Anzahl B von Bits aufweisen und die Bytes in einer vorgegebenen Reihenfolge vorliegen,

    - wobei eine Verschlüsselungsmaschine (200) umfassend eine Transformationseinheit (213) herangezogen wird, die abhängig von ihrem inneren Zustand eine Verschlüsselungsart in Form einer Transformationsvorschrift ($g_i$) zur Ersetzung des Rohdaten-Byte ($b_i$) durch ein verschlüsseltes Byte ($c_i$) bestimmt,
    - wobei die einzelnen Bytes ($b_i$) der Rohdaten jeweils separat und durch verschiedene eineindeutige Transformationsvorschriften ($g_i$) verschlüsselt werden und für jedes Byte ($b_i$) der Rohdaten von der Transformationseinheit (213) jeweils ein verschlüsseltes Byte ($c_i$) ermittelt wird,
    - wobei gegebenenfalls der jeweilige das Byte ($b_i$) der Rohdaten enthaltende Datenspeicher (211) mit dem verschlüsselten Byte ($c_i$) überschrieben wird, und
    - wobei die Transformationseinheit (213) vorab in einen von einem Passwort ($W_0$) abhängigen Initialzustand gebracht wird, und ein der Verschlüsselungsmaschine (200) zugehöriger deterministischer Zufallszahlengenerator (212) abhängig vom Passwort ($W_0$) ebenfalls in einen Initialzustand gebracht wird,

    **dadurch gekennzeichnet,**
    **dass** der innere Zustand der Transformationseinheit (213) sowie der innere Zustand des Zufallszahlengenerators (212) nach einer Anzahl von Verschlüsselungen von Bytes, nach der Verschlüsselung jedes Bytes, abhängig vom jeweils zu verschlüsselnden Rohdaten-Byte und/oder vom jeweiligen Endergebnis der Verschlüsselung geändert und aktualisiert wird und dieser neue innere Zustand der jeweils nächsten Verschlüsselung zugrunde gelegt wird, wobei der Zufallszahlengenerator (212) Zufallszahlen erstellt, die für die Auswahl der Transformationsvorschriften verwendet werden, und/oder der Zufallszahlengenerator (212) Zufallszahlen erstellt, die für die Aktualisierung der inneren Zustände des Zufallszahlengenerators (212) und der Transformationseinheit (213) herangezogen werden.

**2.** Verfahren nach Anspruch 1, wobei die Rohdaten in Blöcke, insbesondere in gleich lange, Blöcke (D) umfassend eine vorgegebene Anzahl von N Bytes, unterteilt werden und blockweise verschlüsselt werden, indem

a) die Transformationseinheit (213) und der Zufallszahlengenerator (212) in einen Initialzustand ($Y_0$) gesetzt werden,

b) die einzelnen sequentiell vorliegenden Bytes der Rohdaten innerhalb desselben Blocks hintereinander in der vorgegebenen Reihenfolge vom ersten bis zum letzten Byte von der Transformationseinheit (213) verschlüsselt werden,

c) nachdem alle Bytes des Blocks (D) verschlüsselt wurden, die Transformationseinheit (213) sowie der Zufallszahlengenerator (212) erneut in den Initialzustand ($Y_0$) gesetzt werden, und

d) die einzelnen sequentiell vorliegenden Bytes der im jeweiligen Block (D) vorliegenden Daten innerhalb desselben Blocks (D) entgegen der vorgegebenen Reihenfolge vom letzten bis zum ersten Byte von der Transformationseinheit (213) verschlüsselt werden.

**3.** Verfahren nach Anspruch 2, **dadurch gekennzeichnet, dass** die Verschlüsselungsschritte a) bis d) aus Anspruch 2 mehrfach für denselben Block (D) wiederholt werden, wobei gegebenenfalls bei der letzten Wiederholung ausschließlich die Schritte a) und b) durchgeführt werden,

insbesondere dass nach der Durchführung des Schritts b) oder eines der Schritte b) oder alternativ nach der Durchführung des Schritts d) oder eines der Schritte d) und noch vor der darauffolgenden Zurücksetzung in den jeweiligen Initialzustand ($Y_0$) der innere Zustand der Transformationseinheit (213) und des Zufallszahlengenerators (212) abgespeichert wird und als neuer Initialzustand für die Verschlüsselung des jeweils nächsten Blocks (D) herangezogen wird.

**4.** Verfahren nach einem der vorangehenden Ansprüche, **dadurch gekennzeichnet, dass** gemeinsam mit dem Setzen eines Initialzustands der Verschlüsselungsmaschine (200) eine Anzahl von Grund-Transformationsvorschriften (f) in Abhängigkeit vom Initialzustand vorgegeben wird, und

- abhängig vom inneren Zustand der Transformationseinheit (213) eine Anzahl T aus diesen Grund-Transformationsvorschriften in einer vorgegebenen Reihenfolge ausgewählt wird,

- wobei die Transformationsvorschrift (g) aus den einzelnen ausgewählten Grund-Transformationsvorschriften (f) zusammengesetzt wird, sodass bei der Anwendung der Transformationsvorschrift (g) auf das zu verschlüsselnde Byte die ausgewählten Grund-Transformationsvorschriften (f) in der jeweiligen Reihenfolge auf das zu verschlüsselnde Byte angewandt werden.

**5.** Verfahren nach Anspruch 4, **dadurch gekennzeichnet, dass** die Transformationsvorschrift (g) aus den einzelnen ausgewählten Grund-Transformationsvorschriften (f) sowie zusätzlich einer Spezial-Transformationsvorschrift (h) zusammengesetzt wird, sodass bei der Anwendung der Transformationsvorschrift (g) auf das zu verschlüsselnde Byte die ausgewählten Grund-Transformationsvorschriften (f) in der jeweiligen Reihenfolge auf das zu verschlüsselnde Byte angewandt werden und, insbesondere danach, noch zusätzlich die Spezial-Transformationsvorschrift (h) angewendet wird, und dass die Spezial-Transformationsvorschrift (h) bei jedem Verschlüsselungsschritt oder nach einer Anzahl von Verschlüsselungsschritten, abgeändert wird, insbesondere ausschließlich für eine vorgegebene Anzahl von Abänderungen, und dass insbesondere die Verwendung und/oder Abänderung der Spezial-Transformationsvorschrift (h) je nach Gegebenheit an- und abgeschaltet wird.

**6.** Verfahren, nach einem der vorangehenden Ansprüche zur Initialisierung einer Verschlüsselungsmaschine (200), **dadurch gekennzeichnet, dass** vor der Verschlüsselung der Rohdaten

a) als Passwort ($W_0$) eine Anzahl von sequentiell angeordneten Bytes vorgegeben wird,

b) gegebenenfalls dem Passwort ($W_0$) seine Länge in Bytes und/oder eine Checksumme beigefügt wird,

c) gegebenenfalls, sofern die Länge des Passwortes ($W_0$) eine vorgegebene Länge unterschreitet, das Passwort ($W_0$), insbesondere durch Wiederholung des Passwortes ($W_0$), auf die vorgegebene Länge verlängert wird und somit ein normalisiertes Passwort ($W_N$) erstellt wird,

d) ein vorgegebener Start-Zufallszahlengenerator (212-UR) mit vorgegebenen Werten initialisiert wird,

e) die vom Start-Zufallszahlengenerator (212-UR) erstellten Zufallszahlen mit den Bytes des, gegebenenfalls normalisierten Passwortes ($W_N$) verknüpft werden und eine erste Initialisierungs-Datenfolge erstellt wird,

f) diese Initialisierungsfolge wird verwendet um eine erste Verschlüsselungsmaschine (200a), umfassend eine erste Transformationseinheit (213a) und einen ersten Zufallszahlengenerator (212a) zu erstellen und zu initialisieren.

g) das erste Passwort ($W_N$) mit der ersten Verschlüsselungsmaschine (200a) verschlüsselt wird, und damit ein zweites Passwort ($W_a$) erhalten wird,

h) das erstellte zweite Passwort ($W_a$) mit von dem Zufallszahlengenerator (212a) der ersten Verschlüsselungsmaschine (200a) erstellten Zufallszahlen verknüpft wird und so eine zweite Initialisierungs-Datenfolge erstellt wird, und diese zur Erstellung und Initialisierung einer weiteren Verschlüsselungsmaschine (200b) verwendet wird,

i) wobei die folgenden Schritte j), k) und l) optional mehrfach, durchgeführt werden, nämlich

j) dass jeweils das für die Initialsierung der Verschlüsselungsmaschine (200b,...) verwendete Passwort ($W_a$,...) mit dieser Verschlüsselungsmaschine (200b,...) verschlüsselt wird und dadurch ein nächstes Passwort ($W_b$,...) erhalten wird,

k) dass dieses Passwort ($W_b$) mit Zufallszahlen des jeweils zuletzt erstellten Zufallszahlengenerators (212b, ...) verknüpft wird und so eine weitere Initialisierungs-Datenfolge erstellt wird, und

l) dass eine nachfolgende weitere Verschlüsselungsmaschine (200c,...) mit einer Transformationseinheit (213c,...) und einem Zufallszahlengenerator (212c,...) mit der jeweiligen zuletzt erstellten Initialisierungs-Datenfolge definiert, erstellt und initialisiert wird, und

m) dass die letzte derart erstellte Verschlüsselungsmaschine (200a, 200b, ...) als Verschlüsselungsmaschine (200) herangezogen wird.

7.  Verfahren zur Entschlüsselung von verschlüsselten Daten, wobei die verschlüsselten Daten Bytes umfassend eine vorgegebene Anzahl B von Bits aufweisen und die Bytes in einer vorgegebenen Reihenfolge vorliegen,

- wobei eine Entschlüsselungsmaschine (300) umfassend eine Transformationseinheit (313) herangezogen wird, die abhängig von ihrem inneren Zustand eine Entschlüsselungsart in Form einer Transformationsvorschrift ($g_i^{-1}$) bestimmt,

- wobei die einzelnen Bytes ($c_i$) der zu entschlüsselnden Daten jeweils separat mittels der Transformationsvorschrift ($g_i^{-1}$) entschlüsselt werden und für jedes Byte ($c_i$) der verschlüsselten Daten jeweils ein entschlüsseltes Byte ($b_i$) von der Entschlüsselungsmaschine (313) ermittelt wird,

- wobei gegebenenfalls der jeweilige das Byte ($c_i$) der verschlüsselten Daten enthaltende Datenspeicher (311) mit dem entschlüsselten Byte ($b_i$) überschrieben wird,

- wobei die Transformationseinheit (313) vorab in einen von einem Passwort ($W_o$) abhängigen Initialzustand gebracht wird und ein der Entschlüsselungsmaschine (300) zugehöriger deterministischer Zufallszahlengenerator (312) abhängig vom Passwort ($W_o$) in einen Initialzustand gebracht wird,

**dadurch gekennzeichnet,**

- **dass** der innere Zustand der Transformationseinheit (313) sowie der innere Zustand des Zufallszahlengenerators (312) nach einer Anzahl von Entschlüsselungen von Bytes, nach der Entschlüsselung jedes Bytes, abhängig vom jeweils verschlüsselten Byte und/oder vom jeweiligen entschlüsselten Byte geändert und aktualisiert wird und dieser neue innere Zustand der jeweils nächsten Entschlüsselung zugrunde gelegt wird, wobei

- der Zufallszahlengenerator (312) Zufallszahlen erstellt, die für die Auswahl der inversen Transformationsvorschriften verwendet werden, und/oder der Zufallszahlengenerator (312) Zufallszahlen erstellt, die für die Aktualisierung der inneren Zustände des Zufallszahlengenerators (312) und der Transformationseinheit (313) herangezogen werden.

8.  Verfahren nach Anspruch 7, **dadurch gekennzeichnet, dass** die zu entschlüsselnden Daten in, insbesondere gleich lange, Blöcke (D) umfassend eine vorgegebene Anzahl N von Bytes unterteilt werden, wobei die Anzahl der Bytes pro Block (D) der Anzahl der bei der Verschlüsselung verwendeten Bytes pro Block (D) entspricht, und dass die zu entschlüsselnden Daten blockweise entschlüsselt werden, indem

a) die Transformationseinheit (313) sowie der Zufallszahlengenerator (312) in einen Initialzustand ($Y'_o$) abhängig vom jeweiligen Passwort ($W_0$) gesetzt wird.

b) die einzelnen sequentiell vorliegenden Bytes der im jeweiligen Block (D) vorliegenden zu entschlüsselnden Daten innerhalb desselben Blocks (D) entgegen der vorgegebenen Reihenfolge vom letzten bis zum ersten Byte von der Transformationseinheit (313) entschlüsselt werden,

c) nachdem alle Bytes des Blocks (D) entschlüsselt wurden, die Transformationseinheit (313) sowie der Zufallszahlengenerator (312 erneut in den Initialzustand ($Y'_o$) gesetzt wird, und

d) die einzelnen sequentiell vorliegenden Bytes der so erhaltenen Daten innerhalb desselben Blocks (D) hintereinander in der vorgegebenen Reihenfolge vom ersten bis zum letzten Byte von der Transformationseinheit (313) entschlüsselt werden, und

- insbesondere dass die Entschlüsselungsschritte a) bis d) mehrfach für denselben Block (D) durchgeführt werden, wobei gegebenenfalls bei der letzten Durchführung ausschließlich die Schritte a) und b) ausgeführt werden.

9. Verfahren nach einem Anspruch 8, **dadurch gekennzeichnet, dass** nach der Durchführung des Schrittes b) oder eines der Schritte b) des Anspruchs 8 oder alternativ nach der Durchführung des Schrittes d) oder eines der Schritte d) des Anspruchs 8 und noch vor der darauffolgenden Zurücksetzung in den jeweiligen Initialzustand $(Y'_o)$ der innere Zustand der Verschlüsselungsmaschine (300), bestehend aus dem inneren Zustand der Transformationseinheit (313) und dem inneren Zustand des Zufallszahlengenerators (312) abgespeichert wird und als neuer Initialzustand für die Entschlüsselung des jeweils nächsten Blocks (D) herangezogen wird.

10. Verfahren nach Anspruch 7 bis 9, **dadurch gekennzeichnet, dass** gemeinsam mit dem Setzen eines Initialzustands $(Y'_o)$ der Entschlüsselungsmaschine (300) eine Anzahl T von Grund-Transformationsvorschriften $(f^{-1})$ in Abhängigkeit vom Initialzustand der Transformationseinheit (313) vorgegeben wird, und

- abhängig vom inneren Zustand eine Anzahl T aus diesen Grund-Transformationsvorschriften $(f^{-1})$ in einer vorgegebenen Reihenfolge ausgewählt wird, wobei die Transformationsvorschrift $(g^{-1})$ aus den einzelnen ausgewählten Grund-Transformationsvorschriften $(f^{-1})$ zusammengesetzt wird, sodass bei der Anwendung der Transformationsvorschrift $(g^{-1})$ auf das zu entschlüsselnde Byte die ausgewählten Grund-Transformationsvorschriften $(f^{-1})$ in der jeweils umgekehrten Reihenfolge auf das zu verschlüsselnde Byte angewandt werden, und
- dass insbesondere die Grund-Transformationsvorschriften $(f^{-1})$ der Transformationseinheit (313) den Inversen der Grund-Transformationsvorschriften (f) der Transformationseinheit (213) einer mit demselben Passwort $(W_0)$ initialisierten Verschlüsselungsmaschine (300) entsprechen, und
- dass insbesondere die Reihenfolge der Anwendung der einzelnen Grund-Transformationsvorschriften $(f^{-1})$ für die Bildung einer Transformationsvorschrift $(g^{-1})$ in der umgekehrten Reihenfolge wie bei der Verschlüsselung erfolgt.

11. Verfahren nach Anspruch 10, **dadurch gekennzeichnet, dass** die Transformationsvorschrift $(g^{-1})$ aus der Spezial-Transformationvorschrift $(h^{-1})$ und aus den einzelnen ausgewählten Grund-Transformationsvorschriften $(f^{-1})$ gebildet wird, sodass bei der Anwendung der Transformationsvorschrift $(g^{-1})$ auf das zu entschlüsselnde Byte, insbesondere zuerst, die Spezial-Transformationsvorschrift $(h^{-1})$ und, insbesondere anschließend, die ausgewählten Grund-Transformationsvorschriften $(f^{-1})$ in der jeweils umgekehrten Reihenfolge auf das zu entschlüsselnde Byte $(c_i)$ angewandt werden,

- dass die Spezial-Transformationsvorschrift $(h^{-1})$ bei jedem Entschlüsselungsschritt oder nach einer Anzahl von Entschlüsselungsschritten abgeändert wird, insbesondere ausschließlich für eine vorgegebene Anzahl von Änderungen, und
- dass insbesondere die Verwendung und/oder Abänderung der Spezial-Transformationsvorschrift $(h^{-1})$ je nach Gegebenheit an und ab geschaltet wird.

12. Verfahren nach einem der Ansprüche 7 bis 11, **dadurch gekennzeichnet, dass** zur Initialisierung einer Entschlüsselungsmaschine (300)

- eine Verschlüsselungsmaschine (200) nach Anspruch 6 erstellt wird,
und dass anschließend eine Entschlüsselungsmaschine (300) mit einem Zufallszahlengenerator (312) und einer Transformationseinheit (313) erstellt wird,
- der innere Zustand des Zufallszahlengenerators (212) der Verschlüsselungsmaschine (200) auf den inneren Zustand des Zufallszahlengenerators (312) der Entschlüsselungsmaschine (300) übertragen wird und
- der innere Zustand der Transformationseinheit (213) der Verschlüsselungsmaschine (200) auf den inneren Zustand der Transformationseinheit (313) der Entschlüsselungsmaschine (300) übertragen wird, die Inversen der Transformationsvorschriften (g) und/oder Grund-Transformationsvorschriften (f), sowie gegebenenfalls der Spezial-Transformationsvorschrift (h), ermittelt werden und als inverse Transformationsvorschriften $(g^{-1})$ und/oder inverse Grund-Transformationsvorschriften $(f^{-1})$, sowie gegebenenfalls der inversen Spezial-Transformationsvorschrift $(h^{-1})$, in die Transformationseinheit (313) der Entschlüsselungsmaschine (300) gespeichert werden,

und insbesondere im Falle einer Änderung der Transformationsvorschriften während der Kodierung der Daten auch die nicht invertierten Transformationsvorschriften (g) und/oder die nicht invertierte Grund-Transformationsvorschriften (f), sowie gegebenenfalls die nicht invertierte Spezial-Transformationsvorschrift (h), gespeichert werden.

**13.** Verschlüsselungsmaschine (200) zur Verschlüsselung von Rohdaten, umfassend

- einen Datenspeicher (211) zur Aufnahme von Rohdaten mit einer Anzahl N Bytes umfassend jeweils eine vorgegebene Anzahl von B Bits,
- dass der Zufallszahlengenerator (212) gegebenenfalls Zufallszahlen erstellt, die für die Auswahl der Transformationsvorschriften verwendet werden, und
- eine Transformationseinheit (213), die abhängig von einem, durch ein Passwort ($W_0$) vorgegebenen inneren Zustand (Y) gegebenenfalls mit Hilfe von durch den Zufallszahlengenerator (212) bereitgestellten Zufallszahlen eine, insbesondere für jedes Byte der Rohdaten andere, Verschlüsselungsart bestimmt und durchführt
- einen von einem Passwort ($W_0$) initialisierten deterministischen Zufallszahlengenerator (212), der bei der Erstellung der Zufallszahlen auf einen inneren Zustand (Y) zugreift,
- einen Zustandsspeicher zur Abspeicherung des inneren Zustands der Transformationseinheit (213) und des Zufallszahlengenerators (212),
- eine Steuereinheit zur Ansteuerung der Transformationseinheit (213) zur separaten Verschlüsselung der einzelnen Bytes der Rohdaten im Datenspeicher (211),
- eine Initialisierungseinheit zum Setzen des Zustandsspeichers auf einen von einem Passwort ($W_0$) abhängigen Initialzustand ($Y_0$),

**gekennzeichnet durch**
eine Aktualisierungseinheit, die den Zustandsspeicher der Transformationseinheit (213) nach einer Anzahl von durchgeführten Verschlüsselungen, nach der Verschlüsselung jedes einzelnen Bytes, abhängig vom jeweils verschlüsselten Byte ($b_i$) sowie vom jeweiligen Endergebnis der Verschlüsselung ($c_i$) und/oder abhängig von vom Zufallszahlengenerator erstellten Zufallszahlen (p) ändert und aktualisiert, und die
den Zustandsspeicher des Pseudo-Zufallszahlengenerators (212) nach einer Anzahl von durchgeführten Verschlüsselungen, nach der Verschlüsselung jedes einzelnen Bytes, abhängig vom jeweils zu verschlüsselnden Byte ($b_i$) sowie vom jeweiligen Endergebnis der Verschlüsselung ($c_i$) und abhängig von vom Zufallszahlengenerator vorher erstellten Zufallszahlen (p) ändert und aktualisiert.

**14.** Entschlüsselungsmaschine (300) zur Entschlüsselung von verschlüsselten Daten, umfassend

- einen Datenspeicher (311) zur Aufnahme von verschlüsselten Daten mit einer Anzahl N Bytes umfassend jeweils eine vorgegebene Anzahl von B Bits,
- eine Transformationseinheit (313), die abhängig von einem durch ein Passwort ($W_0$) vorgegebenen inneren Zustand (Y) eine Entschlüsselungsart bestimmt und durchführt,
- einen von einem Passwort ($W_0$) initialisierten deterministischen Zufallszahlengenerator (312), der bei der Erstellung von Zufallszahlen auf einen inneren Zustand (Y) zugreift,
- einen Zustandsspeicher zur Abspeicherung des inneren Zustandes der Transformationseinheit (313) und des Zufallszahlengenerators (312),
- eine Steuereinheit zur Ansteuerung der Transformationseinheit (313) zur separaten Entschlüsselung der einzelnen Bytes der Rohdaten im Datenspeicher (311),
- eine Initialisierungseinheit zum Setzen des Zustandsspeichers auf einen von einem Passwort ($W_0$) abhängigen Initialzustand,

**gekennzeichnet durch**
eine Aktualisierungseinheit, die den Zustandsspeicher der Transformationseinheit (313) nach einer Anzahl von durchgeführten Entschlüsselungen,
nach der Entschlüsselung jedes einzelnen Bytes, abhängig vom jeweils zu entschlüsselnden Byte ($c_i$) sowie vom jeweiligen Endergebnis der Entschlüsselung ($b_i$) und/oder abhängig von vom Zufallszahlengenerator erstellten Zufallszahlen (p) ändert und aktualisiert, und die
den Zustandsspeicher des Pseudo-Zufallszahlengenerators (212) nach einer Anzahl von durchgeführten Entschlüsselungen, insbesondere nach der Entschlüsselung jedes einzelnen Bytes, abhängig vom jeweils zu entschlüsselnden Byte ($c_i$) sowie vom jeweiligen Endergebnis der Entschlüsselung ($b_i$) und abhängig von vom Zufallszahlengenerator vorher erstellten Zufallszahlen (p) ändert und aktualisiert,

**15.** Datenträger, auf dem ein Computerprogramm zur Durchführung eines Verfahrens nach einem der Ansprüche 1 bis 14 abgespeichert ist und/oder auf dem auf dem verschlüsselte Daten, erzeugt nach einem der Ansprüche 1 bis 6 abgespeichert sind.

**Claims**

**1.** Method for the encryption of raw data, wherein the raw data bytes (bi) comprise a predetermined number B of bits, and the bytes are present in a predetermined order,

- wherein an encryption engine (200) comprising a transformation unit (213) is used to determine a type of encryption in the form of a transformation rule ($g_i$) for the replacement of the raw data byte ($b_i$) by an encrypted byte ($c_i$) as a function of its inner state,
- wherein the individual bytes ($b_i$) of the raw data are encrypted separately and by different transformation rules ($g_i$), and an encrypted byte ($c_i$) is determined respectively by the transformation unit (213) for each byte ($b_i$) of the raw data,
- wherein, optionally, the data memory (211) containing the respective byte ($b_i$) of the raw data is overwritten with the encrypted byte ($c_i$), and
- wherein the transformation unit (213) is previously brought into an initial state as a function of a password ($W_0$), while a deterministic random number generator (212) associated with an encryption engine (200) is also brought into an initial state as a function of the password ($W_0$),

**characterized in that**
the inner state of the transformation unit (213) as well as the inner state of the random number generator (212) after a number of encryptions of bytes, in particular after the encryption of each byte, is changed and updated as a function of the respective raw data byte to be encrypted and/or by the respective final result of the encryption, wherein this new inner state is the basis for the next encryption,
wherein, in particular, the random number generator (212) creates random numbers that are used to select the transformation rules, and/or the random number generator (212) creates random numbers that are used to update the inner states of the random number generator (212) and the transformation unit (213).

**2.** Method according to claim 1, wherein the raw data are divided in blocks, in particular equal length blocks (D) comprising a predetermined number N of bytes, and are encrypted block by block, wherein

a) the transformation unit (213) and the random number generator (212) are set in an initial state ($Y_0$),
b) the individual sequentially-arranged bytes of the raw data within the same block are successively encrypted in the predetermined order from the first to the last byte by the transformation unit (213),
c) after all the bytes of the block (D) have been encrypted, the transformation unit (213) and the random number generator (212) are again set to the initial state ($Y_0$), and
d) the individual sequentially-arranged bytes of the data within the same block (D) are encrypted in each block (D) counter to the predetermined order from the last to the first byte by the transformation unit (213).

**3.** Method according to claim 2,
**characterized in that**
the encryption steps a) to d) of claim 2 are repeated multiple times for the same block (D), wherein only the steps a) and b) are optionally carried out at the last iteration,.
In particular after carrying out step b) or one of the steps b) or, alternatively, after the execution of step d) or one of the steps d) and before the subsequent resetting in the respective initial state ($Y_0$), the inner state of the transformation unit (213) and the random number generator (212) are memorized and used as a new initial state for the encryption of the next block (D).

**4.** Method according to any one of the preceding claims,
**characterized in that**
together with the setting of an initial state of the encryption engine (200), a number of basic transformation rules (f) is determined as a function of the initial state, and

- a number T is selected from these basic transformation rules in a predetermined order as a function of the inner state of the transformation unit (213),

- wherein the transformation rule (g) of the individually selected basic transformation rules (f) is so composed that upon application of the transformation rule (g) to the bytes to be encrypted, the selected basic transformation rules (f) are applied to the bytes to be encrypted in the respective sequence.

5. Method according to claim 4,
**characterized in that**
the transformation rule (g) of the individually selected basic transformation rules (f) as well as additionally a special transformation rule (h) is so composed that upon application of the transformation rule (g) of the bytes to be encrypted, the selected basic transformation rules (f) are applied to the bytes to be encrypted in the respective order, and, in particular, the special transformation rule (h) is additionally applied, and
the special transformation rule (h) is modified at each encryption step, or after a number of encryption steps, in particular exclusively for a predetermined number of modifications, and
in particular the application and/or modification of the special transformation rule (h) is turned on and off according to the situation.

6. Method according to one of the preceding claims for initializing an encryption engine (200),
**characterized in that**
before the encryption of the raw data

a) a number of sequentially-arranged bytes is specified as a password ($W_0$),
b) if necessary, the password ($W_0$) has its length in bytes and/or a checksum added,
c) if necessary, if the length of the password ($W_0$) falls below a predetermined length, the password ($W_0$) is extended to the specified length, in particular by repeating the password ($W_0$), and in order to thus create a normalized password ($W_N$),
d) a predetermined start-random number generator (212-UR) is initialized with predetermined values,
e) the random numbers created by the start-random number generator (212-UR) are linked with the bytes of the optionally normalized password ($W_N$), and a first initialization data sequence is created,
f) this initialization sequence is used to produce and initialize a first encryption engine (200a) comprising a first transformation unit (213a) and a first random number generator (212).
g) the first password ($W_N$) is encrypted with the first encryption engine (200a), and thus a second password ($W_a$) is transmitted,
h) the created second password ($W_a$) is linked with random numbers generated by the random number generator (212a) of the first encryption engine (200a) and thus a second initialization data sequence is created, wherein this is used for the creation and initialization of a further encryption machine (200b).
i) wherein the steps j), k) and l) are optionally repeatedly carried out, namely
j) the password ($W_a$, ...) respectively used for the initialization of the encryption engine (200b, ...) is encrypted by this encryption engine (200b ...) and a following password ($W_b$, ...) is obtained,
k) this password ($W_b$) is linked with random numbers of the most recently created random number generator (212b, ...), and a further initialization data sequence is thus created, and
l) a subsequent further encryption engine (200c, ...) is defined, created and initialized with a transformation unit (213c ...) and a random number generator (212c, ...) with the respective most recently created initialization data sequence, and
m) the last so created encryption engine (200a, 200b, ...) is used as the encryption engine (200).

7. Method for decryption of encrypted data, wherein the encrypted data bytes comprise a predetermined number B of bits and the bytes are present in a predetermined order,

- wherein a decryption engine (300) comprising a transformation unit (313) is used to determine a type of encryption in the form of a transformation rule ($g_i^{-1}$) as a function of its inner state,
- wherein the individual bytes ($c_i$) of data to be decrypted are respectively separately decrypted by means of the transformation rule ($g_i^{-1}$), while a decrypted byte ($b_i$) is respectively determined by the decryption engine (313) for each byte ($c_i$) of the encrypted data,
- if necessary, each byte ($c_i$) of the data memory (311) containing the encrypted data is overwritten with the decrypted byte (bi),
- wherein the transformation unit (313) is brought in advance into an initial state depending on a password ($W_0$) and a deterministic random number generator (312) belonging to the decryption engine (300) is brought into an initial state depending on the password ($W_0$),

27

**characterized in that**

- the inner state of the transformation unit (313) as well as the inner state of the random number generator (312) is changed and updated after a number of decryptions of bytes, after decryption of each byte, dependent on the respectively encrypted byte and/or on the respective decrypted byte, and wherein this new inner state is the basis of the next decryption, wherein,
- the random number generator (312) creates random numbers, which are used for the selection of the inverse transformation rules, and/or
- the random number generator (312) creates random numbers that are used for updating the inner states of the random number generator (312) and the transformation unit (313).

8. Method according to claim 7,
**characterized in that**
the data to be decrypted are divided, in particular, in equal length blocks (D) comprising a predetermined number N of bytes, wherein the number of bytes per block (D) corresponds to the number of bytes per block (D) used in the encryption, and wherein the data to be decrypted are decrypted in blocks, wherein

a) the transformation unit (313) and the random number generator (312) are set to an initial state $(Y'_o)$ depending on the password $(W_0)$.
b) the individual sequentially-arranged bytes in each block (D) of the data to be decrypted within the same block (D) are decrypted counter to the predetermined order from the last to the first byte of the transformation unit (313),
c) after all the bytes of the block (D) have been decrypted, the transformation unit (313) and the random number generator (312) are set to the initial state $(Y'_o)$, and
d) the individual sequentially-arranged bytes of the thus obtained data within the same block (D) are successively decrypted in the order from the first to the last byte of the transformation unit (313), and

wherein in particular
the decryption steps a) to d) are carried out several times for the same block (D), wherein, if necessary, only the steps a) and b) are carried out during the last execution.

9. Method according to claims 8,
**characterized in that**
after the execution of step b) or one of the steps b) of claim 9 or, alternatively, after the execution of step d) or one of the steps d) of claim 9 and before the subsequent resetting to the initial state $(Y'_o)$, the inner state of the encryption engine (300) consisting of the inner state of the transformation unit (313) and the inner state of the random number generator (312) is memorized, and used as a new initial state for the decryption of the next block (D).

10. Method according to claim 7 to 9,
**characterized in that**
together with the setting of an initial state $(Y'_o)$ of the decryption engine (300), a number T of the basic transformation rules $(f^{-1})$ is predetermined as a function of the initial state of the transformation unit (313), and

- depending on the inner state of a number T of these basic transformation rules $(f^{-1})$, is selected in a predetermined order, wherein the transformation rule $(g^{-1})$ is composed from the individually selected basic transformation rules $(f^{-1})$, so that upon application of the transformation rule $(g^{-1})$ to the byte to be decrypted, the selected basic transformation rules $(f^{-1})$ are respectively applied to the byte to be encrypted in the reverse order, and
- in particular, the basic transformation rules $(f^{-1})$ of the transformation unit (313) correspond to the inverse of the basic transformation rules (f) of the transformation unit (213) of an encryption engine (300) initialized with the same password $(W_0)$, and
- in particular, the order of application of the individual basic transformation rules $(f^{-1})$ for the formation of a transformation rule $(g^{-1})$ is effected in the reverse order to that used in the encryption.

11. Method according to claim 10,
**characterized in that**
the transformation rule $(g^{-1})$ is formed from the special transformation rule $(h^{-1})$ and from the individually selected basic transformation rules $(f^{-1})$, so that upon applying the transformation rule $(g^{-1})$ to the byte to be decrypted, in particular first, the special transformation rule $(h^{-1})$ and, in particular subsequently, the selected basic transformation rules $(f^{-1})$ are applied to the byte $(c_i)$ to be decrypted in the respective reverse order,

- the special transformation rule ($h^{-1}$) is modified at each decryption step, or after a number of decryption steps, and in particular only for a predetermined number of changes, and
- in particular, the use and/or modification of the special-transformation procedure ($h^{-1}$) is turned on and off as a function of the situation.

**12.** Method according to any one of claims 7 to 11,
**characterized in that**
for the initialization of a decryption engine (300)

- an encryption engine (200) is created according to claim 7, and subsequently a decryption engine (300) is created with a random number generator (312) and a transformation unit (313),
- the inner state of the random number generator (212) is transmitted to the encryption engine (200), and the inner state of the random number generator (312) is transmitted to the decryption engine (300), and
- the inner state of the transformation unit (213) is transmitted to the encryption engine (200), and the inner state of the transformation unit (313) is transmitted to the decryption engine (300), wherein the inverse of the transformation rules (g) and/or the basic transformation rules (f), as well as, optionally, the special-transformation rule (h), are determined as inverse transformation rules ($g^{-1}$) and/or inverse basic transformation rules ($f^{-1}$), as well as, optionally, the inverse special transformation rule ($h^{-1}$), and memorized in the transformation unit (313) of the decryption engine (300),
- and, in particular, in the event of a change of the transformation rules during the coding of the data, the non-inverted transformation rules (g) and/or the non-inverted basic transformation rules (f), and, optionally, the non-inverted special transformation rule (h), are memorized.

**13.** Encryption engine (200) to encrypt raw data, comprising

- a data memory (211) to receive raw data with a number N bytes each comprising a predetermined number of B bits,
- wherein the random number generator (212) optionally creates random numbers that are used for selecting the transformation rules, and
- a transformation unit (213), which is dependent on an inner state (Y) given by a password ($W_0$) optionally determines nd carries out another encryption type with the help of random numbers generated by the random number generator (212), in particular for each byte of the raw data,
- a deterministic random number generator (212) initialized by a password ($W_0$) which accesses an inner state (Y) upon the generation of the random numbers,
- a state memory to memorize the inner state of the transformation unit (213) and the random number generator (212),
- a control unit to control the transformation unit (213) for the separate encryption of the individual bytes of the raw data in the data memory (211),
- an initialization unit to set the state memory to an initial state ($Y_0$) dependent on a password ($W_0$)

**characterized in that**
an updating unit which changes and updates the state memory of the transformation unit (213) after a number of encryptions are carried out, after the encryption of each individual byte, depending on the respective byte ($b_i$) to be encrypted as well as the respective end result of the encryption ($c_i$) and/or as a function of the random numbers (p) created by the random number generator, and
optionally, the state memory of the pseudo-random number generator (212) is changed and updated after a number of encryptions have been carried out, after the encryption of each individual byte, depending on the respective byte ($b_i$) to be encrypted, as well as the respective end result of the encryption ($c_i$) and as a function of the random numbers (p) previously created by the random number generator.

**14.** Decryption engine (300) for decryption of encrypted data, comprising

- a data memory (311) to receive encrypted data with a number N bytes each comprising a predetermined number of B bits,
- a transformation unit (313), which determines and performs a type of decryption as a function of an inner state (Y) given by a password ($W_0$),
- a deterministic random number generator (312) initialized by a password ($W_0$) that accesses an inner state (Y) upon generating random numbers,

- a state memory to memorize the inner state of the transformation unit (313) and the random number generator (312),
- a control unit to control the transformation unit (313) for the separate decryption of the individual bytes of the raw data in the data memory (311),
- an initialization unit to set the state memory to an initial state as a function of a password (W0),

**characterized in that**

an updating unit which changes and updates the state memory of the transformation unit (313) after a number of decryptions are carried out, after the decryption of each individual byte, as a function of the respective byte ($c_i$) to be decrypted, as well as the respective end result of the decryption ($b_i$) and/or as a function of the random numbers (p) generated by the random number generator, and

optionally, changes and updates the state memory of the pseudo-random number generator (212) after a number of decryptions have been carried out, after the decryption of each individual byte, as a function of the respective byte ($c_i$) to be decrypted, as well as the respective end result of the decryption ($b_i$) and as a function of the random numbers (p) previously generated by the random number generator,

15. Data medium on which a computer program is memorized for implementing a method according to any one of the claims 1 to 14 and/or on which encrypted data generated according to one of the claims 1 to 6 are memorized.

**Revendications**

1. Procédé de codage de données brutes, dans lequel les données brutes présentent des octets ($b_i$) comprenant un nombre prédéfini B de bits et les octets sont présents dans un ordre prédéfini,

   - dans lequel une machine de codage (200) comprenant une unité de transformation (213) est extraite, qui détermine, en fonction de son état interne, un type de codage sous la forme d'une prescription de transformation ($g_i$) pour le remplacement des octets de données brutes ($b_i$) par un octet codé ($c_i$),
   - dans lequel les octets individuels ($b_i$) des données brutes sont codés chacun séparément et par le biais de prescriptions de transformation ($g_i$) différentes et uniques et, pour chaque octet ($b_i$) des données brutes, l'unité de transformation (213) détermine respectivement un octet codé ($c_i$),
   - dans lequel, le cas échéant, la mémoire de données (211) contenant respectivement l'octet ($b_i$) des données brutes est écrasée par l'octet codé ($c_i$) et
   - dans lequel l'unité de transformation (213) est amenée au préalable dans un état initial dépendant d'un mot de passe ($W_0$) et un générateur de nombres aléatoires (212) déterministe appartenant à la machine de codage (200) est amené dans un état initial également, dépendant du mot de passe ($W_0$),

   **caractérisé en ce que**

   l'état interne de l'unité de transformation (213) ainsi que l'état interne du générateur de nombres aléatoires (212) sont modifiés et actualisés après un certain nombre de codages d'octets, après le codage de chaque octet, en fonction respectivement de l'octet des données brutes à coder et/ou du résultat final respectif du codage et le codage respectif ultérieur sert de base à ce nouvel état interne,

   dans lequel le générateur de nombres aléatoires (212) génère des nombres aléatoires, qui sont utilisés pour la sélection des prescriptions de transformation et/ou le générateur de nombres aléatoires (212) génère des nombres aléatoires, qui sont extraits pour la mise à jour des états internes du générateur de nombres aléatoires (212) et de l'unité de transformation (213).

2. Procédé selon la revendication 1, dans lequel les données brutes sont réparties en blocs, notamment en blocs de même longueur (D) comprenant un nombre prédéfini de N octets et sont codées par blocs, en ce que

   a) l'unité de transformation (213) et le générateur de nombres aléatoires (212) sont placés dans un état initial ($Y_0$),
   b) les octets individuels présents de manière séquentielle des données brutes au sein du même bloc sont codés les uns après les autres dans l'ordre prédéfini, du premier au dernier octet par l'unité de transformation (213),
   c) une fois que tous les octets du bloc (D) ont été codés, l'unité de transformation (213) ainsi que le générateur de nombres aléatoires (212) sont de nouveau réglés dans l'état initial ($Y_0$) et
   d) les octets individuels présents de manière séquentielle des données se trouvant dans le bloc respectif (D) au sein du même bloc (D) sont codés à l'inverse de l'ordre prédéfini, du dernier au premier octet par l'unité de transformation (213).

3. Procédé selon la revendication 2, **caractérisé en ce que** les étapes de codage a) à d) de la revendication 2 sont répétées plusieurs fois pour le même bloc (D), dans lequel, le cas échéant, lors de la dernière répétition, seules les étapes a) et b) sont réalisées,
en particulier **en ce que**, après la réalisation de l'étape b) ou d'une des étapes b) ou en variante après la réalisation de l'étape d) ou d'une des étapes d) et encore avant la réinitialisation qui la suit dans l'état initial respectif $(Y_0)$, l'état interne de l'unité de transformation (213) et du générateur de nombres aléatoires (212) est mémorisé et extrait en guise de nouvel état initial pour le codage du bloc suivant respectif (D).

4. Procédé selon une des revendications précédentes, **caractérisé en ce que**, conjointement avec le réglage d'un état initial de la machine de codage (200), un certain nombre de prescription de transformation de base (f) est prédéfini en fonction de l'état initial et

- en fonction de l'état interne de l'unité de transformation (213), un certain nombre T de ces prescriptions de transformation de base est choisi dans un ordre prédéfini,
- dans lequel la prescription de transformation (g) parmi les prescriptions de transformation de base (f) sélectionnées individuelles est composée, de sorte que, lors de l'utilisation de la prescription de transformation (g) sur l'octet à coder, les prescriptions de transformation de base (f) sélectionnées soient appliquées dans l'ordre respectif sur l'octet à coder.

5. Procédé selon la revendication 4, **caractérisé en ce que** la prescription de transformation (g) parmi les prescriptions de transformation de base (f) individuelles sélectionnées, ainsi qu'en plus, une prescription de transformation spéciale (h) sont composées, de sorte que, lors de l'utilisation de la prescription de transformation (g) sur l'octet à code, les prescriptions de transformation de base (f) sélectionnées soient appliquées dans l'ordre respectif sur l'octet à coder et, en particulier par la suite, encore en outre la prescription de transformation spéciale (h) est utilisée et **en ce que** la prescription de transformation spéciale (h) est modifiée, lors de chaque étape de codage ou après un certain nombre d'étapes de codage, en particulier exclusivement pour un nombre prédéfini de modifications et **en ce que**, en particulier, l'utilisation et/ou la modification de la prescription de transformation spéciale (h) est activée et désactivée selon la situation.

6. Procédé selon une des revendications précédentes pour l'initialisation d'une machine de codage (200), **caractérisé en ce que**, avant le codage des données brutes,

a) un certain nombre d'octets disposés de façon séquentielle est prédéfini en guise de mot de passe $(W_0)$,
b) le cas échéant sa longueur en octets et/ou une somme de contrôle est ajoutée au mot de passe $(W_0)$,
c) le cas échéant, dans la mesure où la longueur du mot de passe $(W_0)$ est inférieure à une longueur prédéfinie, le mot de passe $(W_0)$ est prolongé, en particulier par la répétition du mot de passe $(W_0)$, pour atteindre la longueur prédéfinie et, ainsi un mot de passe $(W_N)$ normalisé est généré,
d) un générateur de nombres aléatoires de départ prédéfini (212-UR) est initialisé avec des valeurs prédéfinies,
e) les nombres aléatoires générés par le générateur de nombres aléatoires de départ (212-UR) sont liés aux octets du mot de passe le cas échéant normalisé $(W_N)$ et une première suite de données d'initialisation est générée,
f) cette suite d'initialisation est utilisée afin de générer et d'initialiser une première machine de codage (200a), comprenant une première unité de transformation (213a) et un premier générateur de nombres aléatoires (212a).
g) le premier mot de passe $(W_N)$ est codé avec la première machine de codage (200a) et ainsi un deuxième mot de passe $(W_a)$ est obtenu,
h) le deuxième mot de passe généré $(W_a)$ est lié aux nombres aléatoires gérés par le générateur de nombres aléatoires (212a) de la première machine de codage (200a) et ainsi une deuxième suite de données d'initialisation est générée et celle-ci est utilisée pour la génération et l'initialisation d'une autre machine de codage (200b),
i) dans lequel les étapes suivantes j), k) et l) sont réalisées plusieurs fois, à savoir
j) **en ce que** le mot de passe $(W_a,...)$ respectivement utilisé pour l'initialisation de la machine de codage (200b, ...) est codé avec cette machine de codage (200b,...) et ainsi un mot de passe suivant $(W_b,...)$ est obtenu,
k) **en ce que** ce mot de passe $(W_b)$ est lié aux nombres aléatoires du générateur de nombres aléatoires généré respectivement en dernier (212b,...) et ainsi une autre suite de données d'initialisation est générée et
l) **en ce qu'**une autre machine de codage suivante (200c,...) avec une unité de transformation (213c,...) et un générateur de nombres aléatoires (212c,...) est définie, générée et initialisée avec la suite de données d'initialisation respective générée en dernier et
m) **en ce que** la dernière machine de codage (200a, 200b,...) générée de cette manière est extraite comme machine de codage (200).

7. Procédé de décodage de données codées, dans lequel les données codées présentent des octets comprenant un nombre prédéfini B de bits et les octets sont présents dans un ordre prédéfini,

   - dans lequel une machine de décodage (300) comprenant une unité de transformation (313) est extraite, qui détermine, en fonction de son état interne, un type de décodage sous la forme d'une prescription de transformation ($g_i^{-1}$),
   - dans lequel les octets respectifs ($c_i$) des données à coder sont décodés respectivement séparément au moyen de la prescription de transformation ($g_i^{-1}$) et, pour chaque octet ($c_i$) des données codées, respectivement un octet décodé ($b_i$) est déterminé par la machine de décodage (313),
   - dans lequel, le cas échéant, la mémoire de données (311) contenant respectivement l'octet ($c_i$) des données codées est écrasée par l'octet décodé ($b_i$),
   - dans lequel l'unité de transformation (313) est amenée au préalable dans un état initial dépendant d'un mot de passe ($W_o$) et un générateur de nombres aléatoires (312) déterministe appartenant à la machine de décodage (300) est amené dans un état initial dépendant du mot de passe ($W_o$),

   **caractérisée en ce que**

   - l'état interne de l'unité de transformation (313) ainsi que l'état interne du générateur de nombres aléatoires (312) sont modifiés et actualisés après un certain nombre de décodages d'octets, après le décodage de chaque octet, en fonction respectivement de l'octet codé et/ou de l'octet décodé respectif et le décodage respectif ultérieur sert de base à ce nouvel état interne, dans lequel

   le générateur de nombres aléatoires (312) génère des nombres aléatoires, qui sont utilisés pour la sélection des prescriptions de transformation inverses et/ou
   le générateur de nombres aléatoires (312) génère des nombres aléatoires, qui sont extraits pour l'actualisation des états internes du générateur de nombres aléatoires (312) et de l'unité de transformation (313).

8. Procédé selon la revendication 7, **caractérisé en ce que** les données à décoder sont réparties en blocs (D), en particulier de longueur identique, comprenant un nombre prédéfini N d'octets, dans lequel le nombre d'octets par bloc (D) correspond au nombre d'octets utilisés lors du codage par bloc (D) et **en ce que** les données à décoder sont décodées par blocs, **en ce que**

   a) l'unité de transformation (313) ainsi que le générateur de nombres aléatoires (312) sont réglés dans un état initial ($Y'_o$) en fonction du mot de passe respectif ($W_o$).
   b) les octets individuels présents de manière séquentielle des données à décoder se trouvant dans le bloc respectif (D) au sein du même bloc (D) sont codés à l'inverse de l'ordre prédéfini, du dernier au premier octet par l'unité de transformation (313),
   c) une fois que tous les octets du bloc (D) ont été décodés, l'unité de transformation (313) ainsi que le générateur de nombres aléatoires (312) sont de nouveau réglés dans l'état initial ($Y'_o$) et
   d) les octets individuels présents de manière séquentielle des données ainsi obtenues au sein du même bloc (D) sont codés les uns après les autres dans l'ordre prédéfini, du premier au dernier octet par l'unité de transformation (313) et

   - en particulier **en ce que** les étapes de décodage a) à d) sont réalisées plusieurs fois pour le même bloc (D), dans lequel, le cas échéant, lors de la dernière réalisation, seules les étapes a) et b) sont réalisées,

9. Procédé selon une revendication 8, **caractérisé en ce que**, après la réalisation de l'étape b) ou d'une des étapes b) de la revendication 8 ou en variante après la réalisation de l'étape d) ou d'une des étapes d) de la revendication 8 et encore avant la réinitialisation qui la suit dans l'état initial respectif ($Y'_o$), l'état interne de la machine de codage (300), constituée de l'état interne de l'unité de transformation (313) et de l'état interne du générateur de nombres aléatoires (312) est mémorisé et extrait en guise de nouvel état initial pour le décodage du bloc suivant respectif (D).

10. Procédé selon les revendications 7 à 9, **caractérisé en ce que**, conjointement avec le réglage d'un état initial ($Y'_o$) de la machine de décodage (300), un certain nombre T de prescriptions de transformation de base ($f^{-1}$) est prédéfini en fonction de l'état initial de l'unité de transformation (313) et

   - en fonction de l'état interne, un nombre T parmi ces prescriptions de transformation de base ($f^{-1}$) est sélectionné dans un ordre prédéfini, dans lequel la prescription de transformation ($g^{-1}$) parmi les prescriptions de transfor-

mation de base (f$^{-1}$) individuelles sélectionnées est composée, de sorte que, lors de l'utilisation de la prescription de transformation (g$^{-1}$) sur l'octet à décoder, les prescriptions de transformation de base (f$^{-1}$) sélectionnées soient appliquées dans l'ordre respectivement inversé sur l'octet à coder et

- **en ce que**, en particulier, les prescriptions de transformation de base (f$^{-1}$) de l'unité de transformation (313) correspondent aux inverses des prescriptions de transformation de base (f) de l'unité de transformation (213) d'une machine de codage (300) initialisée avec le même mot de passe (W$_0$) et

- **en ce que**, en particulier, l'ordre d'utilisation des prescriptions de transformation de base (f$^{-1}$) individuelles pour la formation d'une prescription de transformation (g$^{-1}$) s'effectue dans l'ordre inversé par rapport au codage.

11. Procédé selon la revendication 10, **caractérisé en ce que** la prescription de transformation (g$^{-1}$) est formée à partir de la prescription de transformation spéciale (h$^{-1}$) et à partir des prescriptions de transformation de base (f$^{-1}$) individuelles sélectionnées, de sorte que, lors de l'utilisation de la prescription de transformation (g$^{-1}$) sur l'octet à décoder, en particulier, d'abord, la prescription de transformation spéciale (h$^{-1}$) et, en particulier par la suite, les prescriptions de transformation de base (f$^{-1}$) sélectionnées soient appliquées dans l'ordre respectivement inversé sur l'octet à décoder (c$_i$),

- **en ce que** la prescription de transformation spéciale (h$^{-1}$) est modifiée pour chaque étape de décodage ou après un certain nombre d'étapes de décodage, en particulier exclusivement pour un nombre prédéfini de modifications et

- **en ce que**, en particulier, l'utilisation et/ou la modification de la prescription de transformation spéciale (h$^{-1}$) est activée et désactivée selon la situation.

12. Procédé selon une des revendications 7 à 11, **caractérisé en ce que**, pour l'initialisation d'une machine de décodage (300),

- une machine de codage (200) selon la revendication 6 est générée et **en ce que**, par la suite, une machine de décodage (300) comprenant un générateur de nombres aléatoires (312) et une unité de transformation (313) est générée,

- l'état interne du générateur de nombres aléatoires (212) de la machine de codage (200) est transféré sur l'état interne du générateur de nombres aléatoires (312) de la machine de décodage (300) et

- l'état interne de l'unité de transformation (213) de la machine de codage (200) est transféré sur l'état interne de l'unité de transformation (313) de la machine de décodage (300), les inverses des prescriptions de transformation (g) et/ou des prescriptions de transformation de base (f), ainsi que le cas échéant de la prescription de transformation spéciale (h), sont déterminées et mémorisées sous forme de prescriptions de transformation inverses (g$^{-1}$) et/ou prescriptions de transformation de base inverses (f$^{-1}$), ainsi le cas échéant que la prescription de transformation spéciale inverse (h$^{-1}$), dans l'unité de transformation (313) de la machine de décodage (300),

et, en particulier, en cas de modification des prescriptions de transformation pendant le codage des données, les prescriptions de transformation non inversées (g) et/ou les prescriptions de transformation de base non inversées (f), ainsi que le cas échéant la prescription de transformation spéciale non inversée (h) sont également mémorisées.

13. Machine de codage (200) pour le codage de données brutes, comprenant

- une mémoire de données (211) pour la réception de données brutes avec un certain nombre N d'octets comprenant respectivement un nombre prédéfini de B bits,

- dans lequel le générateur de nombres aléatoires (212) génère le cas échéant des nombres aléatoires, qui sont utilisés pour la sélection des prescriptions de transformation et

- une unité de transformation (213), qui détermine et effectue, en fonction d'un état interne (Y) prédéfini par un mot de passe (W$_0$), le cas échéant à l'aide de nombres aléatoires fournis par le générateur de nombres aléatoires (212), un type de codage, notamment un autre pour chaque octet des données brutes

- un générateur de nombres aléatoires (212) déterministe initialisé par un mot de passe (W$_0$), qui accède, lors de la génération des nombres aléatoires, à un état interne (Y),

- une mémoire d'états pour la mémorisation de l'état interne de l'unité de transformation (213) et du générateur de nombres aléatoires (212),

- une unité de commande pour la commande de l'unité de transformation (213) pour le codage séparé des octets individuels des données brutes dans la mémoire de données (211),

- une unité d'initialisation pour le réglage de la mémoire d'états sur un état initial (Y$_0$) dépendant d'un mot de passe (W$_0$),

**caractérisée par**

une unité d'actualisation, qui modifie et actualise la mémoire d'états de l'unité de transformation (213) après un certain nombre de codages réalisés, après le codage de chaque octet individuel, en fonction de l'octet codé respectif ($b_i$) ainsi que du résultat final respectif du codage ($c_i$) et/ou en fonction des nombres aléatoires (p) générés par le générateur de nombres aléatoires et qui modifie et actualise la mémoire d'états du générateur de nombres pseudo-aléatoires (212) après un certain nombre de codages réalisés, après le codage de chaque octet individuel, en fonction de l'octet à coder respectif ($b_i$) ainsi que du résultat final respectif du codage ($c_i$) et en fonction des nombres aléatoires (p) précédemment générés par le générateur de nombres aléatoires.

**14.** Machine de décodage (300) pour le décodage de données codées, comprenant

- une mémoire de données (311) pour la réception de données codées avec un certain nombre N d'octets comprenant respectivement un nombre prédéfini de B bits,
- une unité de transformation (313) qui détermine et effectue, en fonction d'un état interne (Y) prédéfini par un mot de passe ($W_0$), un type de décodage,
- un générateur de nombres aléatoires (312) déterministe initialisé par un mot de passe ($W_0$), qui accède, lors de la génération de nombres aléatoires, à un état interne (Y),
- une mémoire d'états pour la mémorisation de l'état interne de l'unité de transformation (313) et du générateur de nombres aléatoires (312),
- une unité de commande pour la commande de l'unité de transformation (313) pour le décodage séparé des octets individuels des données brutes dans la mémoire de données (311),
- une unité d'initialisation pour le réglage de la mémoire d'états sur un état initial dépendant d'un mot de passe ($W_0$),

**caractérisée par**

une unité d'actualisation, qui modifie et actualise la mémoire d'états de l'unité de transformation (313) après un certain nombre de décodages réalisés, après le décodage de chaque octet individuel, en fonction de l'octet à décoder respectif ($c_i$) ainsi que du résultat final respectif du décodage ($b_i$) et/ou en fonction des nombres aléatoires (p) générés par le générateur de nombres aléatoires et qui modifie et actualise la mémoire d'états du générateur de nombres pseudo-aléatoires (212) après un certain nombre de décodages réalisés, après le décodage de chaque octet individuel, en fonction de l'octet à décoder respectif ($c_i$) ainsi que du résultat final respectif du décodage ($b_i$) et en fonction des nombres aléatoires (p) précédemment générés par le générateur de nombres aléatoires,

**15.** Support de données, sur lequel un programme informatique destiné à la réalisation d'un procédé selon une des revendications 1 à 14 est mémorisé et/ou sur lequel des données codées, produites selon une des revendications 1 à 6, sont mémorisées.

**Fig. 1**

**Fig. 2**

ENCODE

DECODE

$Y_0$ ●————————▶

$Y'_0$ ●————————▶

211

311

**Fig. 3**

ENCODE

DECODE

d = 1 . . n

$S_{20-A}$:   $Y := Y_0$

i = 1 . . N

$S_{21 \ldots} S_{29}$

$S_{20-M}$:   $Y := Y_0$

i = N . . 1

$S_{21 \ldots} S_{29}$

$S_{20-Z}$:   $\{c_1 \ldots c_N\} \rightarrow$

BLOCK

d = 1 . . n

$S_{30-A}$:   $Y := Y'_0$

i = N . . 1

$S_{31 \ldots} S_{39}$

$S_{30-M}$:   $Y := Y'_0$

i = 1 . . N

$S_{31 \ldots} S_{39}$

$S_{30-Z}$:   $\{b_1 \ldots b_N\} \rightarrow$

**Fig. 4**

ENCODE

DECODE

$Y_0$

$Y_0$

$Y'_0$

$Y'_0$

211

311

**Fig. 5**

ENCODE

DECODE

$Y_0$

$Y_0$

$Y_0$

$Y_0$

$Y_0$

$Y'_0$

$Y'_0$

$Y'_0$

$Y'_0$

211

311

**Fig. 6**

ENCODE

DECODE

d = 1 . . n

d = 1 . . n

$S_{20\text{-}B}$:   $Y := Y_{d-1}$

$S_{30\text{-}B}$:   $Y' := Y'_{d-1}$

i = 1 . . N

i = N . . 1

$S_{21 \ldots} S_{29}$

$S_{31 \ldots} S_{39}$

$S_{20\text{-}C}$:   $Y_d := Y$
$Y := Y_{d-1}$

$S_{30\text{-}C}$:   $Y' := Y'_{d-1}$

i = N . . 1

i = 1 . . N

$S_{21 \ldots} S_{29}$

$S_{31 \ldots} S_{39}$

CHAINED-BLOCK

$S_{20\text{-}Y}$:   $\{c_1 \ldots c_N\} \rightarrow$

$S_{30\text{-}Y}$:   $Y'_d := Y'$
$\{b_1 \ldots b_N\} \rightarrow$

**Fig. 7**

Fig. 8

Fig. 9

**Fig. 10**

Fig. 10a

**Fig. 11**

$\mathcal{A}$ ... steht für eine beliebige Verknüpfung
der beiden Inputwerte zu einem Resultat
mit einem Wert zwischen 1 und A

**Fig. 11a**

**Fig. 12**

**Fig. 13**

**Fig. 16**

**Fig. 14**

Fig. 14a

**Fig. 15**

Fig. 15a

$\mathcal{A}$... steht für eine beliebige Verknüpfung der beiden Inputwerte zu einem Resultat mit einem Wert zwischen 1 und A

**IN DER BESCHREIBUNG AUFGEFÜHRTE DOKUMENTE**

**In der Beschreibung aufgeführte Patentdokumente**

- US 6259789 B
- US 2006039558 A